(19) Europäisches Patentamt
European Patent Office
Office européen des brevets

(11) **EP 4 398 381 A1**

(12) **EUROPEAN PATENT APPLICATION**
published in accordance with Art. 153(4) EPC

(43) Date of publication:
**10.07.2024 Bulletin 2024/28**

(21) Application number: **21939985.4**

(22) Date of filing: **23.08.2021**

(51) International Patent Classification (IPC):
**H01M 10/48** (2006.01)     **H02J 3/38** (2006.01)

(52) Cooperative Patent Classification (CPC):
**H01M 10/48; H02J 3/38**

(86) International application number:
**PCT/JP2021/030711**

(87) International publication number:
**WO 2023/026313 (02.03.2023 Gazette 2023/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **HITACHI, LTD.**
**Chiyoda-ku**
**Tokyo 100-8280 (JP)**

(72) Inventors:
• **MITSUYAMA, Satoshi**
**Tokyo**
**1008280 (JP)**

• **HIRAOKA, Koichi**
**Tokyo**
**1008280 (JP)**
• **OGURI, Hirohisa**
**Tokyo**
**1008280 (JP)**
• **MAMUN Md Abdullah-Al**
**Tokyo**
**1008280 (JP)**

(74) Representative: **MERH-IP Matias Erny Reichl Hoffmann**
**Patentanwälte PartG mbB**
**Paul-Heyse-Strasse 29**
**80336 München (DE)**

(54) **BATTERY CHARGE/DISCHARGE MANAGEMENT SYSTEM AND METHOD**

(57)     A battery charge/discharge management system includes: a battery package in which a battery is housed; and a charge/discharge control device that controls charge/discharge of the battery package, in which the battery package stores and holds a storage amount of power stored in the battery for each power type, the charge/discharge control device notifies the battery package of the power amount of each power type charged and discharged from the battery package, and the battery package updates the storage amount of the power stored in the battery for each power type stored and held based on the power amount of each power type charged and discharged from the battery package notified from the charge/discharge control device.

FIG. 1

EP 4 398 381 A1

**Description**

Technical Field

The present invention relates to a battery charge/discharge management system and method, and is suitably applied to a battery charge/discharge management system that manages charge/discharge of a battery.

Background Art

In recent years, an electric vehicle (EV) has been also used as a power supply facility through a technology such as vehicle to grid (V2G) or vehicle to home (V2H) by taking advantage of their ability to store a large amount of electricity. Here, V2G is a technique for charging and discharging power stored in a storage battery of an electric vehicle by connecting the power to a power system, and V2H is a technique for utilizing the power stored in the electric vehicle for home use.

In the future, as the storage density of the battery is improved and the size and weight of the battery are further reduced, it is considered that the same battery will be used for various purposes such as removing the battery of an electric vehicle and diverting the battery to other uses. In addition, it is considered that batteries are used in various different charging and discharging places and applications such that a battery that has been used as a stationary type is charged near a power generation facility and then removed from the charging facility and used in other places, for example.

On the other hand, in recent years, trade of renewable energy (hereinafter, this is referred to as green power) such as solar power, wind power, and biomass power has been conducted in order to realize zero emission, which means zero $CO_2$ emission, and it has been necessary to manage the power stored in the battery separately for green power and other power (hereinafter, this is referred to as non-green power).

In this regard, PTL 1 discloses a system for managing household solar power generation, a storage amount and a charge/discharge amount of a storage battery system separately for green power and non-green power, quantitatively grasping a consumption amount of green power, and totalizing and certifying green power. PTL 1 also discloses performing charging and discharging according to an instruction from a server in response to a demand response.

Citation List

Patent Literature

PTL 1: JP 2021-61733 A

Summary of Invention

Technical Problem

Meanwhile, in PTL 1, it is assumed that a storage battery system installed in each dwelling is fixedly installed in the dwelling and is always connected to the same solar power generation system or power network. For this reason, the system of PTL 1 does not consider a case where the storage battery system is moved to another dwelling and reused, and in such a case, there is a problem that the storage amount of the green power and the non-green power stored in the storage battery system cannot be continuously managed.

The present invention has been made in view of the above points, and an object of the present invention is to propose a battery charge/discharge management system and a battery charge/discharge management method capable of continuously performing management of a storage amount for each power type stored in a battery and transaction for each power type of the power stored in the battery even when the installation location of the battery is changed.

Solution to Problem

In order to solve such a problem, the present invention provides a battery charge/discharge management system that manages charge/discharge of a battery, the system including: a battery package in which the battery is housed and which stores and holds a storage amount of power stored in the battery for each power type; and a charge/discharge control device that controls charge/discharge of the battery package and notifies the battery package of an amount of power for each power type charged and discharged from the battery package, wherein the battery package updates a storage amount of the power stored in the battery for each power type stored and held, based on the power amount for each power type charged and discharged from the battery package notified from the charge/discharge control device.

Further, the present invention provides a battery charge/discharge management method executed in a battery charge/discharge management system that manages charge/discharge of a battery, the battery charge/discharge management system including a battery package in which the battery is housed, and a charge/discharge control device that controls charge/discharge of the battery package, the method including: a first step of storing and holding, by the battery package, a storage amount of power stored in the battery for each power type; a second step of notifying the battery package of the amount of power charged and discharged from the battery package for each power type by the charge/discharge control device; and a third step of updating, by the battery package, a storage amount of the power stored in the battery for each power type stored and held based on the power amount of each power type charged and discharged from the battery package notified from the charge/discharge control device.

Advantageous Effects of Invention

According to the present invention, even when the installation location of the battery is changed, it is possible to continuously perform management of the storage amount for each power type stored in the battery and transaction for each power type of the power stored in the battery,

Brief Description of Drawings

[FIG. 1] FIG. 1 is a block diagram showing an overall configuration of a battery charge/discharge management system according to first and second embodiments.
[FIG. 2] FIG. 2 is a perspective view showing an external configuration example of a battery package.
[FIG. 3] FIG. 3 is a perspective view showing an internal configuration example of a battery package.
[FIG. 4] FIG. 4 is a block diagram showing a configuration example of an electrical system of a battery package.
[FIG. 5] FIG. 5 is a block diagram showing a configuration example of a package controller.
[FIG. 6] FIG. 6 is a table showing a configuration example of a use history table held by a package controller.
[FIG. 7] FIG. 7 is a table showing a configuration example of a power-type-based storage amount table held by a package controller.
[FIG. 8] FIG. 8 is a table showing a configuration example of an operation history table.
[FIG. 9] FIG. 9 is a flowchart showing a processing procedure of initial setting processing.
[FIG. 10] FIG. 10 is a diagram showing a configuration example of a battery/BMS information registration screen.
[FIG. 11] FIG. 11 is a block diagram showing a configuration example of a charge/discharge control device.
[FIG. 12] FIG. 12 is a table showing a configuration example of a charge plan table.
[FIG. 13] FIG. 13 is a table showing a configuration example of a discharge plan table.
[FIG. 14] FIG. 14 is a table showing a configuration example of a power-type-based charge/discharge history table.
[FIG. 15] FIG. 15 is a flowchart showing a processing procedure of charge/discharge determination processing.
[FIG. 16A] FIG. 16A is a flowchart showing a processing procedure of a power-type-based charge/discharge amount calculation process.
[FIG. 16B] FIG. 16B is a flowchart showing a processing procedure of a power-type-based charge/discharge amount calculation process.
[FIG. 16C] FIG. 16C is a flowchart showing a processing procedure of a power-type-based charge/discharge amount calculation process.
[FIG. 16D] FIG. 16D is a flowchart showing a processing procedure of a power-type-based charge/discharge amount calculation process.
[FIG. 17] FIG. 17 is a block diagram showing a configuration of a charge/discharge control server.
[FIG. 18] FIG. 18 is a table showing a configuration example of a battery/BMS information table.
[FIG. 19] FIG. 19 is a table showing a configuration example of a use history table held by a charge/discharge control server.
[FIG. 20] FIG. 20 is a table showing a configuration example of a power-type-based storage amount table held by a charge/discharge control server.
[FIG. 21] FIG. 21 is a table showing a configuration example of an operation history table.
[FIG. 22] FIG. 22 is a table showing a configuration example of a contract basic information table.
[FIG. 23] FIG. 23 is a table showing a configuration example of a charge/discharge priority information table.
[FIG. 24] FIG. 24 is a table showing a configuration example of a charge/discharge prediction table.
[FIG. 25A] FIG. 25A is a table showing a configuration example of a transaction summary table.
[FIG. 25B] FIG. 25B is a table showing a configuration example of a transaction detail table.

[FIG. 26] FIG. 26 is a diagram showing a configuration example of a contract information input/confirmation screen.

[FIG. 27] FIG. 27 is a diagram showing a configuration example of a charge/discharge priority information input/confirmation screen.

[FIG. 28] FIG. 28 is a flowchart showing a processing procedure of the charge/discharge plan processing.

[FIG. 29] FIG. 29 is a flowchart showing a processing procedure of power supply request reception processing.

[FIG. 30] FIG. 30 is a flowchart showing a processing procedure of deemed power transaction processing.

[FIG. 31] FIG. 31 is a block diagram showing a configuration example of a package controller of a battery package according to a second embodiment.

[FIG. 32] FIG. 32 is a flowchart showing a processing procedure of contract number authentication processing.

[FIG. 33] FIG. 33 is a block diagram showing an overall configuration of a battery charge/discharge management system according to a third embodiment.

[FIG. 34] FIG. 34 is a block diagram showing a configuration of a charge/discharge control server according to a third embodiment.

[FIG. 35] FIG. 35 is a flowchart showing a processing procedure of charge/discharge control processing according to the third embodiment.

[FIG. 36A] FIG. 36A is a flowchart showing a processing procedure of a power-type-based charge/discharge amount calculation process according to the third embodiment.

[FIG. 36B] FIG. 36B is a flowchart showing a processing procedure of a power-type-based charge/discharge amount calculation process according to the third embodiment.

[FIG. 37] FIG. 37 is a block diagram showing an overall configuration of a battery charge/discharge management system according to a fourth embodiment.

[FIG. 38] FIG. 38 is a block diagram showing a configuration of a charge/discharge control server according to a fourth embodiment.

[FIG. 39] FIG. 39 is a block diagram showing a configuration of a power transaction server.

Description of Embodiments

Hereinafter, an embodiment of the present invention will be described in detail with reference to the drawings.

(1) First embodiment

(1-1) Configuration of battery charge/discharge management system according to present embodiment

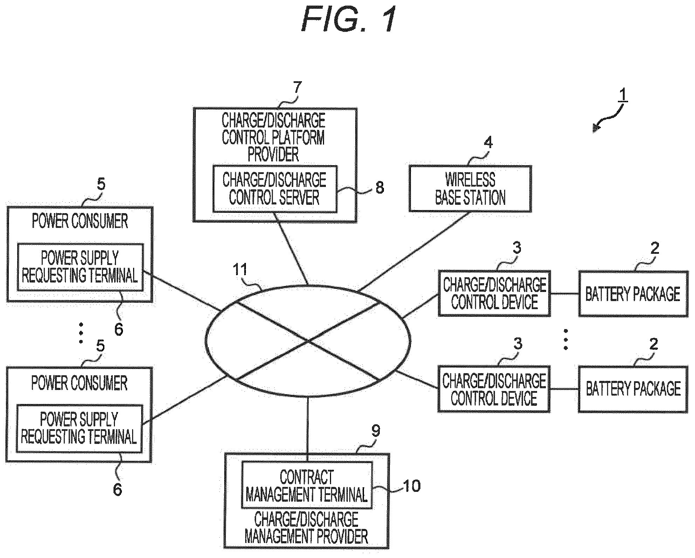

In FIG. 1, reference numeral 1 indicates a battery charge/discharge management system according to the present embodiment as a whole. The battery charge/discharge management system 1 is configured by connecting a plurality of charge/discharge control devices 3 to each of which one or more battery packages 2 are connected, a wireless base station 4, a power supply requesting terminal 6 provided on each power consumer 5 side, a charge/discharge control server 8 installed by a charge/discharge control platform provider 7, and a contract management terminal 10 installed by a charge/discharge management provider 9 to each other via a network 11 such as, for example, the Internet.

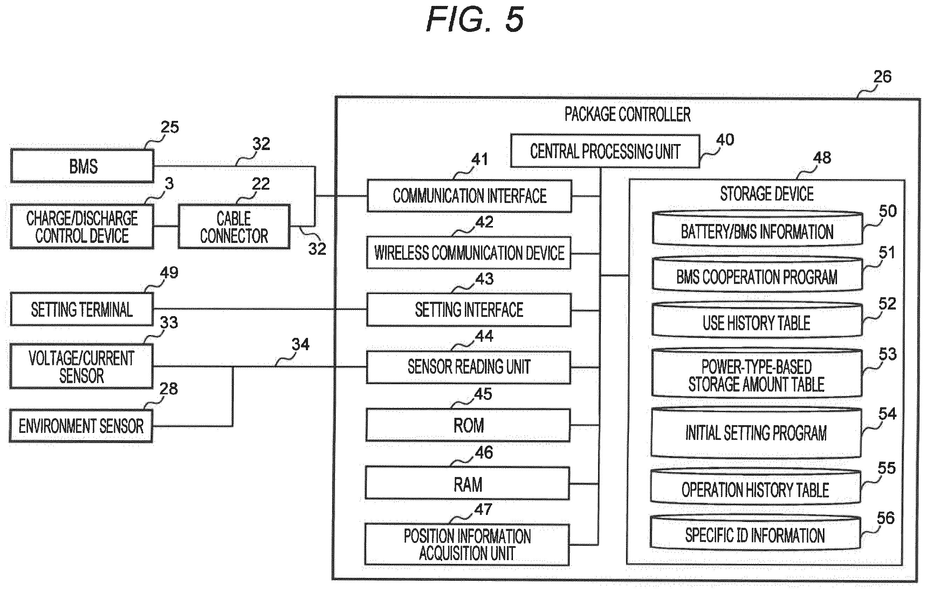

The battery package 2 is a package in which a battery is housed. The battery package 2 includes a wireless communication device 42 (FIG. 5) corresponding to, for example, a wireless communication line for a mobile communication system therein, and can exchange data and commands with the charge/discharge control server 8 by wireless communication via the wireless base station 4.

In addition, the charge/discharge control device 3 is connected to one or more power distribution networks and power sources (not shown), and controls charging and discharging (hereinafter, this is simply referred to as charge/discharge of the battery package 2) of the battery housed in the battery package 2 according to a charge plan or a discharge plan given from the charge/discharge control server 8 as described later. In addition to normal non-green power (non-renewable energy) generated by thermal power generation or the like supplied via a power distribution network, green power (renewable energy) generated by utilizing natural energy such as solar power, wind power, biomass, hydro power, or geothermal power is also supplied to the charge/discharge control device 3. Then, the charge/discharge control device 3 manages the charge/discharge history for each of the green power and the non-green power in the connected battery package 2, and notifies the charge/discharge control server 8 of the content as appropriate.

Each of the power supply requesting terminals 6 is configured of a general-purpose communication terminal device such as a personal computer device, a tablet, or a smartphone. When the power consumer 5 wants to receive the supply of the power stored in each battery package 2, the power consumer 5 operates the power supply requesting terminal 6 to specify a time zone and an amount of power desired to be supplied. Then, the information input at this time is transmitted to the contract management terminal 10 of the charge/discharge management provider 9 via the network 11 together with the power supply request.

The charge/discharge management provider 9 is a company that concludes contracts with a plurality of power consumers 5 and manages the amount of power supplied to these power consumers 5 per month and the charge for the amount of power, and the contract management terminal 10 is a general-purpose communication terminal device (for example, a server device) used to perform such management.

The charge/discharge control server 8 is a server device having a function of integrally managing charge/discharge of the battery package 2 connected to each charge/discharge control device 3. The charge/discharge control server 8 periodically prepares a charge/discharge plan for each battery package 2, and transmits the prepared charge/discharge plan to the corresponding charge/discharge control device 3. In response to the power supply request from the power supply requesting terminal 6 of the power consumer 5, the charge/discharge control server 8 gives an instruction to required one or more charge/discharge control devices 3 so that the requested amount of green power or non-green power is discharged from the battery package 2.

(1-2) Configuration and processing of the battery package

(1-2-1) Configuration of the battery package

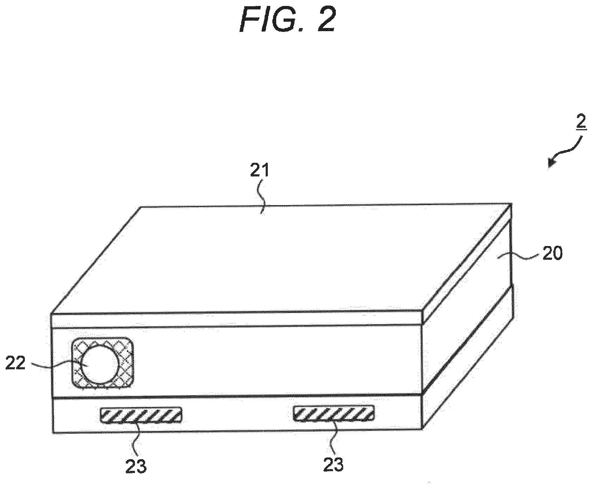

FIG. 2 shows an external configuration example of the battery package 2. The battery package 2 includes a housing 20 whose upper surface side is opened, and a lid body 21 detachably attached to the upper surface side of the housing 20.

A cable connector 22 for connecting a power cable (not shown) for transmitting and receiving power to and from the charge/discharge control device 3 and a communication cable (not shown) for performing communication with the charge/discharge control device 3 is provided on the front surface side of the housing 20.

A pair of forklift holes 23 into which forks of the forklift are inserted is formed on the front surface side of the housing 20. The reason why such a forklift hole 23 is provided is that since the battery package 2 having a large capacity exceeding 10 kWh has a weight exceeding 100 kg, transportation and installation can be easily performed using the forklift.

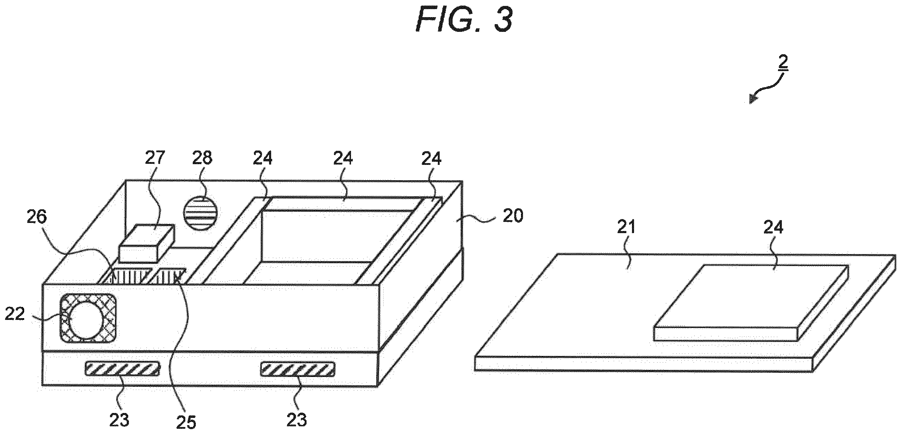

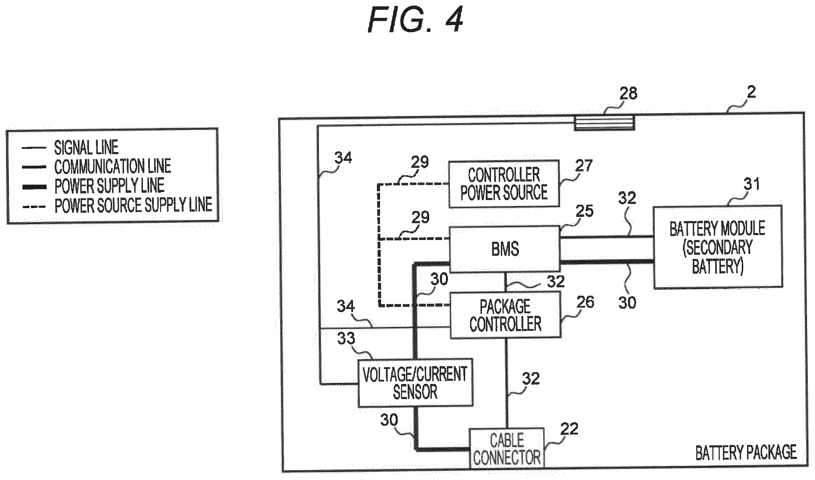

FIG. 3 shows an internal configuration of the battery package 2, and shows a state in which the lid body 21 is removed from the housing 20. A battery installation spacer 24 is a spacer that forms a space for fixing a battery module 31 (FIG. 4) configured of one or more battery cells inside the housing 20. The battery installation spacer 24 is also attached to the back side of the lid body 21 so that the battery module 31 housed in the housing 20 can be pushed from above.

Spacers having various shapes are prepared as the battery installation spacer 24. By using the battery installation spacer .24 corresponding to the shape of the battery module 31 housed in the housing 20, battery modules of various shapes can be used as the battery module 31 housed in the housing 20. As a result, for example, it is possible to construct the battery package 2 by reusing in-vehicle batteries for electric vehicles of various shapes that are not currently standardized as the battery module 31. The battery module 31 housed in the housing 20 may be a single battery module including one or more battery cells, or a plurality of battery modules packaged in one pack.

In addition, the battery installation spacer 24 has a structure that can be easily attached to and detached from the inside of the housing 20 and the back surface side of the lid body 21. As a means for facilitating attachment and detachment of the battery installation spacer 24 to and from the inside of the housing 20 or the back surface side of the lid body 21, the battery installation spacer 24 may be fixed to the inside of the housing 20 or the back surface of the lid body 21 with a bolt or a nut, or a fitting portion of the battery installation spacer 24 may be fitted to a fitting portion provided in the inside of the housing 20 or the back surface of the lid body 21.

The housing 20 also houses a battery management system (hereinafter, this is referred to as a battery management system (BMS)) 25 that monitors a charge/discharge state of the battery module 31, a package controller 26 that communicates with the charge/discharge control device 3 and controls charge/discharge from the battery module 31, a controller power source 27 that supplies power source to the BMS 25 and the package controller 26, an environment sensor 28 that measures an environment around the battery package 2 such as temperature, humidity, and atmospheric pressure, and the like.

FIG. 4 shows a configuration example of an electrical system in the battery package 2. Power source for driving is supplied from the controller power source 27 to the BMS 25 and the package controller 26 via a power source line 29. A power supply line 30 is a conductive wire through which power charged to the battery module 31 and power discharged from the battery module 31 flow, and is connected from the cable connector 22 to the battery module 31 via the BMS 25.

A communication line 32 is a conductive wire through which a signal for controlling charge/discharge of the battery module 31 and various signals for monitoring voltage, current, temperature, humidity, and the like described later flow. Transmission and reception of signals between the battery module 31 and the BMS 25 and transmission and reception of signals between the BMS 25 and the package controller 26 are performed via the communication line 32. In order for the package controller 26 to transmit and receive signals to and from the charge/discharge control device 3, the package controller 26 and the cable connector 22 are also connected via the communication line 32. As the communication line 32, for example, a controller area network (CAN) can be applied.

A voltage/current sensor 33 for measuring a voltage of the battery module 31 and a current during charging and discharging is disposed in the middle of the power supply line 30. The voltage/current sensor 33 is connected to the package controller 26 via a signal line 34, and a voltage value and a current value measured by the voltage/current sensor 33 are supplied to the package controller 26 via the signal line 34 and read by the package controller 26.

Similarly, the environment sensor 28 and the package controller 26 are also connected via the signal line 34, and the temperature, humidity, atmospheric pressure, and the like around the battery package 2 measured by the environment sensor 28 are supplied to the package controller 26 via the signal line 34 and read by the package controller 26.

FIG. 5 shows a specific configuration of the package controller 26. As is clear from FIG. 5, the package controller 26 includes a central processing unit 40, a communication interface 41, a wireless communication device 42, a setting interface 43, a sensor reading unit 44, a read only memory (ROM) 45, a random access memory (RAM) 46, a position information acquisition unit 47, and a storage device 48.

The central processing unit 40 is a processor for controlling the entire processing of the package controller 26, and is configured of a microcomputer and the like. Furthermore, the communication interface 41 is an interface for communicating with the outside, and is connected to the BMS 25 via the communication line 32 described above with reference to FIG. 4, and is connected to the charge/discharge control device 3 via the cable connector 22.

The wireless communication device 42 is used when performing wireless communication with the charge/discharge control server 8 via the wireless base station 4 (FIG. 1), and for example, a wireless communication device for a mobile communication system such as 4G (4th Generation) or 5G (5th Generation) is applied.

The setting interface 43 is an interface for connecting a setting terminal 49 when the battery module 31 (FIG. 4) is newly incorporated in the battery package 2 or when the battery module 31 incorporated in the battery package 2 is replaced. Various settings specified by the operator using the setting terminal 49 are supplied to the central processing unit 40 via the setting interface 43.

The sensor reading unit 44 is a functional unit implemented by the central processing unit 40 executing a program stored in the ROM 45 to be described later, and has a function of reading measurement values from the voltage/current sensor 33 and the environment sensor 28. The sensor reading unit 44 is connected to the voltage/current sensor 33 and the environment sensor 28 via the signal line 34.

The ROM 45 is a read-only semiconductor memory, and stores various programs executed by the central processing unit 40. The RAM 46 is a readable/writable semiconductor memory, and is used to temporarily hold a part of a program and data when the central processing unit 40 executes processing. The program stored in the ROM 45 is read into the RAM 46 when necessary, and the central processing unit 40 executes the program whereby various processes of the package controller 26 as a whole are executed.

The position information acquisition unit 47 is a sensor and a reading device for acquiring position information such as latitude, longitude, and altitude of a place where the battery package 2 is installed, and is configured of, for example, a global positioning system (GPS) device.

The storage device 48 is configured of a nonvolatile storage device such as a flash memory, and is used to hold various data for a long period of time. Battery/BMS information 50, a BMS cooperation program 51, a use history table 52, a power-type-based storage amount table 53, an initial setting program 54, and an operation history table 55, which will be described later, are also stored and held in the storage device 48. The storage device 48 also stores battery package specific ID information 56 indicating an identifier (hereinafter, this is referred to as a battery package specific ID) unique to the battery package 2 assigned to the battery package 2.

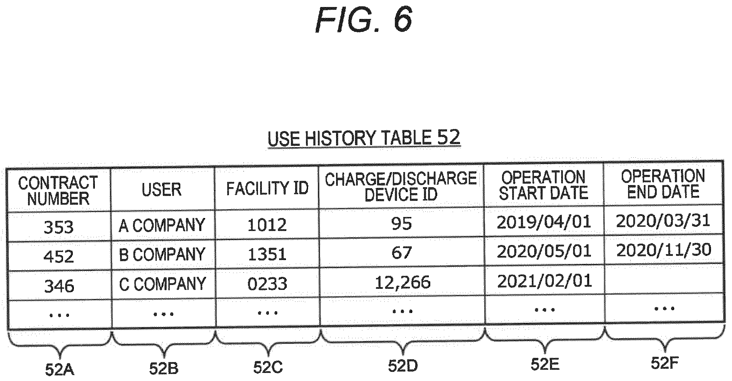

FIG. 6 shows a configuration example of the use history table 52 stored in storage device 48. The use history table 52 is a table used to store and hold information (hereinafter, this is referred to as use history information) related to a use history of the battery package 2 such as who used the battery package 2 (the battery package 2 holding the use history table 52) from when to when. As shown in FIG. 6, the use history table 52 includes a contract number field 52A, a user field 52B, a facility ID field 52C, a charge/discharge device ID field 52D, an operation start date field 52E, and an operation end date field 52F. In the use history table 52 shown in FIG. 6, one record (row) corresponds to one piece of use history information.

Then, a number (contract number) unique to a contract given when a user who uses the battery package 2 enters into the contract with the charge/discharge management provider 9 is stored in the contract number field 52A, and a name of the user who uses the battery package 2 is stored in the user field 52B.

In addition, the facility ID field 52C stores an identifier (facility ID) unique to the facility assigned to the facility of the use place or storage place of the battery package 2, and the charge/discharge device ID field 52D stores an identifier (charge/discharge device ID) of the charge/discharge control device 3 permitted to be connected when the battery package 2 is used.

Further, a date when the operation of the battery package 2 is started is stored in the operation start date field 52E, and a date when the operation is ended is stored in the operation end date field 52F. When the battery package 2 is still in operation, the operation end date field 52F is blank.

Therefore, in the case of the example of FIG. 6, for example, the contract with the contract number "353" is a contract for the user "A company" to connect to the charge/discharge control device 3 to which the charge/discharge device ID "95" is given in the facility to which the facility ID "1012" is given and use the battery package 2, and it is indicated that the operation of the battery package 2 based on the contract is started at "2019/04/01" and ended at "2020/03/31".

Each piece of use history information registered in the use history table 52 is registered in the contract management terminal 10 (FIG. 1) when the user concludes a use contract for the battery package 2 with the charge/discharge management provider 9 (FIG. 1), then transferred from the contract management terminal 10 to the battery package 2 via the charge/discharge control server 8 (FIG. 1), and registered and held in the use history table 52 stored in the storage device 48 (FIG. 5) of the package controller 26 (FIG. 5) in the battery package 2.

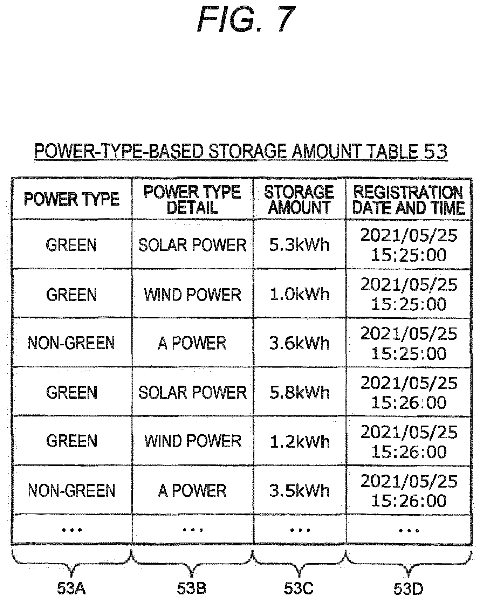

FIG. 7 shows a configuration example of the power-type-based storage amount table 53. The power-type-based storage amount table 53 is a table in which the power amount of each power type detail of the power stored in the subject battery package 2 (the battery package 2 holding the power-type-based storage amount table 53) is sequentially recorded at constant intervals (for example, 1 minute intervals). As shown in FIG. 7, the power-type-based storage amount table 53 includes a power type field 53A, a power type detail field 53B, a storage amount field 53C, and a registration date and time field 53D. In the power-type-based storage amount table 53 shown in FIG. 7, one record (row) corresponds to the power of one power type stored in the subject battery package 2 recorded at a certain time for the power type.

Information indicating whether the power used for charging the battery package 2 is green power is stored in the power type field 53A. FIG. 7 shows an example in which information of "green" in a case where the power used for charging the battery package 2 is green power, and information of "non-green" in other cases is stored in the power type field 53A.

In the power type detail field 53B, information indicating a category of corresponding power obtained by further subdividing the power type is stored. For example, information such as "solar power" in a case where the corresponding power is generated by solar power generation, and "wind power" in a case where the corresponding power is generated by wind power generation is stored in the power type detail field. When the corresponding power is not green power, the company name of the power company that is the supply source of the power is stored in the power type detail field 53B.

Further, the registration date and time field 53D stores the date and time when the information of the record is registered in the power-type-based storage amount table 53, and the storage amount field 53C stores the storage amount of the corresponding power stored in the battery package 2 at the registration date and time.

Therefore, in the case of the example of FIG. 7, for example, at the time of "2021/05/25 15:25:00", it is indicated that the amount of power of "green" power of the power type detail of "solar power" stored in the corresponding battery package 2 was "5.3 kWh", the amount of power of "green" power of the power type detail of "wind power" was "1.0 kWh", and the amount of power of "non-green" power received from the power company of "A power" was "3.6 kWh".

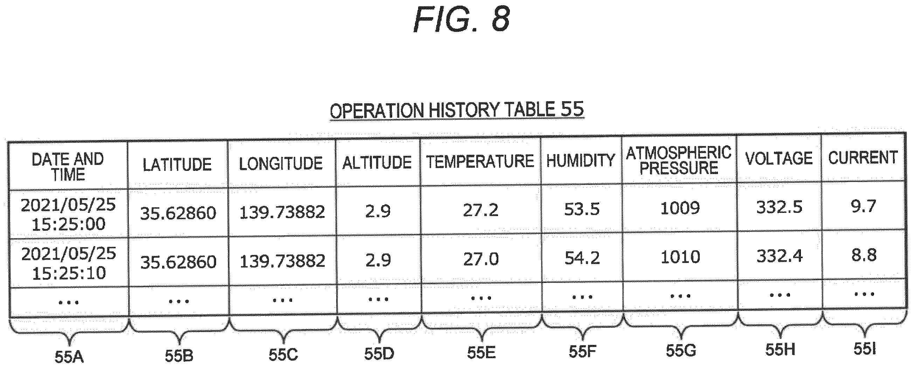

FIG. 8 shows a configuration example of the operation history table 55. The operation history table 55 is a table used to store and hold an operation state of the battery package 2 at that time, periodically stored as operation history information by the central processing unit 40 (FIG. 5), and includes a date and time field 55A, a latitude field 55B, a longitude field 55C, an altitude field 55D, a temperature field 55E, a humidity field 55F, an atmospheric pressure field 55G, a voltage field 55H, and a current field 55I as shown in FIG. 8. In the operation history table 55, one record (row) corresponds to the operation history information of the battery package 2 at a certain point of time.

Then, the date and time when the corresponding operation history information is registered in the operation history table 55 is stored in the date and time field 55A, and the latitude field 55B, the longitude field 55C, and the altitude field 55D each store corresponding information among the latitude, the longitude, and the altitude of the place where the battery package 2 is installed at that time, acquired by the position information acquisition unit 47 (FIG. 5) .

In the temperature field 55E, the humidity field 55F, and the atmospheric pressure field 55G, corresponding information among the temperature, the humidity, and the atmospheric pressure around the battery package 2 at that time, acquired by the environment sensor 28 (FIG. 5) and read by the sensor reading unit 44 (FIG. 5), is stored.

Further, in the voltage field 55H and the current field 55I, the charge/discharge voltage and the charge/discharge current of the battery package 2 at that time are stored. As the charge/discharge voltage and the charge/discharge current, average values in the period elapsed from a previous record to a present record, which are calculated based on the voltage value and the current value acquired by the voltage/current sensor 33 (FIG. 5) and read by the sensor reading unit 44, are stored in the voltage field 55H and the current field 55I, respectively.

Therefore, in the case of the example in FIG. 8, at the time point of "2021/05/25 15:25:00", the corresponding battery package 2 is installed at a place of latitude "35.62860", longitude "139.73882", and altitude "2.9", the ambient temperature of the battery package 2 is "27.2", the humidity is "53.5", and the atmospheric pressure is "1009", and it is indicated that the charge/discharge voltage and the charge/discharge current of the battery package 2 are "332.5" and "9.7", respectively.

(1-2-2) Initial setting process

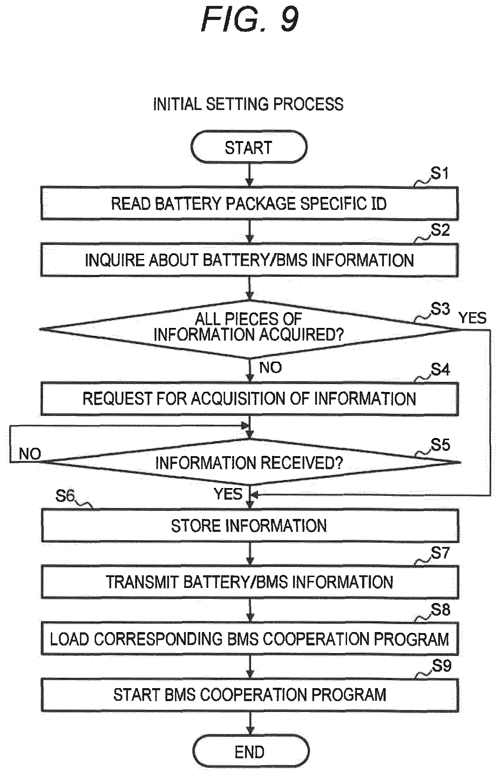

Here, FIG. 9 shows a flow of a series of processing (hereinafter, this is referred to as initial setting processing) for performing initial setting- of the battery package 2, which is executed by the central processing unit 40 (FIG. 5) of the package controller 26 (FIG. 5) when the battery module 31 (FIG. 4) is newly incorporated into the battery package 2 or when the battery module 31 incorporated into the battery package 2 is replaced. The central processing unit 40 executes the initial setting process shown in FIG. 9 on the basis of an initial setting program 54 (FIG. 5) stored in advance in the storage device 48 (FIG. 5).

Since the BMS 25 (FIG. 5) has a function of controlling charging and discharging in units of submodules and battery cells constituting the battery module 31, the specific BMS 25 corresponding to the type of the battery module 31 is used in the battery package 2. Therefore, in the following description, it is assumed that the BMS 25 corresponding to the battery module 31 is also used when the battery module 31 is newly incorporated into the battery package 2 or when the battery module 31 incorporated into the battery package 2 is replaced.

Such initial setting is performed by connecting the setting terminal 49 (FIG. 5) to the setting interface 43 (FIG. 5) . Then, first, after the battery module 31 is housed in the battery package 2, and the electrical system between the battery module 31 and the battery package 2 is connected, the operation of the package controller 26 is started. As a result, the program stored in the ROM 45 is activated. Thereafter, when a specific key operation is performed by the setting terminal 49, the initial setting program 54 stored in the storage device 48 is loaded onto the RAM 46 (FIG. 5), and the central processing unit 40 executes the initial setting program 54 to start the initial setting processing.

Then, when the initial setting process is started, the central processing unit 40 first reads the battery package specific ID information 56 (FIG. 5) which is information on the battery package specific ID of the battery package 2 stored in the storage device 48 (S1), and thereafter, communicates with the BMS 25 via the communication line 32 (FIG. 5), and inquires about the manufacturer, model number, and serial number of the battery module 31 housed in the battery package 2 and the manufacturer, model number, and serial number of the BMS 25 at that time (S2).

Subsequently, as a result of the inquiry in step S2, the central processing unit 40 determines whether all pieces of information (hereinafter, this is referred to as battery/BMS information 50) of the manufacturer, model number, and serial number of the battery module 31 and the BMS 25 described above have been acquired from the BMS 25 (S3). Then, in a case where a positive result is obtained in this determination, the central processing unit 40 proceeds to step S6.

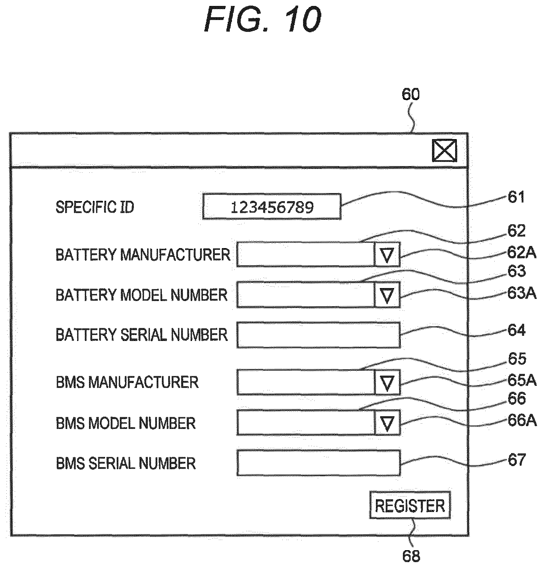

On the other hand, when a negative result is obtained in the determination in step S3, the central processing unit 40 transmits a battery/BMS information acquisition request for requesting acquisition.of the battery/BMS information 50 to the setting terminal 49 together with the battery package specific ID information 56 acquired in step S1 (S4), and then waits for transmission of the battery/BMS information 50 from the setting terminal 49 (S5). Thus, the setting terminal 49 that has received the battery/BMS information acquisition request displays a battery/BMS information registration screen 60 described later with reference to FIG. 10, and transmits the battery/BMS information 50 input by the operator to the package controller 26 using the battery/BMS information registration screen 60.

Then, when the battery/BMS information 50 is transmitted from the setting terminal 49, the central processing unit 40 stores the battery/BMS information 50 in the storage device 48 (S6), and wirelessly transmits the battery/BMS information 50 to the charge/discharge control server 8 (FIG. 1) using the wireless communication device 42 (FIG. 5) (S7). At this time, the central processing unit 40 erases all the data stored in the power-type-based storage amount table 53 (resets the power-type-based storage amount table 53).

. Next, the central processing unit 40 reads, from the storage device 48, the BMS cooperation program 51 that matches the manufacturer and model number of the BMS 25 in the battery package 2 recognized on the basis of the battery/BMS information 50 acquired from the BMS 25 in step S2 or transmitted from the setting terminal 49 in step S5, and loads the program onto the RAM 46 (S8). In practice, a plurality of types of BMS cooperation programs 51, which are programs for cooperating with the BMS 25, are stored in advance in the storage device 48 in association with the BMS 25 of various model numbers of various manufacturers, and the central processing unit 40 reads the BMS cooperation program 51 matching the manufacturer and model number of the BMS 25 in the battery package 2 from the storage device 48 and loads the BMS cooperation program 51 onto the RAM 46.

Then, the central processing unit 40 starts cooperation with the BMS 25 in the battery package 2 by executing the BMS cooperation program 51 loaded onto the RAM 46 (S9), and then ends the initial setting processing shown in FIG. 9.

Here, FIG. 10 shows a configuration example of the battery/BMS information registration screen 60 displayed on the setting terminal 49 in response to the battery/BMS information acquisition request in step S4 of the initial setting process described above with reference to FIG. 9.

The battery/BMS information registration screen 60 includes a specific ID input textbox 61, a battery manufacturer input textbox 62, a battery model number input textbox 63, a battery serial number input textbox 64, a BMS manufacturer input textbox 65, a BMS model number input textbox 66, a BMS serial number input textbox 67, and a registration button 68.

Then, in the specific ID input textbox 61, the battery package specific ID of the target battery package 2 transmitted from the package controller 26 to the setting terminal 49 together with the battery/BMS information acquisition request in step S4 of FIG. 9 is displayed by default.

In addition, a pull-down button 62A is provided on the right side of the battery manufacturer input textbox 62, and a pull-down menu (not shown) on which a plurality of names of battery manufacturers selectable by clicking the pull-down button 62A is described can be displayed. Thus, the operator can specify the battery manufacturer as the manufacturer of the battery module 31 by selecting a desired battery manufacturer from the battery manufacturers displayed in the pull-down menu. Then, the name of the battery manufacturer specified at this time is displayed in the battery manufacturer input textbox 62.

Further, a pull-down button 63A is provided on the right side of the battery model number input textbox 63, and by clicking the pull-down button 63A, it is possible to display a pull-down menu (not shown) in which some model numbers of the battery modules 31 whose manufacturer names are displayed in the battery manufacturer input textbox 62 are described. Thus, the operator can specify the desired model number as the model number of the battery module 31 by selecting the desired model number from the model numbers displayed in the pull-down menu. Then, the model number specified at this time is displayed in the battery model number input textbox 63.

Similarly, a pull-down button 65A is provided on the right side of the BMS manufacturer input textbox 65, and a pull-down menu (not shown) on which one or more names of BMS 25 selectable by clicking the pull-down button 65A is described can be displayed. Thus, the operator selects a desired BMS manufacturer from the BMS manufacturers displayed in the pull-down menu, and can specify the BMS manufacturer as the manufacturer of the BMS 25 housed in the battery package 2 targeted at that time. Then, the name of the BMS manufacturer specified at this time is displayed in the BMS manufacturer input textbox 65.

In addition, a pull-down button 66A is provided on the right side of the BMS model number input textbox 66, and by clicking the pull-down button 66A, it is possible to display a pull-down menu (not shown) in which some model numbers of the BMS 25 whose manufacturer names are displayed are described in the BMS manufacturer input textbox 65.. Thus, the operator can specify the desired model number as the model number of the BMS 25 by selecting the desired model number from among the model numbers displayed in the pull-down menu. Then, the model number selected at this time is displayed in the BMS model number input textbox 66.

Then, on the battery/BMS information registration screen 60, the manufacturer and the model number of the battery module 31 housed in the target battery package 2 are specified as described above, and the serial number of the battery module 31 is manually input into the battery serial number input textbox 64, and the manufacturer and the model number of the BMS 25 housed in the battery package 2 are specified as described above, and the serial number of the BMS 25 is manually input into the BMS serial number input textbox 67, and then the registration button 68 is clicked.

As a result, the battery manufacturer, battery model number, and battery serial number specified on the battery/BMS information registration screen 60 and the BMS manufacturer, BMS model number, and BMS serial number are transmitted as the battery/BMS information 50 from the setting terminal 49 to the battery package 2 to which the setting terminal 49 is connected. Thus, the processing after step S6 of the initial setting processing is executed as described above on the basis of the battery/BMS information 50.

(1-3) Configuration and processing of charge/discharge control device

(1-3-1) Configuration of charge/discharge control device

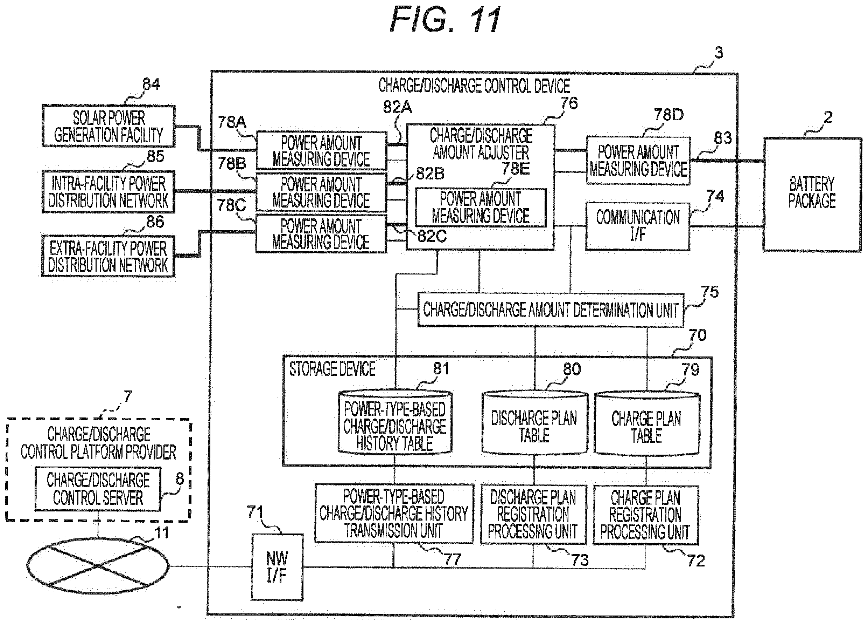

FIG. 11 shows a configuration example of the charge/discharge control device 3. The charge/discharge control device 3 is connected to one or more green power sources serving as a power source when green power is charged in the battery package 2. In the following description, it is assumed that the green power source is a solar power generation facility 84 that performs solar power generation.

In addition, the charge/discharge control device 3 is also connected to a power distribution network in order to be able to supply power to the battery package 2 even when a sufficient charge amount cannot be obtained only by green power. In the following description, it is assumed that the charge/discharge control device 3 is connected to two types of power distribution networks: an intra-facility power distribution network 85 that is a power distribution network for supplying power into a facility where the charge/discharge control device 3 is installed; and an extra-facility power distribution network 86 that is an external power distribution network for supplying power to various facilities. The intra-facility power distribution network 85 is used to supply power to the electric devices in the facility, and the extra-facility power distribution network 86 is used to take in the non-green power to be charged in the battery package 2 and to transmit the green power and the non-green power stored in the battery package 2 to the outside, in addition to the use to take in the power to be supplied to the electric devices in the facility from the outside.

The charge/discharge control device 3 of the present embodiment is configured of a general-purpose computer device including a central processing unit (CPU) and a memory, and in addition to the CPU and the memory, as shown in FIG. 11, includes a storage device 70, a network interface 71, a charge plan registration processing unit 72, a discharge plan registration processing unit 73, a communication interface 74, a charge/discharge amount determination unit 75, a charge/discharge amount adjuster 76, a power-type-based charge/discharge history transmission unit 77, and first to fourth power amount measuring devices 78A to 78D.

The storage device 70 is configured of, for example, a large-capacity nonvolatile storage device such as a hard disk or a solid state drive (SSD), and stores various types of information to be stored for a long term, such as a charge plan table 79, a discharge plan table 80, and a power-type-based charge/discharge history table 81 to be described later.

The network interface 71 is an interface having a function of performing protocol control at the time of communication with the charge/discharge control server 8 via the network 11. From the charge/discharge control server 8, a charge plan and a discharge plan for the battery package 2 connected to the charge/discharge control device 3 are given. The charge plan is a plan that defines when, from where, and how much power of which power type should be charged to the connected battery package 2, and the discharge plan is a plan that defines when, which power type, and how much power should be discharged (transmitted) from the battery package 2.

Both the charge plan registration processing unit 72 and the discharge plan registration processing unit 73 are functional units implemented by the above-described CPU (not shown) executing a program stored in a memory (not shown). However, the charge plan registration processing unit 72 and the discharge plan registration processing unit 73 may be configured as hardware. The charge plan registration processing unit 72 registers and manages the charge plan transmitted from the charge/discharge control server 8 via the network 11 in the charge plan table 79 in the storage device 70, and the discharge plan registration processing unit 73 registers and manages the discharge plan transmitted from the charge/discharge control server 8 via the network 11 in the discharge plan table 80 in the storage device 70.

The communication interface 74 is an interface having a function of performing protocol control at the time of communication with the battery package 2 connected to the charge/discharge control device 3. A charge/discharge amount determination unit 75 to be described later acquires, from the battery package 2 via the communication interface 74, information on the amount of power (storage amount) of the green power or the non-green power stored in the battery package 2. This information is information recorded and managed in the power-type-based storage amount table 53 (FIG. 7) by the package controller 26 (FIG. 5) of the battery package 2.

The charge/discharge amount determination unit 75 is also a functional unit implemented by the above-described CPU (not shown) executing a program stored in a memory (not shown). However, the charge/discharge amount determination unit 75 may be configured as hardware. Based on the charge plan and the discharge plan stored in the charge plan table 79 and the discharge plan table 80 in the storage device 70, respectively, and the storage amounts of the green power and the non-green power stored in the battery package 2 connected to the charge/discharge control device 3 acquired via the communication interface 74, the charge/discharge amount determination unit 75 sequentially determines from where and how much of which power type of power is to be charged in the battery package 2, and where and how much of which power type of power is to be discharged, and sequentially gives a charge instruction and a discharge instruction according to the determination result to the charge/discharge amount adjuster 76.

The charge/discharge amount adjuster 76 adjusts the charge power amount to the battery package 2 and the discharge power amount from the battery package 2 according to the charge instruction and the discharge instruction given from the charge/discharge amount determination unit 75 to the battery package. 2 while monitoring an amount of power (an amount of power generated by the solar power generation facility 84) supplied from the solar power generation facility 84 measured by the first power amount measuring device 78A provided on the power supply line 82A connecting the solar power generation facility 84 and the charge/discharge amount adjuster 76, an amount of power discharged to the intra-facility power distribution network 85 measured by the second power amount measuring device 78B provided on the power supply line 82B connecting the intra-facility power distribution network 85 and the charge/discharge amount adjuster 76, an amount of power supplied from the extra-facility power distribution network 86 and an amount of power discharged to the extra-facility power distribution network 86 measured by the third power amount measuring device 78C provided on the power supply line 82C connecting the extra-facility power distribution network 86 and the charge/discharge amount adjuster 76, the charge/discharge amount to the battery package 2 measured by the fourth power amount measuring device 78D provided on the power supply line 83 connecting the battery package 2 connected to the charge/discharge control device 3 and the charge/discharge amount adjuster 76, and the power transmission amount from the extra-facility power distribution network 86 to the intra-facility power distribution network 85 measured by the fifth power amount measuring device 78E provided inside the charge/discharge amount adjuster 76.

In addition, the charge/discharge amount adjuster 76 is equipped with a DC-AC conversion function for converting DC power into AC power and an AC-DC conversion function for converting AC power into DC power, and converts power to be charged into the battery package 2 from the extra-facility power distribution network 86 from AC power into DC power, or converts DC power to be discharged from the battery package 2 to the intra-facility power distribution network 85 or the extra-facility power distribution network 86 into AC power. Note that the charge/discharge amount adjuster 76 outputs the power charged in the battery package 2 from the solar power generation facility 84 to the battery package 2 as it is without being converted into AC power because the power is DC power, and also outputs the power supplied from the extra-facility power distribution network 86 to the intra-facility power distribution network 85 to the intra-facility power distribution network 85 as it is without being converted into DC power because the power is AC power.

Further, the charge/discharge amount adjuster 76 records the amount of power actually charged in the battery package 2 of the connection destination or discharged from the battery package 2 in the power-type-based charge/discharge history table 81 together with the classification as to whether or not the power is green power. The charge/discharge amount adjuster 76 transmits the amount of power charged and discharged in the battery package 2 and the type of power (green power or non-green power) to the battery package 2. As a result, the power-type-based storage amount table 53 (FIG. 7) held by the package controller 26 (FIG. 5) in the battery package 2 is updated based on this information.

Such updating of the power-type-based storage amount table 53 is executed by the central processing unit 40 of the package controller 26. Specifically, when the green power is charged in the subject battery package 2, the central processing unit 40 of the package controller 26 adds a new record to the power-type-based storage amount table 53, and stores "green" and "solar power" in the power type field 53A and the power type detail field 53B of the record, respectively. In addition, the central processing unit 40 stores a value obtained by adding the power amount of the green power charged at that time to the storage amount of the green power recorded last in the power-type-based storage amount table 53 in the storage amount field 53C of the record, and further registers the current date and time in the registration date and time field 53D of the record.

When the green power is discharged from the battery package 2, the central processing unit 40 adds a new record to the power-type-based storage amount table 53, and stores "green" and "solar power" in the power type field 53A and the power type detail field 53B of the record, respectively. In addition, the central processing unit 40 stores a value obtained by subtracting the power amount of the green power discharged at that time from the storage amount of the green power recorded last in the power-type-based storage amount table 53 in the storage amount field 53C of the record, and further registers the current date and time in the registration date and time field 53D of the record.

The same applies to the case where the non-green power is charged to and discharged from the battery package 2, and thus the description thereof is omitted here.

The power-type-based charge/discharge history transmission unit 77 is a functional unit implemented by the above-described CPU (not shown) executing a program stored in a memory (not shown). However, the power-type-based charge/discharge history transmission unit 77 may be configured as hardware. The power-type-based charge/discharge history transmitter 77 appropriately transmits the information recorded in the power-type-based charge/discharge history table 81 to the charge/discharge control server 8 via the network interface 71.

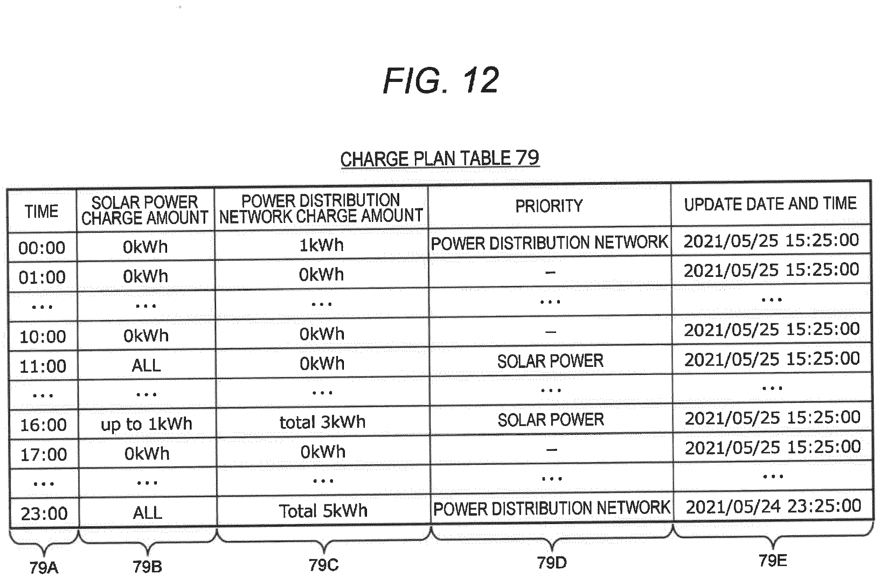

Here, a configuration example of the charge plan table 79 is shown in FIG. 12. The charge plan table 79 is a table used to hold the charge plan for the corresponding battery package 2 prepared by the charge/discharge control server 8 as described above. As shown in FIG. 12, the charge plan table 79 includes a time field 79A, a solar power charge amount field 79B, a power distribution network charge amount field 79C, a priority field 79D, and an update date and time field 79E. In the present embodiment, the charge/discharge control server 8 prepares a charge plan for each time zone of one hour starting from the midnight, and thus one record (row) in the charge plan table 79 corresponds to a charge plan for the corresponding battery package 2 in the corresponding time zone.

Then, the start time of the corresponding time zone is stored in the time field 79A, and the amount of green power to be charged into the battery package 2 from the solar power generation facility 84 is stored in the solar power charge amount field 79B. Note that the notation "ALL" in the solar power charge amount field 79B in the figure means that all the amounts of power that can be supplied from the solar power generation facility 84 are applied to the charging of the battery package 2, and the notation "up to a kWh" means that a maximum of O kWh of power is applied to the charging of the battery package 2.

In the power distribution network charge amount field 79C, the amount of non-green power to be charged into the battery package 2 from the extra-facility power distribution network 86 is stored. The notation "total O kWh" in the figure means that the battery package 2 should be charged so that the total value of the storage amount of the battery package 2 becomes a kWh.

Further, the priority field 79D stores information indicating which of the solar power generation facility 84 and the extra-facility power distribution network 86 should preferentially supply power to charge the battery package 2 when the battery package 2 is fully charged or due to restrictions such as the maximum allowable charging current, charging that satisfies both the solar power charge amount and the power distribution network charge amount is not possible. The example of FIG. 12' shows a case where information of "solar power" is stored in a case where priority is given to power from the solar power generation facility 84, and information of "power distribution network" is stored in a case where priority is given to power from the extra-facility power distribution network 86. Further, the update date and time.field 79E stores the date and time when the record is updated (or newly registered).

Therefore, in the case of the example of FIG. 12, for example, in the time zone of 1 hour from "16:00",. the charge amount of the green power from the solar power generation facility 84 to the battery package 2 is 1 kWh ("up to 1 kWh") at the maximum, and the battery package 2 should be charged (total 3 kWh) with the non-green power supplied from the extra-facility power distribution network 86 until the total value of the storage amounts of the battery packages 2 becomes 3 kWh. In a case where the battery package 2 is fully charged, or in a case where charging that satisfies both conditions of the solar charge amount and the power distribution network charge amount cannot be performed due to limitations such as the maximum allowable charge current, the non-green power from the extra-facility power distribution network 86 should be preferentially applied to the charge of the battery package 2 ("solar power"). This record is updated (registered) to "2021/05/25 15:25:00".

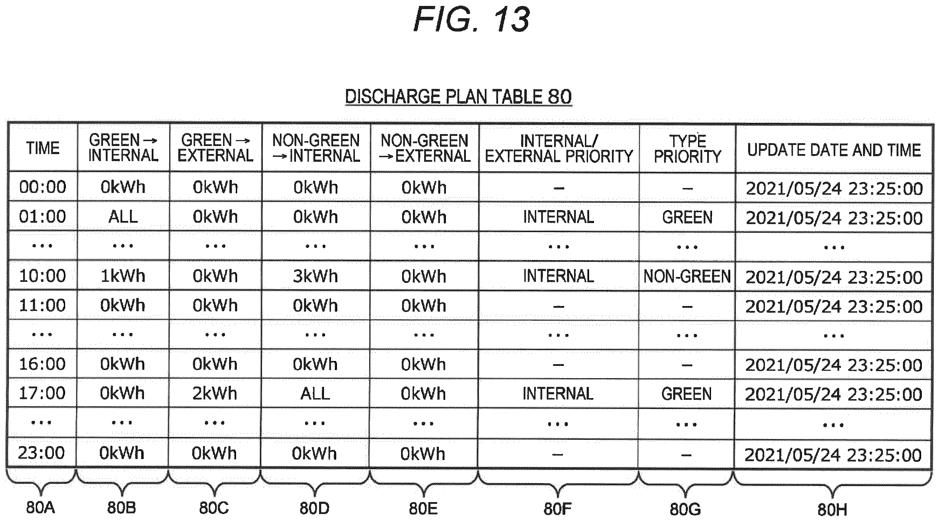

FIG. 13 shows a configuration example of the discharge plan table 80. The discharge plan table 80 is a table used to hold the discharge plan for the corresponding battery package 2 (the battery package 2 connected to the charge/discharge control device 3) prepared by the charge/discharge control server 8 as described above. As shown in FIG. 13, the discharge plan table 80 includes a time field 80A, a green → internal field 80B, a green→ external field 80C, a non-green → internal field 80D, a non-green → external field 80E, an internal/external priority field 80F, a type priority field 80G, and an update date and time field 80H. In the present embodiment, the charge/discharge control server 8 prepares a discharge plan for each time zone of one hour starting from 0:00 am, and thus one record in the discharge plan table 80 corresponds to a discharge plan from the corresponding battery package 2 in the corresponding time zone.

Then, the start time of the corresponding time zone is stored in the time field 80A. In the green → internal field 80B, the amount of green power to be discharged to the intra-facility power distribution network 85 is stored, and in the green → external field 80C, the amount of green power to be discharged to the extra-facility power distribution network 86 is stored. Further, the amount of non-green power to be discharged to the intra-facility power distribution network 85 is stored in the non-green -> internal field 80D, and the amount of non-green power to be discharged to the extra-facility power distribution network 86 is stored in the non-green → external field 80E. The notation "ALL" in the green -> internal field 80B or the non-green -> internal field 80D means that all the power consumed in the intra-facility power distribution network 85 should be discharged from the battery package 2 to the intra-facility power distribution network 85.

The internal/external priority field 80F stores information indicating which of the intra-facility power distribution network 85 and the extra-facility power distribution network 86 should be prioritized as a discharge destination of the power stored in the battery package 2 when the scheduled amount of power cannot be discharged from the battery package 2 to the intra-facility power distribution network 85 and the extra-facility power distribution network 86. The example of FIG. 13 shows an example in which information of "internal" is stored when the intra-facility power distribution network 85 is to be prioritized, and information of "external" is stored when the extra-facility power distribution network 86 is to be prioritized.

In the type priority field 80G, information indicating which one of green power and non-green power should be preferentially discharged when the scheduled amount of power cannot be discharged from the battery package 2 is stored. The example of FIG. 13 shows an example in which information of "green" is stored when green power is to be prioritized, and information of "non-green" is stored when non-green power is to be prioritized. Further, the update date and time field 80H stores the date and time when the record is updated (or newly registered).

Therefore, in the case of the example of FIG. 13, for example, in a time zone of 1 hour from "10:00", green power of "1 kWh" and green power of "3 kWh" of the power stored in the battery package 2 should be discharged to the intra-facility power distribution network 85, and in a case where the scheduled amount of power cannot be discharged from the battery package 2, "non-green" power is preferentially discharged to the intra-facility power distribution network 85 ("internal"), and this record is updated (registered) to "2021/05/24 23:25:00".

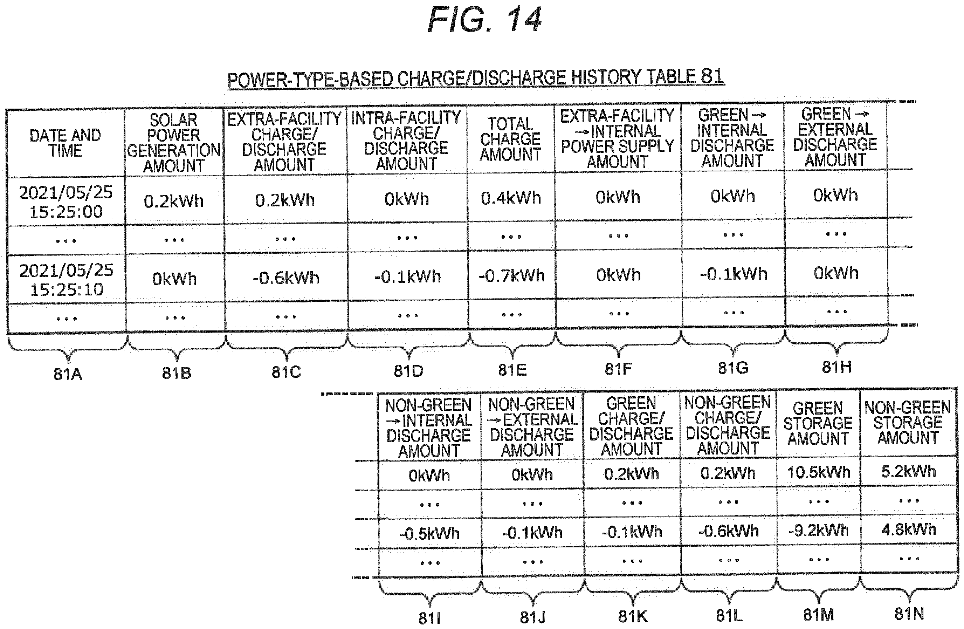

Further, a configuration example of the power-type-based charge/discharge history table 81 is shown in FIG. 14. The power-type-based charge/discharge history table 81 is a table in which a charge/discharge history (hereinafter, this is referred to as a charge/discharge history) for each power type in the battery package 2 connected to the charge/discharge control device 3 holding the power-type-based charge/discharge history table 81 is stored.

As shown in FIG. 14, the power-type-based charge/discharge history table 81 includes a date and time field 81A, a solar power generation amount field 81B, an extra-facility charge/discharge amount field 81C, an intra-facility charge/discharge amount field 81D, a total charge amount field 81E, an extra-facility → internal power supply amount field 81F, a green -> internal discharge amount field 81G, a green → external discharge amount field 81H, a non-green → internal discharge amount field 81I, a non-green → external discharge amount field 81J, a green charge/discharge amount field 81K, a non-green charge/discharge amount field 81L, a green storage amount field 81M, and a non-green storage amount field 81N. In the power-type-based charge/discharge history table 81, one record (row) corresponds to one charge/discharge history in the corresponding battery package 2.

Then, the date and time when the information of the corresponding record is registered in the power-type-based charge/discharge history table 81 is stored in the date and time field 81A. The charge/discharge amount adjuster 76 (FIG. 11) acquires necessary information at regular time intervals and registers the information in the power-type-based charge/discharge history table 81.

In addition, in the solar power generation amount field 81B, the amount of power supplied from the solar power generation facility 84 (the amount of power generated by the solar power generation facility 84) measured by the first power amount measuring device 78A (FIG. 11) during a period from registration of the information of the previous record in the power-type-based charge/discharge history table 81 to registration of the information of the record in the power-type-based charge/discharge history table 81 is stored.

Further, the extra-facility charge/discharge amount field 81C stores an integrated value of the amount of power charged and discharged to the extra-facility power distribution network 86, which is measured by the third power amount measuring device 78C (FIG. 11) in the same period. When the integrated value of the amount of power stored in the extra-facility charge/discharge amount field 81C is positive, it means that the battery package 2 has been charged with power from the extra-facility power, distribution network 86, or power has been supplied from the extra-facility power distribution, network 86 to the intra-facility power distribution network 85.

The intra-facility charge/discharge amount field 81D stores the integrated value of the power amount of the discharge power to the intra-facility power distribution network 85 measured by the second power amount measuring device 78B in the same period, and the total charge amount field 81E stores the integrated value of the power amount of the charge/discharge power to the battery package 2 measured by the fourth power amount measuring device 78D in the same period. When the integrated value of the power amount stored in the total charge amount field 81E is negative, it means that the amount of power amount discharged from the battery package 2 is larger than the amount of power amount charged in the battery package 2. Further, the extra-facility → internal power supply amount field 81F stores an integrated value of the power amount of the power supplied from the extra-facility power distribution network 86 to the intra-facility power distribution network 85, which is measured by the fifth power amount measuring device 78E in the same period.

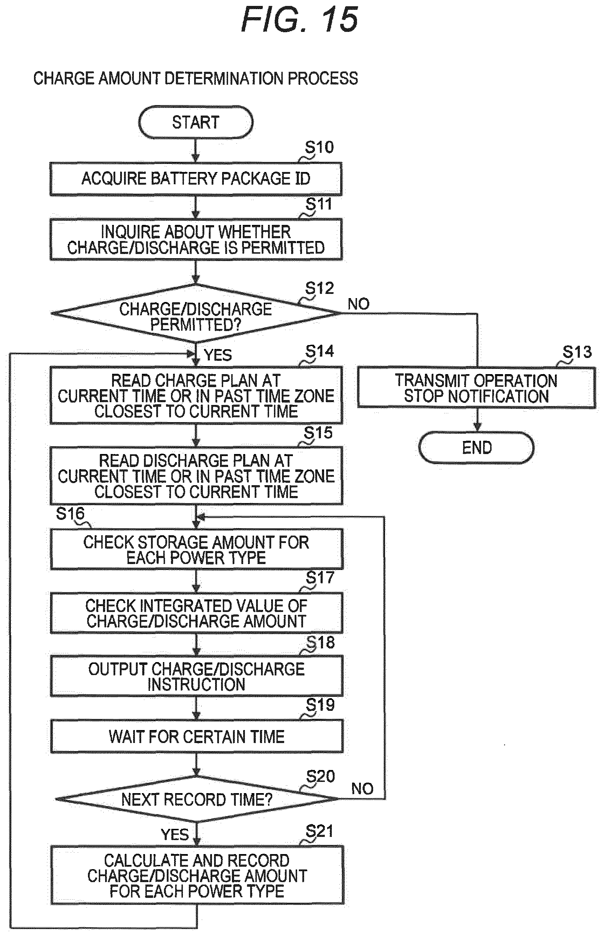

On the other hand, in the green → internal discharge amount field 81G, the green → external discharge amount field 81H, the non-green → internal discharge amount field 81I, the non-green → external discharge amount field 81J, the green charge/discharge amount field 81K, and the non-green charge/discharge amount field 81L, the corresponding amounts of power calculated by the charge/discharge amount determination unit 75 (FIG. 11) in the charge/discharge amount determination processing described later with reference to FIG. 15 are stored, respectively.

Specifically, the amount of green power discharged to the intra-facility power distribution network 85 is stored in the green → internal discharge amount field 81G, and the amount of green power discharged to the extra-facility power distribution network 86 is stored in the green -> external discharge amount field 81H. The non-green -> internal discharge amount field 81I stores the amount of non-green power discharged to the intra-facility power distribution network 85, and the non-green -> external discharge amount field 81J stores the amount of non-green power discharged to the extra-facility power distribution network 86.

Further, the green charge/discharge amount field 81K stores an integrated value of the amount of power of the green power charged and discharged in the battery package 2, and the non-green charge/discharge amount field 81L stores an integrated value of the amount of power of the non-green power charged and discharged in the battery package 2. When the integrated value of the amount of power stored in the green charge/discharge amount field 81K is positive, it means that the amount of power of the green power charged in the battery package 2 is larger than the green power discharged from the battery package 2 in the corresponding period. When the integrated value of the amount of power stored in the green charge/discharge amount field 81K is negative, it means that the green power discharged from the battery package 2 is smaller than the amount of power of the green power charged in the battery package 2 in the corresponding period. The same applies to the integrated value of the amount of power stored in the non-green charge/discharge amount field 81L.

The green storage amount field 81M stores the storage amount of the green power. of the battery package 2 at that time, and the non-green storage amount field 81N- stores the storage amount of the non-green power of the battery package 2 at that time.

Therefore, in the case of the example of FIG. 14, for example, in a certain period up to "2021/05/25 15:25:00", the integrated value of the amount of power generated by the solar power generation facility 84 and supplied to the charge/discharge control device 3 is "0.2 kWh", the integrated value of the amount of power of power supplied from the extra-facility power distribution network 86 to the charge/discharge control device 3 is "0.2 kWh", the integrated value of the amount of power of power supplied to the intra-facility power distribution network 85 via the charge/discharge control device 3 is "0 kWh", the integrated value of the amount of power supplied from the charge/discharge control device 3 to the battery package 2 is "0.4 kWh", and the integrated value of the amount of power supplied from the extra-facility power distribution network 86 to the intra-facility power distribution network 85 is "0 kWh".

FIG. 14 also shows that the integrated value of the amounts of green power and non-green power respectively discharged to the extra-facility power distribution network 86 and the intra-facility power distribution network 85 via the charge/discharge control device 3 at this time was "0 kWh", and the amount of green power stored in the battery package 2 at that time was "10.5 kWh", and the amount of non-green power stored was "5.2 kWh".

(1-3-2) Various processes executed in charge/discharge control device

(1-3-2-1) Charge/discharge determination process

FIG. 15 shows specific processing contents of the charge/discharge amount determination processing executed by the charge/discharge amount determination unit 75 described above with respect to FIG. 11. According to the processing procedure shown in FIG. 15, the charge/discharge amount determination unit 75 determines the amount of power to be charged from the solar power generation facility 84 or the extra-facility power distribution network 86 to the battery package 2 connected to the charge/discharge control device 3 (the charge/discharge control device 3 provided with the charge/discharge amount determination unit 75), and the amount of power to be discharged from the battery package 2 to the intra-facility power distribution network 85 or the extra-facility power distribution network 86.

In practice, when the battery package 2 is connected to the charge/discharge control device 3, the charge/discharge amount determination unit 75 starts the charge/discharge amount determination processing shown in FIG. 15, and first inquires about the battery package specific ID of the battery package 2 via the communication interface 74 (FIG. 11) with respect to the battery package 2 connected to the charge/discharge control device 3 (S10).

Then, the charge/discharge amount determination unit 75 transmits the battery package specific ID of the battery package 2 acquired as a result to the charge/discharge control server 8 (FIG. 1), and the charge/discharge control device 3 inquires whether charge/discharge of the battery package 2 is permitted (S11).

Here, in the present embodiment, as described above, the user who uses the battery package 2 specifies to which charge/discharge control device 3 the battery package 2 is connected and used at the time of contract, and the information is managed by the contract management terminal 10 (FIG. 1). In addition, the contract management terminal 10 notifies the charge/discharge control server 8 of information indicating which battery package 2 can be connected to which charge/discharge control device 3 and used on the basis of the contract content, and the charge/discharge control server 8 stores and manages the information as contract information. Then, the charge/discharge control server 8 determines an answer to the inquiry from the charge/discharge amount determination unit 75 in step S11 on the basis of the contract information, and notifies the charge/discharge amount determination unit 75 of the determination result.

Upon receiving such a notification from the charge/discharge control server 8, the charge/discharge amount determination unit 75 determines whether or not the battery package 2 can be charged and discharged on the basis of the received notification (S12). When a negative result is obtained in this determination, the charge/discharge amount determination unit 75 transmits a notification (hereinafter, this is referred to as an operation stop notification) indicating that the operation of the charge/discharge control device 3 is stopped to the charge/discharge control server 8 (S13), and then ends the charge/discharge amount control processing.

On the other hand, when a positive result is obtained by the determination in step S12, the charge/discharge amount determination unit 75 reads a record of a charge plan in a past time zone that is the same as the current time or closest to the current time from the charge plan table 79 (FIG. 12) (S14), and reads a record of a discharge plan in the time zone from the discharge plan table 80 (S15). In practice, for example, when the current time is "06:05", the charge/discharge amount determination unit 75 reads a record of a charge plan in a time zone of "06:00" to "07:00" (a record in which "06:00" is stored in the time field 79A), which is a future time zone closest to the current time, from the charge plan table 79, and also reads a record of a discharge plan in a time zone of "06:00" to "07:00" (a record in which "06:00" is stored in the time field 80A) from the discharge plan table 80.

Subsequently, the charge/discharge amount determination unit 75 accesses the battery package 2 connected to the charge/discharge control device 3 via the communication interface 74 (FIG. 11), and reads the current storage amount for each power type stored in the power-type-based storage amount table 53 (FIG. 7) held by the package controller 26 (FIG. 5) of the battery package 2 (S16).

In addition, the charge/discharge amount determination unit 75 refers to the power-type-based charge/discharge history table 81, and checks each of the integrated value of the charge amount for each of the green power and the non-green power and the integrated value of the discharge amount for each of the green power and the non-green power since reading the corresponding charge plan from the charge plan table 79 in the most recent step S14 (S17).

Next, based on the integrated value of the charged and discharged power amount confirmed in step S17, the charge plan in the future time zone closest to the current time acquired in step S14, and the discharge plan in the future time zone closest to the current time acquired in step S15, the charge/discharge amount determination unit 75 outputs the following charge instruction and discharge instruction to the charge/discharge, amount adjuster 76 (FIG. 11) at regular time intervals so that the power, amount to be charged and discharged in the time zone of the battery package 2 connected to the charge/discharge control device 3 gradually approaches the charge plan and the discharge plan (S18). Hereinafter, a case where the regular time interval is one minute will be described as an example.

Here, the difference between the end time of the time zone in which the charge plan or the discharge plan is read in step S14 or step S15 and the current time is set to t minutes, and the storage amount of the green power is set to p kWh and the storage amount of the non-green power is set to q kWh among the storage amounts for each power type in the battery package 2 read in step S16. Further, the integrated value of the amount of charge from the solar power generation facility 84 to the battery package 2 checked in step S17 is denoted by $Cs\_c$, the integrated value of the amount of charge from the extra-facility power distribution network 86 to the battery package 2 is denoted by $Co\_c$, the integrated value of the amount of power obtained by discharging the green power stored in the battery package 2 to the intra-facility power distribution network 85 is denoted by $Qri\_c$, the integrated value of the amount of power obtained by discharging the green power stored in the battery package 2 to the extra-facility power distribution network 86 is denoted by $Qro\_c$, the integrated value of the amount of power obtained by discharging the non-green power stored in the battery package 2 to the intra-facility power distribution network 85 is denoted by $Qdi\_c$, and the integrated value of the amount of power obtained by discharging the non-green power stored in the battery package 2 to the extra-facility power distribution network 86 is denoted by $Qdo\_c$.

(A) Charging from solar power generation facility 84 to battery package 2

(A-1) When the solar power charge amount in the charge plan is "ALL"

When the solar power charge amount in the charge plan read in step S14 is "ALL", the battery package 2 is charged with all the solar power generation power given from the solar power generation facility 84.

(A-2) When the solar power charge amount in the charge plan is "up to x kWh"

When the solar power charge amount in the charge plan read in step S14 is "up to x kWh" and the integrated value $Cs\_c$ of the charge amount from the solar power generation facility 84 to the battery package 2 checked in step S17 is "x" or more ($Cs\_c \geq x$), the charging of the battery package 2 with the solar power generation power given from the solar power generation facility 84 is stopped.

When the integrated value $Cs\_c$ is less than "x" ($Cs\_c < x$), the charging of the battery package 2 with the solar power generation power given from the solar power generation facility 84 is continued.

(B) Charging of the battery package 2 from extra-facility power distribution network 86

(B-1) When, the power distribution network charge amount in the charge plan is "y kWh"

When the charge amount from the extra-facility power distribution network 86 to the battery package 2 in the charge plan read in step S14 is "y kWh" and the integrated value $Co\_c$ of the charge amount from the extra-facility power distribution network 86 to the battery package 2 is "y" or more ($Co\_o \geq y$), the charging from the extra-facility power distribution network 86 to the battery package 2 is stopped.

When the integrated value $Co\_c$ is less than "y" ($Co\_o < y$), the charging of the battery package 2 from the extra-facility power distribution network 86 is continued.

(B-2) When the power distribution network charge amount in the charge plan is "total z kWh"

When the amount of charge from the extra-facility power distribution network 86 to the battery package 2 in the charge plan read in step S14 is "total z kWh" and the sum of the storage amount p of green power and the storage amount q of non-green power is "z" or more ($p + q \geq z$), the charging from the extra-facility power distribution network 86 to the battery package 2 is stopped.

When the sum of the storage amount p of the green power and the storage amount q of the non-green power is less than "z" ($p + q < z$), the battery package 2 is continuously charged from the extra-facility power distribution network 86.

(C) Discharge of green power from the battery package 2 to the intra-facility power distribution network 85

(C-1) When the value in the "green $\rightarrow$ internal" field in the discharge plan is "ALL"

When the amount of green power discharged from the battery package 2 to the intra-facility power distribution network 85 (the value in the "green -> internal" field 80B) in the discharge plan read in step S15 is "ALL", all the required amount of green power is discharged from the battery package 2 to the intra-facility power distribution network 85.

(C-2) When the value in the "green → internal" field in the discharge plan is "r kWh"

When the amount of green power discharged from the battery package 2 to the intra-facility power distribution network 85 in the discharge plan (the value in the "green → internal" field) is "r kWh", the green power is discharged from the battery package 2 to the intra-facility power distribution network 85 so as to satisfy the following condition.
[Mathematical formula 1]

$$Fri = \frac{(r - Qri\_c) \times 60}{t} (kW) \qquad \cdots\cdots (1)$$

(D) Discharge of green power from the battery package 2 to the extra-facility power distribution network 86

When the amount of green power discharged from the battery package 2 to the extra-facility power distribution network 86 (the value in the "green → external" field 80C) in the discharge plan read in step S15 is "s kWh", the green power is discharged from the battery package 2 to the extra-facility power distribution network 86 so as to satisfy the following condition.
[Mathematical formula 2]

$$Fro = \frac{(s - Qro\_c) \times 60}{t} (kW) \qquad \cdots\cdots (2)$$

(E) Discharge of non-green power from the battery package 2 to the intra-facility power distribution network 85

(E-1) When the value of the "non-green → internal" field 80D in the discharge plan is "ALL"

When the discharge amount of the non-green power from the battery package 2 to the intra-facility power distribution network 85 (the value of the "non-green → internal" field 80D) in the discharge plan read in step S15 is "ALL", all the required green power is discharged from the battery package 2 to the intra-facility power distribution network 85.

(E-2) When the value of the "non-green → internal" field 80D in the discharge plan is "u kWh"

When the amount of non-green power discharged from the battery package 2 to the intra-facility power distribution network 85 in the discharge plan (the value in the "non-green → internal" field 80D) is "u kWh", the non-green power is discharged from the battery package 2 to the intra-facility power distribution network 85 so as to satisfy the following condition.
[Mathematical formula 3]

$$Fdi = \frac{(u - Qdi\_c) \times 60}{t} (kW) \qquad \cdots\cdots (3)$$

(F) Discharge of non-green power from the battery package 2 to the extra-facility power distribution network 86

When the amount of non-green power discharged from the battery package 2 to the extra-facility power distribution network 86 in the discharge plan read in step S15 (the value in the "non-green → external" field. 80E) is "v kWh", the non-green power is discharged from the battery package 2 to the extra-facility power distribution network 86 so as to satisfy the condition.
[Mathematical formula 4]

$$Fdo = \frac{(v - Qdo\_c) \times 60}{t} (kW) \qquad \cdots\cdots (4)$$

When giving a charge instruction or a discharge instruction to the charge/discharge amount adjuster 76, the charge/discharge amount determination unit 75 notifies the charge/discharge amount adjuster 76 of the value stored in the priority field 79D (FIG. 12) of the charge plan acquired in step S14, the value stored in the internal/external priority field 80F (FIG. 13) of the discharge plan acquired in step S15, and the value stored in the type priority field 80G (FIG. 13).

In addition, when the target value is set for the discharge amount to the intra-facility power distribution network 85 in response to the notification since it is not possible to independently control the discharge amount of the green power and the discharge amount of the non-green power stored in the battery package 2, the charge/discharge amount adjuster 76 controls the total value (Fri + Fdi) of the power amount Fri in the expression (1) and the power amount Fdi in the expression (3) to be discharged to the intra-facility power distribution network 85. In addition, control is performed such that the total value (Fro + Fdo) of the power amount Fro in the expression (2) and the power amount Fdo in the expression (4) is discharged to the extra-facility power distribution network 86.

Thereafter, the charge/discharge amount determination unit 75 waits until a certain time (for example, 1 minute) elapses after confirming the storage amount for each power type in the battery package 2 in step S16 (S19). Then, when the certain time elapses in due course, the charge/discharge amount determination unit 75 determines whether the current time after standby exceeds the end time of the time zone in which the charge plan or the discharge plan is read in the latest step S14 or step S15 (S20).

When a negative result is obtained in this determination, the charge/discharge amount determination unit 75 returns to step S16, and then repeats the processing of steps S16 to S20 until a positive result is obtained in step S20. By this repetitive processing, the charge/discharge amount of the battery package 2 is controlled at regular time intervals so as to approach the charge plan acquired in the most recent step S14, and the discharge plan acquired in the most recent step S15.

Then, when the end time of the time zone in which the charge plan or the discharge plan is read in the latest step S14 or step S15 is exceeded and a positive result is eventually obtained in step S20, the charge/discharge amount determination unit 75 calculates the charge/discharge amount for each power type in the loop in steps S16 to S20, stores the calculation result in the power-type-based charge/discharge history table 81 (S21), and then returns to step S14. Thereafter, while sequentially switching the time zone of the charge plan or the discharge plan acquired in step S14 or step S15 to the next time zone, the processing in steps S14 to S20 is repeated in the same manner as described above. By this repetitive processing, charge/discharge of the battery package 2 are controlled according to the charge plan for each time zone stored in the charge plan table 79 and the discharge plan for each time zone stored in the discharge plan table 80. The power-type-based charge/discharge amount calculation process in step S21 will be described in detail later.

(1-3-2-2) Power-type-based charge/discharge amount calculation process

Next, a flow of a series of processes (hereinafter, this is referred to as power-type-based charge/discharge amount calculation process) executed by the charge/discharge amount adjuster 76 to calculate the amount of power stored in each of the extra-facility → internal power supply amount field 81F, the green → internal discharge amount field 81G, the green → external discharge amount field 81H, the non-green -> internal discharge amount field 81I, the non-green → external discharge amount field 81J, the green charge/discharge amount field 81K, and the non-green charge/discharge amount field 81L of the power-type-based charge/discharge history table 81 described above with reference to FIG. 14 will be described.

In the following description, Ps is the amount of power measured by the first power amount measuring device 78A (FIG. 11), and represents the amount of power supplied from the solar power generation facility 84 to the charge/discharge control device 3 (the amount of power generated by the solar power generation facility 84) . In addition, Cb is the amount of power measured by the fourth power amount measuring device 78D (FIG. 11), and represents the amount of power supplied from the charge/discharge control device 3 to the battery package 2. Cb has a positive value when the battery package 2 is charged, and has a negative value when the battery package 2 is discharged.

In addition, Poi is the amount of power measured by the fifth power amount measuring device 78E (FIG. 11), and represents the amount of power supplied from the extra-facility power distribution network 86 to the intra-facility power distribution network 85. In addition, Po is the amount of power measured by the third power amount measuring device 78C (FIG. 11), and represents the amount of power supplied from the extra-facility power distribution network 86 to the charge/discharge control device 3. Po is a positive value when a current flows from the extra-facility power distribution network 86 to the charge/discharge control device 3, and is a negative value when a current flows from the charge/discharge control device 3 to the extra-facility power distribution network 86.

Further, Pi is the amount of power measured by the second power amount measuring device 78B, and represents the amount of power supplied from the charge/discharge control device 3 to the intra-facility power distribution network 85. When power is output from the charge/discharge control device 3 to the intra-facility power distribution network 85, Pi has a positive value.

Furthermore, Co, Cs, Qri, Qro, Qdi, Qdo, Qbi, Qbo, Pbi, Pbo, and Psi are specified as follows as power amounts calculated from Ps, Cb, Poi, Po, and Pi.

Co represents the amount of power of charge or reverse discharge from the extra-facility power distribution

network 86 to the battery package 2, and is a value stored in the non-green charge/discharge amount field 81L of the power-type-based charge/discharge history table 81. Co has a positive value when the battery package 2 is charged with power from the extra-facility power distribution network 86, and has a negative value when the battery package 2 is discharged to the extra-facility power distribution network 86.

In addition, Cs represents a power amount of charging or discharging in the opposite direction from the solar power generation facility 84 to the battery package 2, and is a value stored in the green charge/discharge amount field 81K of the power-type-based charge/discharge history table 81.

Qri represents the amount of green power (negative value) discharged from the battery package 2 to the intra-facility power distribution network 85, and is a value stored in the green → internal discharge amount field 81G of the power-type-based charge/discharge history table 81. In addition, Qro represents the amount of green power (negative value) discharged from the battery package 2 to the extra-facility power distribution network 86, and is stored in the green → external discharge amount field 81H of the power-type-based charge/discharge history table 81.

Qdi represents the amount of non-green power (negative value) ' discharged from the battery package 2 to the intra-facility power distribution network 85, and is a value stored in the non-green → internal discharge amount field 81I of the power-type-based charge/discharge history table 81. In addition, Qdo represents the amount of power (negative value) of the non-green power discharged from the battery package 2 to the extra-facility power distribution network 86, and 81I is stored in the non-green → external discharge amount field of the power-type-based charge/discharge history table 81.

Qbi represents a theoretical discharge amount including a deemed discharge discharged from the battery package 2 to the intra-facility power distribution network 85, and has a negative.value. Qbo represents a theoretical discharge amount including a deemed discharge discharged from the battery package 2 to the extra-facility power distribution network 86, and has a negative value.

Pbi represents an actual amount of power discharged from the battery package 2 to the intra-facility power distribution network 85, and has a negative value. In addition, Pbo represents an actual amount of power discharged from the battery package 2 to the extra-facility power distribution network 86, and has a negative value. Further, Psi represents the amount of power discharged from the solar power generation facility 84 to the intra-facility power distribution network 85, and has a positive value.

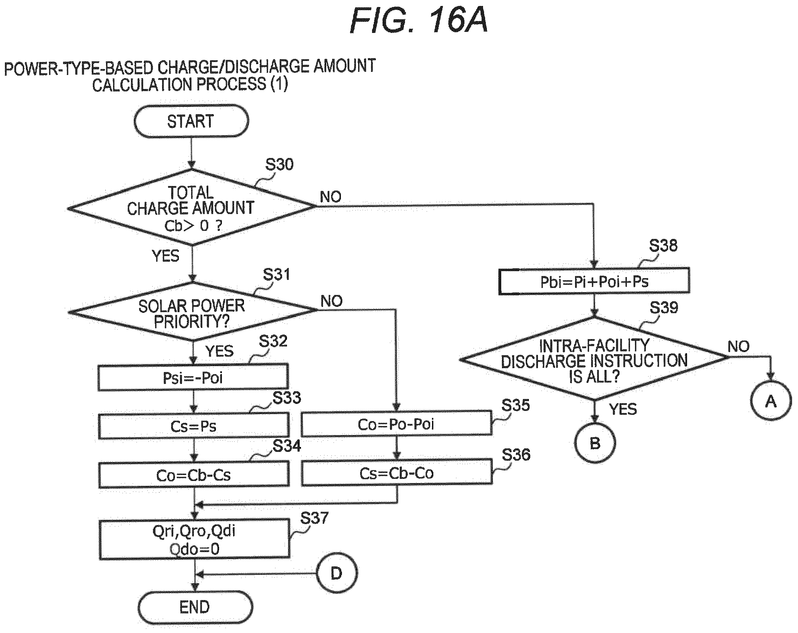

FIGS. 16A to 16D show a series of flows of the power-type-based charge/discharge amount calculation process. The charge/discharge amount adjuster 76 calculates the various amounts of power according to the processing procedure shown in FIGS. 16A to 16D.

In practice, the charge/discharge amount adjuster 76 starts the power-type-based charge/discharge amount calculation process shown in FIGS. 16A to 16D in step S21 of FIG. 15, and first determines whether or not the amount of power Cb supplied to the battery package 2 is a positive value (S30).

Obtaining a positive result in this determination means that the battery package 2 is charged. Thus, at this time, the charge/discharge amount adjuster 76 checks the value of the priority field 79D of the charge plan table 79 notified from the charge/discharge amount determination unit 75, and determines whether or not the power from the solar power generation facility 84 is set as a priority among the power from the solar power generation facility 84 and the power from the extra-facility power distribution network 86 (S31) .

When a positive result is obtained in this determination, the charge/discharge amount adjuster 76 calculates the amount of green power Psi supplied from the solar power generation facility 84 to the intra-facility power distribution network 85 (S32). The amount of power Psi can be obtained by subtracting the amount of power Poi supplied from the extra-facility power distribution network 86 to the intra-facility power distribution network 85 from the amount of power Pi output from the charge/discharge control device 3 to the intra-facility power distribution network 85.

Subsequently, the charge/discharge amount adjuster 76 calculates the amount Cs of green power supplied (charged) from the solar power generation facility 84 to the battery package 2 via the charge/discharge control device 3 (S33). The amount of power Cs can be obtained by subtracting the amount - of power Psi supplied to the intra-facility power distribution network 85 from the amount of power Ps supplied from the solar power generation facility 84 to the charge/discharge control device 3.

Next, the charge/discharge amount adjuster 76 obtains the amount of power Co charged in the battery package 2 from the extra-facility power distribution network 86 (S34). Since the amount of power Cb charged in the battery package 2 is the sum of the amount of charge (amount of power Cs) from the solar power generation facility 84 and the amount of charge (amount of power Co) from the extra-facility power distribution network 86, the amount of power. Co can be obtained by subtracting the amount of power Cs from the amount of power Cb.

Further, the charge/discharge amount adjuster 76 determines all the values of the discharge amounts Qri, Qro, Qdi, and Qdo from the battery package 2 to be "0" (S37). This is because discharging from the battery package 2 is not performed while the battery package 2 is charged. Thereafter, the charge/discharge amount adjuster 76 ends the power-type-based charge/discharge amount calculation process.

On the other hand, when a negative result is obtained in the determination in step S31, the charge/discharge amount adjuster 76 calculates the amount of power Co for charging the battery package 2 from the extra-facility power distribution network 86 (S35). Specifically, since the sum of the power Poi from the extra-facility power distribution network 86 to the intra-facility power distribution network 85 and the amount of power Co is the amount of power Po, the charge/discharge amount adjuster 76 subtracts the amount of power Poi measured by the fifth power amount measuring device 78E from the amount of power Po measured by the third power amount measuring device 78C to obtain the amount of power Co.

Subsequently, the charge/discharge amount adjuster 76 calculates the amount Cs of green power supplied from the solar power generation facility 84 to the battery package 2 and charged in the battery package 2 (S36). Specifically, since the sum of the amount of charge from the solar power generation facility 84 to the battery package 2 and the amount of charge from the extra-facility power distribution network 86 to the battery package 2 is the amount of power Cs, the charge/discharge amount adjuster 76 subtracts the amount of power Co calculated in step S35 from the amount of power Cb measured by the fourth power amount measuring device 78D to obtain the amount of power Cs.

Further, the charge/discharge amount adjuster 76 determines all the values of the discharge amounts Qri, Qro, Qdi, and Qdo from the battery package 2 to be "0" (S37), and thereafter, ends the power-type-based charge/discharge amount calculation process.

On the other hand, obtaining a negative result in the determination in step S30 means that discharging from the battery package 2 is performed, or neither charging nor discharging is performed. Thus,at this time, the charge/discharge amount adjuster 76 calculates the actual amount of power Pbi discharged from the battery package 2 to the extra-facility power distribution network 86 (S38).

Specifically, when discharging is performed from the battery package 2, there is a possibility that power is supplied to the intra-facility power distribution network 85 from the solar power generation facility 84 or the extra-facility power distribution network 86 in addition to the battery package 2. Therefore, the sum of the amount of power Poi supplied from the extra-facility power distribution network 86 to the intra-facility power distribution network 85, the amount of power (the amount of power generated by the solar power generation facility 84) Ps supplied from the solar power generation facility 84 to the charge/discharge control device 3, and the amount of power Pbi supplied from the battery package 2 to the intra-facility power distribution network 85 is the total value Pi of the amount of power supplied from the charge/discharge control device 3 to the intra-facility power distribution network 85. Therefore, the charge/discharge amount adjuster 76 calculates the power amount Pbi by obtaining the sum of the power amount Pi measured by the second power amount measuring device 78B, the power amount Poi measured by the fifth power amount measuring device 78E, and the power amount Ps measured by the first power amount measuring device 78A (since the amount of power in the discharge direction is a negative value, whereas Poi and Ps are positive values).

Subsequently, the charge/discharge amount adjuster 76 determines whether or not the discharge instruction to the intra-facility power distribution network 85 given from the charge/discharge amount determination unit 75 includes "ALL" (S39) . If a positive result is obtained in this determination, the charge/discharge amount adjuster 76 proceeds to step S59.

On the other hand, when a negative result is obtained in the determination in step S39, the charge/discharge amount adjuster 76 determines whether the amount of power Po discharged from the charge/discharge control device 3 to the extra-facility power distribution network 86 is larger than the total value (Fro + Fdo) of the discharge instruction from the battery package 2 to the extra-facility power distribution network 86 (S40).

When the current flows in the discharge direction, the value of the power amount Po is negative. When the value of the amount of power Po is large, discharge from the battery package 2 to the extra-facility power distribution network 86 and charge from the extra-facility power distribution network 86 to the battery package 2 cannot be performed at the same time. Therefore, a part of power to be originally discharged from the extra-facility power distribution network 86 to the intra-facility power distribution network 85 is replaced with a part of power to be discharged from the battery package 2 to the extra-facility power distribution network 86. Therefore, the power discharged to the alternative intra-facility power distribution network 85 is assumed to be "discharged from the battery package 2 to the extra-facility power distribution network 86", and thereafter, processing of calculating the discharged power amounts Qro and Qdo is executed.

Specifically, when a positive result is obtained in the determination in step S40, the charge/discharge amount adjuster 76 determines whether or not the value stored in the priority field 79D of the corresponding record of the charge plan table 79 notified from the charge/discharge amount determination unit 75 is "power distribution network" (S41) .

When a positive result is obtained in this determination, the charge/discharge amount adjuster 76 preferentially allocates the amount of power discharged from the battery package 2 to the amount of power Qbo of the deemed discharge to the extra-facility power distribution network 86 to calculate the amount of power Qbo (S42). Specifically, the charge/discharge amount adjuster 76 compares (Fro + Fdo) corresponding to the total amount of discharge to the extra-facility power distribution network 86 specified in the discharge instruction with the amount of power Cb discharged from the battery package 2, and sets the larger value (smaller absolute value) as the discharge amount Qbo. The charge/discharge amount adjuster. 76 calculates a value (Cb - Qbo) obtained by subtracting the discharge amount Qbo from the power amount Cb discharged from the battery package 2 as the power amount Qbi of the deemed discharge from the battery package 2 to the intra-facility power distribution network 85 (S43), and then proceeds to step S48.

On the other hand, when a negative result is obtained in the determination of step S41, the charge/discharge amount adjuster 76 preferentially allocates the discharge power amount from the battery package 2 to the power amount Qbi of the deemed discharge to the intra-facility power distribution network 85 to calculate the power amount Qbi (S44). Specifically, the charge/discharge amount adjuster 76 compares Fri + Fdi corresponding to the total amount of the discharge instruction to the intra-facility power distribution network 85 with the amount of power Cb discharged from the battery package 2, and sets the larger value (smaller absolute value) as the discharge amount Qbi. In addition, the charge/discharge amount adjuster 76 calculates a value (Cb - Qbi) obtained by subtracting the discharge amount Qbi from the amount of power Cb discharged from the battery package 2 as the amount of power Qbo of the deemed discharge from the battery package 2 to the extra-facility power distribution network 86 (S45), and then proceeds to step S48.

On the other hand, obtaining a negative result in the determination in step S40 means that the deemed discharge from the battery package 2 to the extra-facility power distribution network 86 is not performed. Thus, at this time, the charge/discharge amount adjuster 76 sets the amount of power Po discharged from the charge/discharge control device 3 to the extra-facility power distribution network 86 as the amount of discharge Qbo from the battery package 2 to the extra-facility power distribution network 86 (S46). In addition, the charge/discharge amount adjuster 76 sets the discharge amount Pbi from the battery package 2 to the intra-facility power distribution network 85 as Qbi (S47).

Subsequently, the charge/discharge amount adjuster 76 determines whether the value of the type priority information stored in the type priority field 80G (FIG. 13) of the corresponding record in the discharge plan table 80 notified from the charge/discharge amount determination unit 75 is "green" (S48).

When a positive result is obtained in this determination, the charge/discharge amount adjuster 76 preferentially determines the discharge amount of the green power among the storage power stored in the battery package 2.

Specifically, the charge/discharge amount adjuster 76 first compares the amount of discharge Fro from the green power stored in the battery package 2 to the extra-facility power distribution network 86 with an actual amount of discharge (including deemed discharge) Qbo from the battery package 2 to the extra-facility power distribution network 86, and calculates the larger value (the smaller absolute value) as Qro (S49) and a value (Qbo-Qro) obtained by subtracting Qro from Qbo as Qdo (S50).

The charge/discharge amount adjuster 76 compares a value Fri specified in the discharge instruction to the intra-facility power distribution network 85 from the power amount of the storage power derived from the green power stored in the battery package 2 with the actual discharge amount (including the deemed discharge) Qbi from the battery package 2 to the intra-facility power distribution network 85, and calculates the larger value (the smaller absolute value) as Qri (S51) and a value (Qbi - Qri) obtained by subtracting Qri from Qbi as Qdi (S52).

Further, since the battery package 2 is not charged in this case, the charge/discharge amount adjuster 76 sets both the values of the power amount Cs and the power amount Co to "0" (S53), and then ends the power-type-based charge/discharge amount calculation process.

On the other hand, when a negative result is obtained in the determination of step S48, the charge/discharge amount adjuster 76 preferentially determines the discharge amount of the storage power derived from the non-green power among the storage power stored in the battery package 2.

Specifically, first, the charge/discharge amount adjuster 76 compares the discharge instruction value Fdo to the extra-facility power distribution network 86 from the power amount of the storage power derived from the non-green power stored in the battery package 2 with the actual discharge amount (including the deemed discharge) Qbo from the battery package 2 to the extra-facility power distribution network, and calculates the larger value (the smaller absolute value) as Qdo (S54) and the value (Qbo - Qdo) obtained by subtracting Qdo from Qbo as Qro (S55).

The charge/discharge amount adjuster 76 compares a value Fdi specified in the discharge instruction to the intra-facility power distribution network 85 from the power amount of the storage power derived from the non-green power stored in the battery package 2 with the actual discharge amount (including the deemed discharge) Qbi from the battery package 2 to the intra-facility power distribution network 85, and calculates the larger value (the smaller absolute value) as Qdi (S56) and a value (Qbi - Qdi) obtained by subtracting Qdi from Qbi as Qri (S57).

Further, since the battery package 2 is not charged even in this case, the charge/discharge amount adjuster 76 sets both the values of the power amount Cs and the power amount Co to "0" (S58), and then ends the power-type-based charge/discharge amount calculation process.

On the other hand, when a positive result is obtained in the determination in step S39, the charge/discharge amount adjuster 76 calculates a value (Cs - Pbi) obtained by subtracting the discharge amount Pbi to the intra-facility power distribution network 85 from the discharge amount Cb of the battery package 2 as the discharge amount Pbo from the battery package 2 to the extra-facility power distribution network 86 (S59).

Subsequently, the charge/discharge amount adjuster 76 confirms whether or not the value stored in the priority field 79D (FIG. 12) of the corresponding record in the charge plan table 79 notified from the charge/discharge amount determination unit 75 is "power distribution network" (S60).

When a positive result is obtained in this confirmation (that is, when the discharge to the intra-facility power distribution network 85 is prioritized), the power discharged from the battery package 2 to the intra-facility power distribution network 85 does not include the deemed discharge to the extra-facility power distribution network 86. Therefore, when a positive result is obtained in the confirmation of step S60, the charge/discharge amount adjuster 76 determines whether the discharge instruction of "ALL" is given to the green power (S61).

When a positive result is obtained in this determination, the charge/discharge amount adjuster 76 determines whether or not the value stored in the type priority field 80G of the corresponding record of the discharge plan table 80 (FIG. 13) notified from the charge/discharge amount determination unit 75 is "green" (that is, whether or not green power should be prioritized) (S62) .

When a positive result is obtained in this determination, the charge/discharge amount adjuster 76 preferentially determines the discharge amount of the green power stored in the battery package 2 as the discharge amount from the battery package 2.

. Specifically, since the discharge instruction for the green power is "ALL", the charge/discharge amount adjuster 76 sets the total amount of power Pbi discharged from the battery package 2 to the intra-facility power distribution network 85 as Qri, and sets Qdi as "0" (S63).

The charge/discharge amount adjuster 76 compares the discharge amount Fro specified by the discharge instruction to the extra-facility power distribution network 86 with respect to the storage amount of the green power stored in battery package 2, and the actual discharge amount Pbo to the extra-facility power distribution network, and calculates the larger value (the smaller absolute value) as Qro and a value obtained by subtracting Qro from Pbo as Qdo (S64).

Since the battery package 2 is not charged, the charge/discharge amount adjuster 76 sets both Co and Cs to "0" (S65). Thereafter, the charge/discharge amount adjuster 76 ends the power-type-based charge/discharge amount calculation process.

When a negative result is obtained in the determination in step S62, the charge/discharge amount adjuster 76 preferentially determines the discharge amount of the non-green power stored in battery package 2 as the discharge amount from the battery package 2.

Specifically, the charge/discharge amount adjuster 76 compares the amount of discharge Fdi specified in the discharge instruction for the non-green power stored in the battery package 2 with the amount of power Pbi discharged from the battery package 2 to the intra-facility power distribution network 85, and calculates the larger value (the smaller absolute value) as Qdi and a value (Pbi - Qdi) obtained by subtracting Qdi from Pbi as Qri (S66).

The charge/discharge amount adjuster 76 compares the discharge amount Fdo specified by the discharge instruction to the extra-facility power distribution network 86 with respect to the storage amount of the non-green power stored in battery package 2 with the actual discharge amount Pbo to the extra-facility power distribution network 86, and calculates the larger value (the smaller absolute value) as Qdo and a value obtained by subtracting Qdo from Pbo as Qro (S67) .

Furthermore, since the battery package 2 is not charged, the charge/discharge amount adjuster 76 sets both Co and Cs to "0" (S68). Thereafter, the charge/discharge amount adjuster 76 ends the power-type-based charge/discharge amount calculation process.

On the other hand, when a negative result is obtained in the determination of step S61, this means that the discharge instruction of "ALL" is given to the non-green power stored in the battery package 2. Thus, at this time, the charge/discharge amount adjuster 76 determines whether the priority type stored in the type priority field 80G (FIG. 13) of the corresponding record of the discharge plan table 80 notified from the charge/discharge amount determination unit 75 is "green" (S69).

When a positive result is obtained in this determination, the charge/discharge amount adjuster 76 preferentially determines the discharge amount of the green power stored in the battery package 2 as the discharge amount from the battery package 2.

Specifically, the charge/discharge amount adjuster 76 compares the discharge amount Fri specified in the discharge instruction for the green power from the battery package 2 to the intra-facility power distribution network 85 with the actual discharge amount Pbi of the green power from the battery package 2 to the intra-facility power distribution network 85, and calculates the larger value (the smaller absolute value) as Qri and a value (Pbi - Qri) obtained by subtracting Qri from Pbi as Qdi (S70).

The charge/discharge amount adjuster 76 compares the discharge amount Fro specified by the discharge instruction to the extra-facility power distribution network 86 with respect to the storage amount of the green power stored in battery package 2 with the actual discharge amount Pbo of the green power to the extra-facility power distribution network 86, and calculates the larger value (the smaller absolute value) as Qro and a value (Pbo - Qro) obtained by subtracting Qro from Pbo as Qdo (S71).

Furthermore, since the battery package 2 is not charged, the charge/discharge amount adjuster 76 sets both Co and Cs to "0" (S72). Thereafter, the charge/discharge amount adjuster 76 ends the power-type-based charge/discharge amount calculation process.

When a negative result is obtained in the determination in step S69, the charge/discharge amount adjuster 76 preferentially determines the discharge amount of the non-green power stored in battery package 2 as the discharge amount from the battery package 2.

Specifically, since "ALL" is specified in the discharge instruction for the non-green power stored in the battery package 2, the charge/discharge amount adjuster 76 sets the total amount of power Pbi discharged from the battery package 2 to the intra-facility power distribution network as Qdi, and sets Qri to "0" (S73).

The charge/discharge amount adjuster 76 compares the discharge amount Fdo specified by the discharge instruction to the extra-facility power distribution network 86 with respect to the storage amount of the non-green power in battery package 2 with the discharge amount Pbo of the non-green power actually discharged from the battery package 2 to the extra-facility power distribution network 86, and sets the larger value (the smaller absolute value) as Qdo and a value (Pbo - Qdo) obtained by subtracting Qdo from Pbo as Qro (S74).

Furthermore, since the battery package 2 is not charged, the charge/discharge amount adjuster 76 sets both Co and Cs to "0" (S75). Thereafter, the charge/discharge amount adjuster 76 ends the power-type-based charge/discharge amount calculation process.

On the other hand, when a negative result is obtained in the determination of step S60, in order to prioritize the discharge to the extra-facility power distribution network 86, the charge/discharge amount adjuster 76 compares (Fro + Fdo), which is the sum of the discharge amounts specified in the discharge instruction from the battery package 2 to the extra-facility power distribution network 86, with the discharge amount Cb of the battery package 2, and sets the larger value (the smaller absolute value) as the discharge amount Qbo to the extra-facility power distribution network 86 (S76). Here, the reason why the actual amount of discharge Po to the extra-facility power distribution network 86 is not used as Qbo is that there is a possibility that the deemed discharge is performed from the battery package 2 to the extra-facility power distribution network 86. The charge/discharge amount adjuster 76 calculates a value (Cb - Qbo) obtained by subtracting Qbo from Cb as the discharge amount Qbi from the battery package 2 to the extra-facility power distribution network 86 (S77).

Next, the charge/discharge amount adjuster 76 confirms whether or not the discharge amount specified in the discharge instruction to the intra-facility power distribution network 85 from the storage amount of the green power stored in the battery package 2 is "ALL" (S78). If a positive result is obtained in this determination, the charge/discharge amount adjuster 76 checks whether or not the value stored in the type priority field 80G (FIG. 13) of the corresponding record in the discharge plan table 80 notified from the charge/discharge amount determination unit 75 is "green" (S79).

When a positive result is obtained in this determination, the charge/discharge amount adjuster 76 preferentially determines the discharge amount of the green power stored in the battery package 2 as the discharge amount from the battery package 2.

Specifically, the charge/discharge amount adjuster 76 first compares the discharge amount Fro specified in the discharge instruction to the extra-facility power distribution network 86 from the storage amount of the green power stored in the battery package 2 with the theoretical discharge amount (including the deemed discharge) Qbo from the battery package 2 to the extra-facility power distribution network 86, and sets the larger value (the smaller absolute value) as Qro (S80). The charge/discharge amount adjuster 76 calculates a value (Qbo - Qro) obtained by subtracting Qro from Qbo as Qdo (S81).

Further, since the discharge amount specified in the discharge instruction for the green power stored in the battery package 2 to the extra-facility power distribution network 86 is "ALL", the charge/discharge amount adjuster 76 sets the total amount of the discharge amount Qbi to the intra-facility power distribution network 85 to Qri (S82), and sets Qdi to "0" (S83). Further, since the battery package 2 is not charged, the charge/discharge amount adjuster 76 sets both the values of Co and Cs to "0" (S84). Thereafter, the charge/discharge amount adjuster 76 ends the power-type-based charge/discharge amount calculation process.

When a negative result is obtained in the determination in step S79, the charge/discharge amount adjuster 76 preferentially determines the discharge amount of the non-green power stored in battery package 2 as the discharge amount from the battery package 2.

Specifically, the charge/discharge amount adjuster 76 first compares the discharge amount Fdo specified in the discharge instruction to the extra-facility power distribution network 86 from the storage amount of the non-green power stored in the battery package 2 with the theoretical discharge amount (including the deemed discharge) Qbo from the battery package 2 to the extra-facility power distribution network 86, and sets the larger value (the smaller absolute value) as Qdo (S85). The charge/discharge amount adjuster 76 calculates a value (Qbo-Qdo) obtained by subtracting Qdo from Qbo as Qro (S86).

Further, since non-green power is prioritized also for the discharge to the intra-facility power distribution network 85, the charge/discharge amount adjuster 76 sets the larger value (the smaller absolute value) of the discharge amount Fdi specified in the discharge instruction to the intra-facility power distribution network 85 from the storage amount of the non-green power in the battery package 2 and the actual discharge amount Qbi to the intra-facility power distribution network 85 as the discharge amount Qdi of the non-green power to the intra-facility power distribution network 85 (S87), and sets a value (Qbi - Qdi) obtained by subtracting Qdi from Qbi as Qri (S88).

Further, since the battery package 2 is not charged, the charge/discharge amount adjuster 76 sets both the values of Co and Cs to "0" (S89). Thereafter, the charge/discharge amount adjuster 76 ends the power-type-based charge/discharge amount calculation process.

On the other hand, obtaining a negative result in the determination in step S78 means that the discharge amount specified in the discharge instruction for the non-green power from the battery package 2 to the intra-facility power distribution network 85 is "ALL". In this case, the charge/discharge amount adjuster 76 confirms whether or not the value stored in the type priority field 80G of the corresponding record of the discharge plan table 80 notified from the charge/discharge amount determination unit 75 is "green" (S90).

When a positive result is obtained in this confirmation, the charge/discharge amount adjuster 76 preferentially determines the discharge amount of the green power stored in the battery package 2 as the discharge amount from the battery package 2.

Specifically, the charge/discharge amount adjuster 76 compares the discharge amount Fro specified in the discharge instruction for the green power from the battery package 2 to the extra-facility power distribution network 86 with the theoretical discharge amount (including the deemed discharge) Qbo from the battery package 2 to the extra-facility power distribution network 86, and sets the larger value (the smaller absolute value) as Qro (S91). The charge/discharge amount adjuster sets a value (Qbo - Qro) obtained by subtracting Qro from Qbo as Qdo (S92).

Further, since green power is prioritized also for the discharge from the battery package 2 to the intra-facility power distribution network 85, the larger value (the smaller absolute value) of a discharge amount Fri specified in the discharge instruction from the battery package 2 to the intra-facility power distribution network 85 and a discharge amount Qbi from the actual battery package 2 to the intra-facility power distribution network 85 is set as a discharge amount Qri of green power from the battery package 2 to the intra-facility power distribution network 85 (S93), and a value (Qbi - Qri) obtained by subtracting Qri from Qbi is calculated as Qdi (S94).

Further, since the battery package 2 is not charged, the charge/discharge amount adjuster 76 sets both the values of Co and Cs to "0" (S95). Thereafter, the charge/discharge amount adjuster 76 ends the power-type-based charge/discharge amount calculation process.

When a negative result is obtained in the confirmation of step S90, the charge/discharge amount adjuster 76 preferentially determines the discharge amount of the non-green power stored in the battery package 2 as the discharge amount from the battery package 2.

Specifically, the charge/discharge amount adjuster 76 compares the discharge amount Fdo specified in the discharge instruction for the non-green power from the battery package 2 to' the extra-facility power distribution network 86 with the theoretical discharge amount (including the deemed discharge) Qbo from the battery package 2 to the extra-facility power distribution network 86, and sets the larger value (the smaller absolute value) as Qdo (S96). The charge/discharge amount adjuster 76 calculates a value (Qbo-Qdo) obtained by subtracting Qdo from Qbo as Qro (S97).

Further, since the discharge amount specified in the discharge instruction for the non-green power from the battery package 2 to the extra-facility power distribution network 86 is "ALL", the charge/discharge amount adjuster 76 sets the total amount of the discharge amount Qbi to the intra-facility power distribution network 85 to Qdi (S98), and sets Qri to "0" (S99).

Further, since the battery package 2 is not charged, the charge/discharge amount adjuster 76 sets both the values of Co and Cs to "0" (S100). Thereafter, the charge/discharge amount adjuster 76 ends the power-type-based charge/discharge amount calculation process.

(1-4) Configuration and processing of the charge/discharge control server

(1-4-1) Configuration of the charge/discharge control server

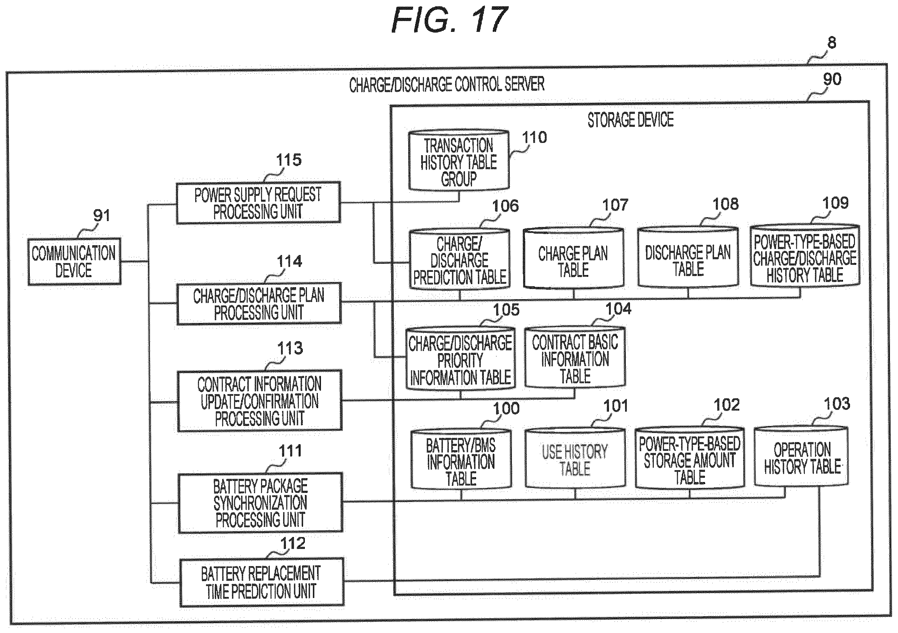

FIG. 17 shows a logical configuration of the charge/discharge control server 8. The charge/discharge control server 8 is configured of a general-purpose server device including a CPU and a memory (not shown) as hardware, and the storage device 90 and the communication device 91 shown in FIG. 17.

The CPU is a processor that controls the operation of the entire charge/discharge control server 8. The memory is configured of, for example, a volatile semiconductor memory, and is used as a work memory of the CPU.

The storage device 90 is configured of, for example, a nonvolatile large-capacity storage device such as a hard disk device or a solid state drive (SSD), and is used to hold various programs and various data to be stored for a long period of time. A battery/BMS information table 100, a use history table 101, a power-type-based storage amount table 102, an operation history table 103, a contract basic information table 104, a charge/discharge priority information table 105, a charge/discharge prediction table 106, a charge plan table 107, a discharge plan table 108, a power-type-based charge/discharge history table 109, and a transaction history table group 110, which will be described later, are also stored and held in the storage device 90.

The communication device 91 is configured of, for example, a network interface card (NIC), a wireless communication device, and the like, and performs protocol control at the time of communication with each battery package 2 via the wireless base station 4 (FIG. 1) or at the time of communication with each charge/discharge control device 3. via the network 11.

The battery package synchronization processing unit 111, the battery replacement time prediction unit 112, the contract information update/confirmation processing unit 113, the charge/discharge plan processing unit 114, and the power supply request processing unit 115 are functional units implemented by the CPU executing a program loaded from the storage device 90 onto the memory.

The battery package synchronization processing unit 111 has a function of acquiring data held by each of the battery packages 2 from each of the battery packages 2 at regular intervals via the communication device 91, and registering and managing the acquired data in the battery/BMS information table 100, the use history table 101, the power-type-based storage amount table 102, and the operation history table 103.

The battery replacement time prediction unit 112 also has a function of estimating the current deterioration state of each of the battery modules 31 (FIG. 4) housed in the battery package 2 based on the operation history information of each of the battery packages 2 stored in the operation history table 103 and predicting the time when the battery module 31 needs to be replaced. For the battery module 31 whose replacement time is close, the battery replacement time prediction unit 112 transmits a notification indicating that an alert for requesting replacement of the battery module 31 is to be displayed to the contract management terminal 10 (FIG. 1).

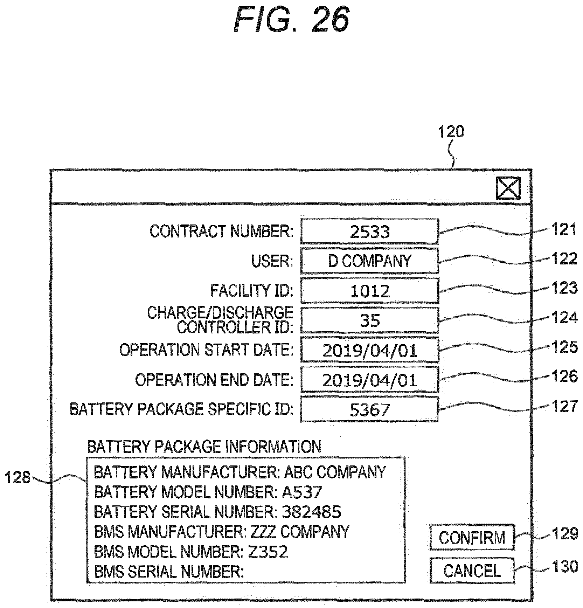

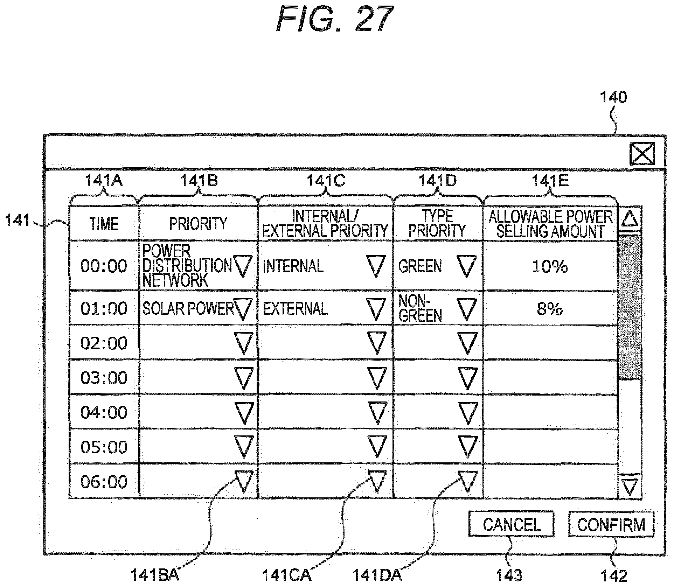

The contract information update/confirmation processing unit 113 has a function of causing the contract management terminal 10 to display a contract information input/confirmation screen 120 to be described later with reference to FIG. 26 and a charge/discharge priority information input/confirmation screen 140 to be described later with reference to FIG. 27 for inputting or updating the contract content of the contract concluded between the user and the charge/discharge management provider 9 regarding use of the battery package 2 and confirming the contract content. In addition, the contract information update/confirmation processing unit 113 acquires information regarding the contract registered using the contract information input/confirmation screen 120 and information regarding priority of charging and discharging for each power type in the battery package 2 from the contract management terminal 10 and stores the information in the contract basic information table 104 and the charge/discharge priority information table 105.

In addition, the charge/discharge plan processing unit 114 has a function of periodically preparing a charge plan and a discharge plan for each battery package 2, registering the prepared charge plan and discharge plan in the charge plan table 107 and the discharge plan table 108 in the storage device 90, and notifying the charge/discharge control device 3 to which the corresponding battery package 2 is connected of the charge plan and the discharge plan. The charge/discharge control device 3 stores and manages the charge plan and the discharge plan for the corresponding battery package 2 notified from the charge/discharge plan processing unit 114 in the charge plan table 79 (FIG. 12) and the discharge plan table 80 (FIG. 13) as described above. In addition, the charge/discharge plan processing unit 114 periodically communicates with each charge/discharge control device 3 via the communication device 91, acquires data of the power-type-based charge/discharge history table 81 (FIG. 14) held by the charge/discharge control device 3, and registers and manages the same data in the power-type-based charge/discharge history table 109 in the storage device 90.

The power supply request processing unit 115 has a function of, in cooperation with the charge/discharge plan processing unit 114, correcting a charge plan and a discharge plan for the battery package 2 that are necessary so that power of the requested power type and power amount can be transmitted (discharged) from the battery package 2 to the extra-facility power distribution network 86 when a power supply request is given from the power supply requesting terminal 6 (FIG. 1) of the power consumer 5 (FIG. 1).

In practice, in the case of the battery charge/discharge management system 1 according to the present embodiment, the power consumer 5 can request the charge/discharge control server 8 to supply power by specifying a time zone, a necessary amount of power, and a type of power (green power or non-green power). Then, the power supply request processing unit 115 of the charge/discharge control server 8 that has received the power supply request modifies the discharge plan and/or the charge plan for any one or more battery packages 2 so as to transmit the requested power of the requested power type to the extra-facility power distribution network 86 by the requested power amount in the requested time zone, and transmits the modified discharge plan and/or charge plan to the charge/discharge control device 3 connected to the battery package 2.

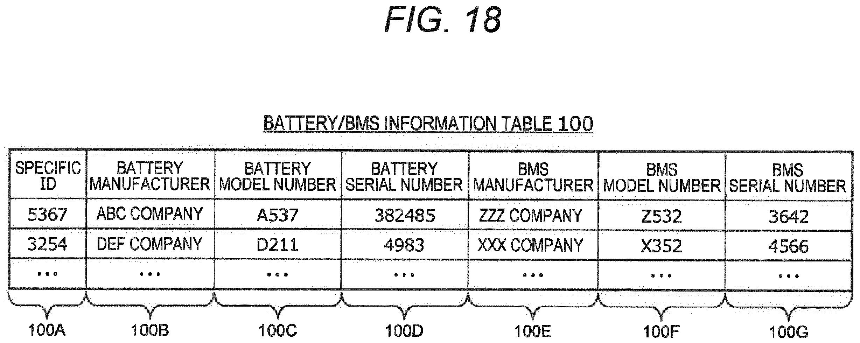

On the other hand, the battery/BMS information table 100 is a table used to centrally manage the information (hereinafter, this is referred to as battery/BMS information) on the battery module 31 (FIG. 4) and the BMS 25 (FIG. 4) in the battery package 2 collected from each battery package 2 by the battery package synchronization processing unit 111. As shown in FIG. 18, the battery/BMS information table 100 includes a specific ID field 100A, a battery manufacturer field 100B, a battery model number field 100C, a battery serial number field 100D, a BMS manufacturer field 100E, a BMS model number field 100F, and a BMS serial number field 100G. In the battery/BMS information table 100 shown in FIG. 18, one record (row) corresponds to the battery/BMS information 50 (FIG. 5) acquired from one battery package 2.

The specific ID 100A field stores the battery package specific ID of the battery package 2 assigned to the corresponding battery package 2. Corresponding information among the manufacturer, the model number, and the serial number of the battery module 31 (FIG. 4) housed in the battery package 2 is stored in each of the battery manufacturer field 100B, the battery model number field 100C, and the battery serial number field 100D. In the BMS manufacturer field 100E, the BMS model number field 100F, and the BMS serial number field 100G, corresponding information among the manufacturer, the model number, and the serial number of the BMS 25 (FIG. 4) mounted on the battery package 2 is stored.

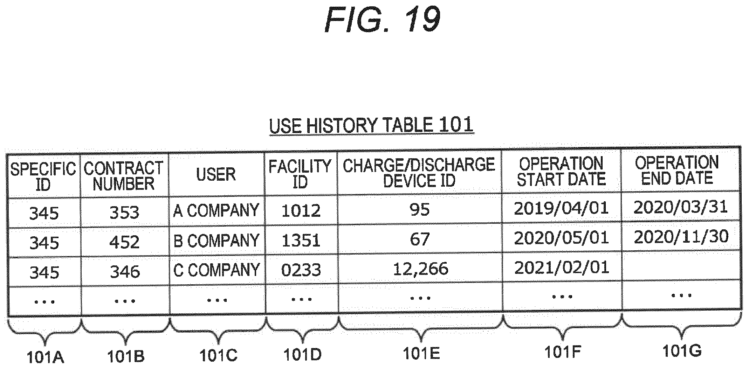

The use history table 101 is a table used for centrally managing the use history information of the battery packages 2 collected from the battery packages 2 by the battery package synchronization processing.unit 111, and includes a specific ID field 101A, a contract number field 101B, a user field 101C, a facility ID field 101D, a charge/discharge device ID field 101E, an operation start date field 101F, and an operation end date field 101G as shown in FIG. 19. In the use history table 101 shown in FIG. 19, one record (row) corresponds to one piece of use history information of one battery package 2 collected from one battery package 2.

The specific ID field 101A stores a battery package specific ID of the corresponding battery package 2. In the contract number field 101B, the user field 101C, the facility ID field 101D, the charge/discharge device ID field 101E, the operation start date field 101F, and the operation end date field 101G, the same information as the information stored in the same contract number field 52A, the user field 52B, the facility ID field 52C, the charge/discharge device ID field 52D, the operation start date field 52E, or the operation end date field 52F of the use history table 52 described above with respect to FIG. 6 held by the package controller 26 (FIG. 5) of the battery package 2 is stored.

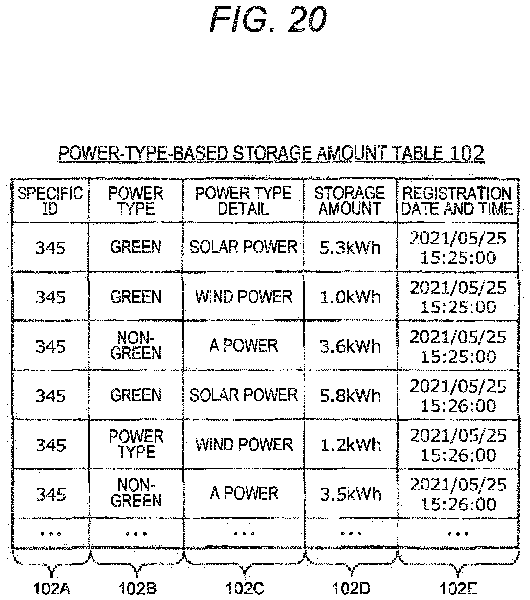

The power-type-based storage amount table 102 is a table used to centrally manage the storage amount for each power type stored in the battery package 2 collected by the battery package synchronization processing unit 111 (FIG. 17) from each battery package 2, and includes a specific ID field 102A, a power type field 102B, a power type detail field 102C, a storage amount field 102D, and a registration date and time field 102E as shown in FIG. 20. In the power-type-based storage amount table 102 of FIG. 20, one record (row) corresponds to the storage amount of power of one power type in the battery package 2 collected from one battery package 2.

The specific ID of the corresponding battery package 2 is stored in the specific ID field 102A. In the power type field 102B, the power type detail field 102C, the storage amount field 102D, and the registration date and time field 102E, the same information as the information stored in the same power type field 53A, the power type detail field 53B, the storage amount field 53C, or the registration date and time field 53D of the power-type-based storage amount table 53 described above with reference to FIG. 7 held by the package controller 26 of the battery package 2 (that is, the information acquired from the power-type-based storage amount table 53 of the battery package 2) is stored.

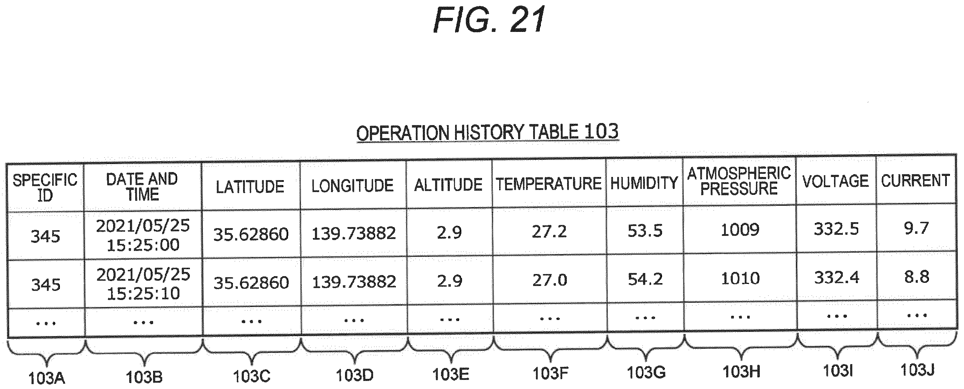

The operation history table 103 is a table used for centrally managing the operation history information of the battery packages 2 collected from the battery packages 2 by the battery package synchronization processing unit 111, and includes a specific ID field 103A, a date and time field 103B, a latitude field 103C, a longitude field 103D, an altitude field 103E, a temperature field 103F, a humidity field 103G, an atmospheric pressure field 103H, a voltage field 103I, and a current field 103J as shown in FIG. 21. In the operation history table 103 shown in FIG. 21, one record (row) corresponds to one piece of use history information of the battery package 2 collected from one battery package 2.

The specific ID field 103A stores a battery package specific ID of the corresponding battery package 2. In the date and time field 103B, the latitude field 103C, the longitude field 103D, the altitude field 103E, the temperature field 103F, the humidity field 103G, the atmospheric pressure field 103H, the voltage field 103I, and the current field 103J, the same information as the information stored in the same date and time field 55A, the latitude field 55B, the longitude field 55C, the altitude field 55D, the temperature field 55E, the humidity field 55F, the atmospheric pressure field 55G, the voltage field 55H, or the current field 55I of the operation history table 55 described above with respect to FIG. 8 held by the package controller 26 of the battery package 2 is stored.

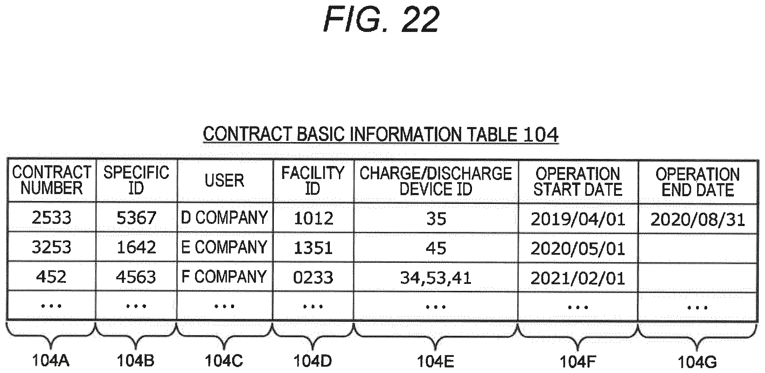

The contract basic information table 104 is a table used to centrally manage the basic information (hereinafter, this is referred to as contract basic information) of the contract concluded between the user and the charge/discharge management provider 9 (FIG. 1) regarding the use of the battery package 2, which is acquired by the contract information update/confirmation processing unit 113 from the contract management terminal 10 (FIG. 1). As shown in FIG. 22, the contract basic information table 104 includes a contract number field 104A, a specific ID field 104B, a user field 104C, a facility ID field 104D, a charge/discharge device ID field 104E, an operation start date field 104F, and an operation end date field 104G. In the contract basic information table 104, one record (row) corresponds to contract basic information of one contract concluded by the charge/discharge management provider 9 with one user.

Then, an identification number unique to the contract assigned to the corresponding contract is stored in the contract number field 104A, and a battery package specific ID of the battery package 2 used by the user who has concluded the contract with the charge/discharge management provider 9 is stored in the specific ID field 104B. In addition, the user name of the user is stored in the user field 104C, and an identifier (facility ID) unique to the facility provided to the facility in which the battery package 2 is installed is stored in the facility ID field 1040.

Further, the charge/discharge device ID field 104E stores an identifier (charge/discharge device ID) unique to the charge/discharge control device 3 connected to the battery package 2, the identifier being given to the charge/discharge control device 3. Further, the operation start date and the operation end date of the battery package 2 are stored in the operation start date field 104F and the operation end date field 104G, respectively.

Therefore, in the case of the example of FIG. 22, the contract with the contract number "2533" is a contract in which "D company" connects and uses the battery package 2 with the battery package specific ID "5367" with the charge/discharge control device 3 with the charge/discharge device ID "35" in the facility with the facility ID "1012", and it is indicated that the operation start date of the battery package 2 was "2019/04/01" and the operation end date was "2020/08/31".

When the contract information stored in the contract basic information table 104 is updated, the contract information update/confirmation processing unit 113 updates the contract basic information table 104 accordingly, communicates with the corresponding battery package 2 via the communication device 91 (FIG. 17), and updates corresponding information (contract number, user name, facility ID, charge/discharge device ID, operation start date, and/or operation end date) of the corresponding use history information among the use history information stored in the use history table 52 (FIG. 6) held by the battery package 2. With this processing, the contract basic information stored in the contract basic information table 104 and the use history information stored in the use history table 52 are always maintained to have the same contents.

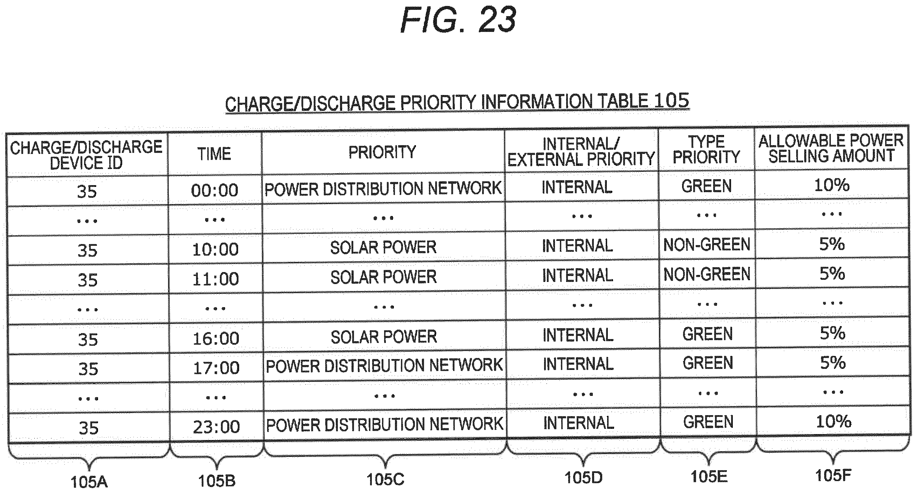

The charge/discharge priority information table 105 is a table used to store and hold information (hereinafter, this is referred to as priority information of the time zone) for each time zone related to various priorities set in advance using a charge/discharge priority information input/confirmation screen 140 described later with respect to FIG. 27, and includes a charge/discharge device ID field 105A, a time field 105B, a priority field 105C, an internal/external priority field 105D, a type priority field 105E, and an allowable power selling amount field 105F as shown in FIG. 23. In the charge/discharge priority information table 105 shown in FIG. 23, one record (row) corresponds to priority information in one time zone.

The charge/discharge device ID of the corresponding charge/discharge control device 3 is stored in the charge/discharge device ID field 105A, and the start time of the time zone to which the priority information is to be applied is stored in the time field 105B.

In addition, the priority field 105C stores information indicating which of the planned values of the charge capacities is to be prioritized when the battery package 2 is charged from both the solar power generation facility 84 (FIG. 11) and the extra-facility power distribution network 86 (FIG. 11) in the same time zone according to the charge plan. FIG. 23 shows an example in which "solar power" is stored in a case where priority is given to power from the solar power generation facility 84, and "power distribution network" is stored in a case where priority is given to power from the extra-facility power distribution network 86.

The internal/external priority field 105D stores information indicating which of the extra-facility power distribution network 86 and the intra-facility power distribution network 85 should be preferentially discharged in a case where the amount of power specified in the discharge plan cannot be discharged from the battery package 2 to both the extra-facility power distribution network 86 and the intra-facility power distribution network 85 when discharging from the battery package 2 to both the extra-facility power distribution network 86 and the intra-facility power distribution network 85 in the same time zone according to the discharge plan. FIG. 23 shows an example in which "external" is stored in a case where priority is given to the extra-facility power distribution network 86, and "internal" is stored in a case where priority is given to the intra-facility power distribution network 85.

Further, when both green power and non-green power are discharged from one battery package 2 in the same time zone according to the discharge plan, information indicating which of the green power and the non-green power should be preferentially discharged when the amount of power specified in the discharge plan cannot be discharged is stored in the type priority field 105E. Since the battery package 2 cannot store the green power and the non-green power separately, this information is information indicating whether the discharged power should be the green power or the non-green power in such a situation. FIG. 23 shows an example in which "green" is stored when green power is to be prioritized, and "non-green" is stored when non-green power is to be prioritized.

The allowable power selling amount field 105F stores information indicating what percentage of the margin amount of the storage amount of the green power stored in the battery package 2 is allowed to be provided when the discharge request of the green power is given from the power consumer 5 (FIG. 1). For example, when 10% of the margin amount of the storage amount of the green power stored in the battery package 2 is allowed, information of "10%" is stored in the allowable power selling amount field 105F.

Therefore, in the case of the example of FIG. 23, for the battery package 2 connected to the charge/discharge control device 3 assigned with the charge/discharge device ID of "35", it is indicated that, in the time zone starting from "00:00", the "power distribution network (extra-facility power distribution network 86)" should be prioritized when the amount of power specified in the charge plan cannot be charged from the solar power generation facility 84 and the extra-facility power distribution network 86, and the "internal (intra-facility power distribution network 85)" should be prioritized when the amount of power specified in the discharge plan cannot be discharged from the battery package 2 to both the extra-facility power distribution network 86 and the intra-facility power distribution network 85.

In addition, it is indicated that when both the green power and the non-green power of the power amount specified in the discharge plan cannot be discharged, priority should be given to "green (green power)", and power selling is allowed up to 10% of the margin of the storage amount of the green power stored in the battery package 2.

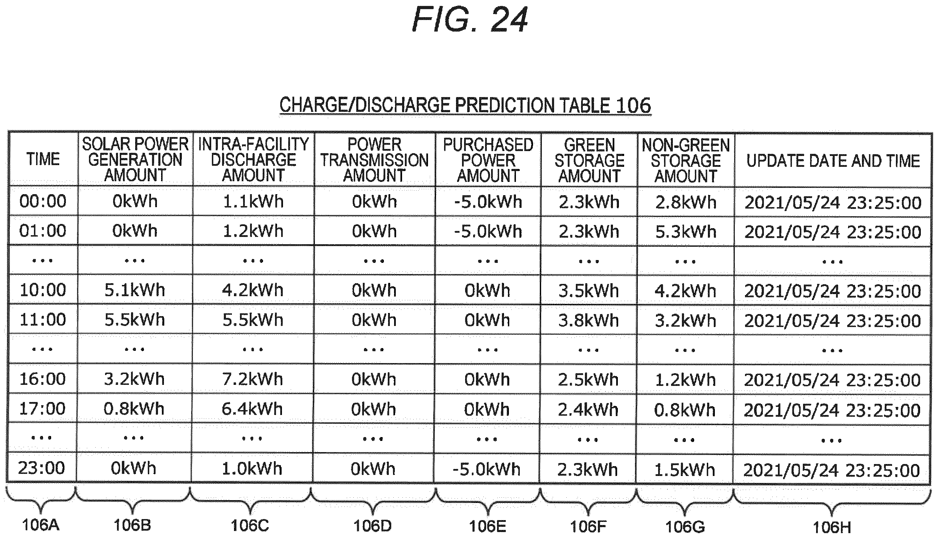

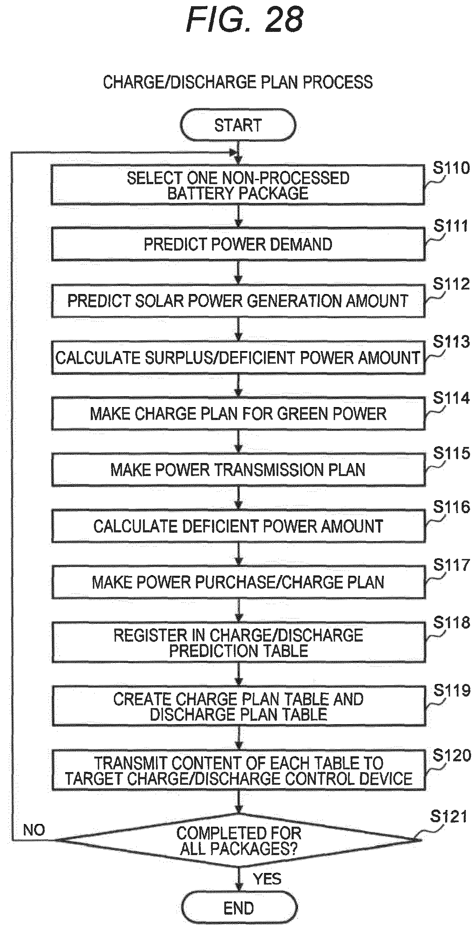

The charge/discharge prediction table 106 is a table used to store and hold information (hereinafter, these are collectively referred to as charge/discharge prediction information) such as the prediction result of the power demand for each time zone, the prediction result of the solar power generation amount, the power transmission plan, the power purchase/charge plan, and the like calculated by the charge/discharge plan processing unit 114 (FIG. 7) in the charge/discharge plan processing described later with reference to FIG. 28. As shown in FIG. 24, the charge/discharge prediction table 106 includes a time field 106A, a solar power generation amount field 106B, an intra-facility discharge amount field 106C, a power transmission amount field 106D, a power purchase amount field 106E, a green storage.amount field 106F, a non-green storage amount field 106G, and an update date and time field 106H. In the charge/discharge prediction table 106, one record (row) corresponds to the charge/discharge prediction information in the corresponding time zone predicted by the charge/discharge plan processing unit 114.

Then, the start time of, the time zone corresponding to the charge/discharge prediction information is stored in the time field 106A. In addition, the power generation amount (solar power generation amount) of the solar power generation facility 84 (FIG. 11) predicted in the time zone is stored in the solar power generation amount field 106B, and the power amount (predicted value of the power demand in the facility) to be discharged to the intra-facility power distribution network 85 predicted in the time zone is stored in the intra-facility discharge amount field 106C.

In addition, a discharge amount of power to be discharged from the battery package 2 in the time zone specified in the discharge plan is stored in the power transmission amount field 106D, and a deficient amount of power to be purchased via the extra-facility power distribution network 86 in the time zone according to the charge plan and the discharge plan is stored in the power purchase amount field 106E. The green storage amount field 106F stores the amount of green power stored in the battery package 2 at the start time of the time zone, and the non-green storage amount field 106G stores the amount of non-green power stored in the battery package 2 at the start time of the time zone. Further, the update date and time field 106H stores the date and time when the record is registered or updated in the charge/discharge prediction table 106.

Therefore, in the case of the example of FIG. 24, for example, in the time zone of "00:00", the power generation amount in the solar power generation facility 84 is predicted to be "0 kWh", the amount of power required by the intra-facility power distribution network 85 is predicted to be "1.1 kWh", the deficient amount of power is predicted to be "-5.0kWh", and the power transmission amount from the battery package 2 in the time zone in the discharge plan is predicted to be "0 kWh". FIG. 24 also indicates that it is predicted that the amount of green power stored in the battery package 2 in such a time zone is "2.3 kWh", the amount of non-green power is "2.8 kWh", and the registration date or the last update date of this record is "2021/05/24 23:25:00".

Note that the charge plan table 107, the discharge plan table 108, and the power-type-based charge/discharge history table 109 have similar configurations to the charge plan table 79 (FIG. 12), the discharge plan table 80 (FIG. 13), and the power-type-based charge/discharge history table 81 (FIG. 14) held by the charge/discharge control device 3, respectively, and thus description thereof is omitted here. However, while each charge/discharge control -device 3 holds only the charge plan table 79, the discharge plan table 80, and the power-type-based charge/discharge history table 81 of the battery package 2 connected thereto, the charge/discharge control server 8 holds the charge plan table 79, the discharge plan table 80, and the power-type-based charge/discharge history table 81 of all the battery packages 2, which is different from the charge/discharge control device 3.

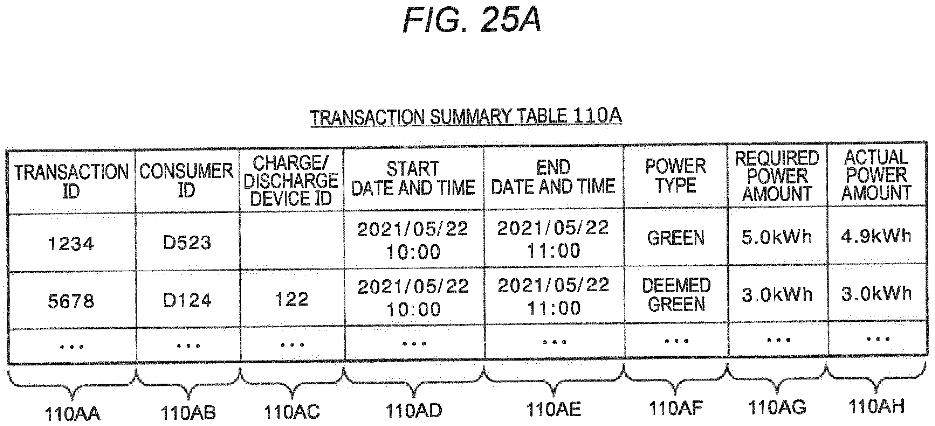

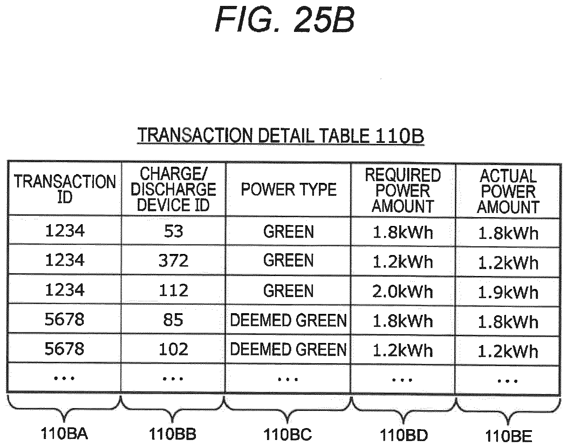

The transaction history table group 110 is a table used to store and hold history information of power transactions in which power is transmitted (discharged) to the extra-facility power distribution network 86 (FIG. 11) by the requested amount of power of the power type requested in response to the power supply request given from the power consumer 5 (FIG. 1) who has concluded a contract with the charge/discharge management provider 9 (FIG. 1), and includes a transaction summary table 110A shown in FIG. 25A and a transaction detail table 110B shown in FIG. 25B.

The transaction summary table 110A is a table in which information (hereinafter, this is referred to as outline information) of the outline of the power transaction is stored, and includes a transaction ID field 110AA, a consumer ID field 110AB, a charge/discharge device ID field 110AC, a start date and time field 110AD, an end date and time field 110AE, a power type field 110AF, a required power amount field 110AG, and an actual power amount field 110AH as shown in FIG. 25A. In the transaction summary table 110A, one record (row) corresponds to schematic information of one power transaction.

Then, the transaction ID field 11AA stores an identifier (transaction ID) unique to the power transaction assigned to the power transaction, and the consumer ID field 110AB stores an identifier (consumer ID) unique to the power consumer 5 assigned to the power consumer 5 that has conducted the power transaction (the power consumer 5 that has transmitted the power supply request to the charge/discharge control server 8). In addition, the charge/discharge device ID field 110AC stores the charge/discharge device ID of the charge/discharge control device 3 installed on the power consumer 5 side in the case of a deemed transaction to be described later. When the transaction is not deemed transaction, the charge/discharge device ID field 110AC is blank.

Furthermore, the start date and time field 110AD stores the start date and time of the power transaction (the date and time when the corresponding battery package 2 has started power transmissionto the extra-facility power distribution network 86), and the end date and time field 110AE stores the end date and time of the power transaction (the date and time when the corresponding battery package 2 has finished discharging to the extra-facility power distribution network 86) .

In addition, the power type field 110AF stores the power type (green power or non-green power) of the power transmitted from the battery package 2 to the extra-facility power distribution network 86 at this time. Further, the amount of power requested at that time is stored in the required power amount field 110AG, and the amount of power actually discharged from the corresponding battery package 2 to the extra-facility power distribution network 86 in the transaction is stored in the actual power amount field 110AH.

Therefore, in the case of the example of FIG. 25A, for example, in the power transaction to which the transaction ID of "1234" is assigned, it is indicated that "green" power is transmitted to the extra-facility power distribution network 86 by "4.9 kWh" for the period of "2021/05/22 10:00" to "2021/05/22 11:00" in response to the request of "5.0 kWh" from the power consumer 5 to which the customer ID of "D523" is assigned.

Note that, in such power transaction, power is transmitted from one or more battery packages 2 to the extra-facility power distribution network 86 so that the total amount of power becomes the requested amount of power.

The transaction detail table 110B is a table used to store and hold detailed information regarding the discharge power for each battery package 2 of the power transaction, and includes a transaction ID field 11BA, a charge/discharge device ID field 110BB, a power type field 110BC, a required power amount field 110BD, and an actual power amount field 110BE as shown in FIG. 25B. In the transaction detail table 110B, one record (transaction ID) corresponds to information related to discharge requested to one charge/discharge control device 3 in one power transaction.

Then, the transaction ID of the corresponding power transaction is stored in the transaction ID field 110BA, and the charge/discharge device ID assigned to the charge/discharge control device 3 that has requested discharge from the battery package 2 in the power transaction is stored in the charge/discharge device ID field 110BB. In the power type field 110BC, the type of power requested to be transmitted to the charge/discharge control device 3 is stored. Further, the required power amount field 110BD stores the power transmission amount (discharge amount) of the power of the power type requested to the charge/discharge control device 3, and the actual power -amount field 110BE stores the power amount of the power actually transmitted (discharged) from the charge/discharge control device 3 in response to the request.

Note that, in a case where discharge is requested to a plurality of charge/discharge control devices 3 in one power transaction, the same number of records as the charge/discharge control devices 3 that have requested power transmission are generated, and information for each charge/discharge control device 3 is stored in each of these records. In this case, the transaction IDs stored in the transaction ID field 110BA are the same.

Therefore, for example, in the case of the example of FIG. 25B, in the power transaction to which the transaction ID of "1234" is assigned, the charge/discharge control device 3 to which the charge/discharge device ID of "53" is assigned is requested to transmit "green" power of "1.8 kWh", the charge/discharge control device 3 to which the charge/discharge device ID of "372" is assigned is requested to transmit "green" power of "1.2 kWh", the charge/discharge control device 3 to which the charge/discharge device ID of "112" is assigned is requested to transmit "green" power of "2.0 kWh", and the charge/discharge control device 3 actually transmits power of "1.8 kWh", "1.2 kWh", and "1.9 kWh" to the extra-facility power distribution network 86.

(1-4-2) Configuration of various screens

Here, FIG. 26 shows a configuration example of the above-described contract information input/confirmation screen 120 displayed on the display of the contract management terminal 10 by the contract information update/confirmation processing unit 113 of the charge/discharge control server 8. In response to a predetermined operation of the charge/discharge management provider 9 on the contract management terminal' 10, a predetermined screen display request is transmitted from the contract management terminal 10 to the charge/discharge control server 8 via the network 11, and in response to the screen display request, the contract information update/confirmation processing unit 113 causes the contract management terminal 10 to display the contract information input/confirmation screen 120.

The contract information input/confirmation screen 120 includes a contract number input textbox 121, a user name input textbox 122, a facility ID input textbox 123, a charge/discharge controller ID input textbox 124, an operation start date input textbox 125, an operation end date input textbox 126, a battery package specific ID input textbox 127, a battery package information display area 128, a confirm button 129, and a cancel button 130.

Then, the charge/discharge management provider 9 inputs the contract number, the user name, the facility ID of the facility that uses the battery package 2, the charge/discharge controller ID of the charge/discharge control device 3 that connects the battery package 2, and the use start date to the contract number input textbox 121, the user name input textbox 122, the facility ID input textbox 123, the charge/discharge controller ID input textbox 124, and the operation start date input textbox 125 of the contract information input/confirmation screen 120 at the time of the contract for the power supply with the power consumer 5.

In addition, on the contract information input/confirmation screen 120, for the power consumer 5 who has already concluded a contract, the corresponding contract content is read from the contract basic information table 104 described above with reference to FIG. 22 by inputting the contract number, the read contract content is transmitted to the contract management terminal 10, and information corresponding to the user name input textbox 122, the facility ID input textbox 123, the charge/discharge controller ID input textbox 124, and the operation start date input textbox 125 is displayed. At this time, the information on the battery package 2 in which the battery package specific ID is displayed in the battery package specific ID input textbox 127 is read from the battery/BMS information table 100 (FIG. 18), and the read battery/BMS information table 100 is transmitted to the contract management terminal 10 and displayed in the battery package information display area 128.

Then, on the contract information input/confirmation screen 120, as described above, when necessary information is input into the contract number input textbox 121 or the like at the time of contract and the content of the contract that has already been concluded is updated, the information input in the textbox other than the contract number input textbox 121 is updated and then the confirm button 129 is clicked, so that the input or updated content at that time can be newly registered in the contract basic information table 104 or the corresponding contract basic information already registered in the contract basic information table 104 can be updated. In addition, on the contract information input/confirmation screen 120, by clicking the cancel button 130, the contents input or updated at that time can be discarded without being reflected in the contract basic information table 104.

On the other hand, when the confirm button 129 on the contract information input/confirmation screen 120 is clicked, a charge/discharge priority information input/confirmation screen 140 shown in FIG. 27 is displayed instead of the contract information input/confirmation screen 120 or superimposed on the contract information input/confirmation screen 120.

The charge/discharge priority information input/confirmation screen 140 includes a charge/discharge priority information input/confirmation table 141 in a spreadsheet format having a time field 141A, a priority field 141B, an internal/external priority field 141C, a type priority field 141D, and an allowable power sellingamount field 141E, a confirm button 142, and a cancel button 143. Then, in the time field 141A of the charge/discharge priority information input/confirmation table 141, the start time of the corresponding time zone is displayed for each record (row).

In addition, the priority field 141B is a field for setting which planned value of the charge capacity should be prioritized when the battery package 2 is charged from both the solar power generation facility 84 and the extra-facility power distribution network 86 according to the charge plan in the corresponding time zone. In the priority field 141B, it is possible to select one of the solar power generation facility 84 and .the extra-facility power distribution network 86 to be prioritized in such a case using a pull-down menu (not shown) displayed by clicking the pull-down menu button 141BA. Then, a character string ("solar power" in the case of solar power generation, and "distribution network" in the case of an extra-facility power distribution network) representing one of the priority fields selected at this time is displayed in the priority field 141B.

In addition, the internal/external priority field 141C is a field for setting which of the intra-facility power distribution network 85 and the extra-facility power distribution network 86 is to be preferentially discharged in a case where the amount of power specified in the discharge plan cannot be discharged from the battery package 2 to both the intra-facility power distribution network 85 and the extra-facility power distribution network 86 when discharging from the battery package 2 to both the intra-facility power distribution network 85 and the extra-facility power distribution network 86 according to the discharge plan in the corresponding time zone. In the internal/external priority field 141C, one of the intra-facility power distribution network 85 and the extra-facility power distribution network 86 to be prioritized in such a case can be selected using a pull-down menu (not shown) displayed by clicking a pull-down menu button 141CA. Then, a character string ("internal" for iritra-facility distribution network 85 and "external" for extra-facility power distribution network 86) representing one of the priority items selected at this time is displayed in the internal/external priority field 141C.

Further, the type priority field 141D is a field for setting which one of the green power and the non-green power should be preferentially discharged when both the green power and the non-green power cannot be discharged from one battery package 2 in the same time zone according to the discharge plan in the corresponding time zone. In the type priority field 141D, it is possible to select one of the green power and the non-green power to be prioritized in such a case using a pull-down menu (not shown) displayed by clicking the pull-down menu button 141DA. Then, a character string ("green" for green power and "non-green" for non-green power) indicating the one to be prioritized selected at this time is displayed in the type priority field 141D.

Further, the allowable power selling amount field 141E is a field for setting up to what percentage of the margin amount of the storage amount of the green power stored in the battery package 2 is allowed to be provided when there is a discharge request (purchase request) of the green power from the power consumer 5. In the allowable power selling amount field 141E, an allowable numerical value is directly input to set an allowable ratio.

Then, on the charge/discharge priority information input/confirmation screen 140, various settings or necessary portions are updated as described above, and then the confirm button 142 is clicked, so that the contents set at that time can be newly registered in the charge/discharge priority information table 105 described above with reference to FIG. 23, or the contents already registered can be overwritten. In addition, on the charge/discharge priority information input/confirmation screen 140, by clicking the cancel button 143, the contents of the settings made on the charge/discharge priority information input/confirmation screen 140 at that time can be discarded without being reflected in the charge/discharge priority information table 105.

(1-4-3) Various processes executed in charge/discharge control server

(1-4-3-1) Charge/discharge plan process

FIG. 28 shows processing contents of the charge/discharge plan process periodically executed by the charge/discharge plan processing unit 114 (FIG. 17) of the charge/discharge control server 8. The charge/discharge plan processing unit 114 prepares a charge plan and a discharge plan for each battery package 2 at regular time intervals (for example, every 1 hour) according to the processing procedure shown in FIG. 28, and transmits the prepared charge plan and discharge plan to the charge/discharge control device 3 to which the corresponding battery package 2 is connected.

Practically, when starting the charge/discharge plan processing, the charge/discharge plan processing unit 114 first selects one battery package that has not yet been processed after step S111 (S110).

In addition, the charge/discharge plan processing unit 114 predicts a date on which a charge plan or a discharge plan is to be prepared in a facility such as a building, a factory, or a house in which the battery package (hereinafter, this is referred to as a selected battery package) 2 selected in step S110 is installed or an amount of power consumed for a certain period (for example, a period from 0:00 to 12:00) for each time zone (for example, a time zone of 1 hour) (S111).

Specifically, the charge/discharge plan processing unit 114 predicts the power consumption amount on the target day and the target time zone in the facility by a known method using the power consumption amount of each past time zone of the facility stored in the intra-facility charge/discharge amount field 81D (FIG. 14) of the power-type-based charge/discharge history table 81 described above with respect to FIG. 14 held by the charge/discharge control device (hereinafter, this is referred to as a target charge/discharge control device) 3 to which the selected battery package 2 is connected. For example, the charge/discharge plan processing unit 114 generates a prediction model of the power consumption amount of the facility by machine learning with the day of the week, the season, the temperature, the weather, and the like as explanatory variables, and performs the prediction using the generated prediction model.

Subsequently, the charge/discharge plan processing unit 114 predicts the power generation amount for each target day and target time zone of the solar power generation facility 84 (FIG. 11) to which the target charge/discharge control device 3 is connected (S112). Specifically, the charge/discharge plan processing unit 114 predicts the power generation amount on the target day and the power generation amount in the target time zone in the solar power generation facility 84 by a known method using the power generation amount for each past time zone of the solar power generation facility 84 stored in the solar power generation amount field 81B (FIG. 14) of the power-type-based charge/discharge history table 81 held by the selected charge/discharge control device 3. For example, the charge/discharge plan processing unit 114 generates a prediction model of the power generation amount of the solar power generation facility 84 by machine learning with the season, temperature, weather, and the like of the day on which the prediction is performed as explanatory variables, and performs the prediction using the generated prediction model.

Next, the charge/discharge plan processing unit 114 calculates a difference between the power demand predicted in step S111 and the power generation amount of the solar power generation facility 84 predicted in step S112 for each time zone, and calculates surplus power and deficient power for each time zone in a case where it is assumed that all the power demand in the facility is covered by the solar power (S113).

In addition, using the calculation result of step S113, the charge/discharge plan processing unit 114 prepares a charge/discharge plan for green power so as to store power in the selected battery package 2 in a time zone in which surplus power is generated, and to discharge power from the selected battery package 2 to the intra-facility power distribution network in a time zone in which shortage occurs (S114).

Subsequently, the charge/discharge plan processing unit 114 prepares a power transmission plan indicating when and how much amount of green power is to be transmitted (discharged) from the selected battery package 2 to the extra-facility power distribution network 86 (S115). The power transmission amount of the green power in this power transmission plan is notified from the power supply request processing unit 115 on the basis of the power supply request given from the power consumer 5 (FIG. 1) by that time.

In addition, the charge/discharge plan processing unit 114 performs charge/discharge of the selected battery package 2 on the basis of the green power charge/discharge plan prepared in step S114, and further calculates a deficient power amount in each time zone when the green power is transmitted to the extra-facility power distribution network 86 according to the power transmission plan prepared in step S115 (S116).

Next, the charge/discharge plan processing unit 114 prepares a plan (hereinafter, this is referred to as a power purchase and charge plan) to allocate the deficient power amount calculated in step S116 to the purchase of the non-green power from the extra-facility power distribution network 86 and charge the selected battery package 2 (S117). At this time, such a plan is prepared so that the non-green power is purchased and the selected battery package 2 is charged at night when the power charge is as low as possible, and the power stored in the selected battery package 2 is used (discharged to the intra-facility power distribution network 85) in the daytime when the power charge is high. At this time, in order to be able to respond to the power supply request from the power consumer 5 flexibly, a plan may be prepared so that the storage amount of the selected battery package 2 is surplus.

Thereafter, the charge/discharge plan processing unit 114 registers the prediction result of the power demand obtained in step S111, the prediction result of the solar power generation amount obtained in step S112, the content of the green power charge plan prepared in step S114, and the content of the power purchase/charge plan obtained in step S117 in the charge/discharge prediction table 106 (FIG. 24) (S118).

Further, the charge/discharge plan processing unit 114 creates a charge instruction and a discharge instruction in each time zone based on the information registered in the charge/discharge prediction table 106 in step S118, stores the content of the created charge/discharge instruction in the charge plan table 107 (FIG. 17) of the storage device 90 (FIG. 17), and stores the content of the discharge instruction in the discharge plan table 108 (FIG. 17) (S119).

In addition, the charge/discharge plan processing unit 114 transmits the contents of the charge plan table 107 and the discharge plan table 108 updated in this manner to the target charge/discharge control device 3 via the communication device 91 (FIG. 17) (S120), and thereafter, determines whether or not the processing of steps S111 to S120 has been executed for all the battery packages 2 in the battery charge/discharge management system 1 (S121).

Then, when a negative result is obtained in this determination, the charge/discharge plan processing unit 114 returns to step S110, and thereafter, repeats the processing of steps S110 to S121 while sequentially switching the battery package 2 selected in step S110 to another battery package 2 for which the processing after step S111 is not performed.

Then, the charge/discharge plan processing unit 114 eventually finishes the charge/discharge plan processing when a positive result is obtained in step S121 by finishing the processing in steps S111 to S120 for all the battery packages 2 in the battery charge/discharge management system 1.

(1-4-3-2) Power supply request reception process

When power is required, the power consumer 5 specifies a required time zone, a required amount of power, and a type of required power (green power or non-green power) by operating the power supply requesting terminal 6 (FIG. 1). Then, a power supply request corresponding to the specified content is transmitted to the charge/discharge control server 8 via the network 11.

Upon receiving the power supply request, the power supply request processing unit 115 of the charge/discharge control server 8 corrects the charge plan and the discharge plan for each battery package 2 as necessary so as to transmit power corresponding to the required power amount from any one or more battery packages 2 to the extra-facility power distribution network 86 in cooperation with the charge/discharge plan processing unit 114.

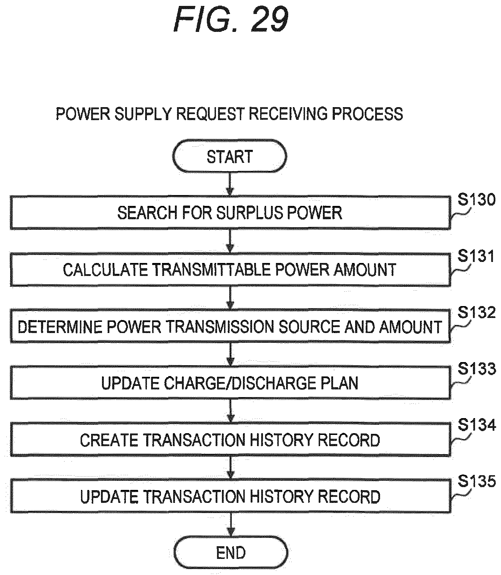

FIG. 29 shows a flow of a series of processing (hereinafter, this is referred to as power supply request reception processing) executed by the power supply request processing unit 115 and the charge/discharge plan processing unit 114 in cooperation at this time. The power supply request receiving process is started when the power supply request processing unit 115 receives the power supply request.

First, the power supply request processing unit 115 searches the charge/discharge prediction table 106 (FIG. 24), and extracts all the battery packages 2 in which the state of charge is surplus in the time zone in which the power supply request is made (S130). In addition, the power supply request processing unit 115 refers to the charge/discharge priority information table 105 (FIG. 23), confirms the allowable power selling amount (value stored in allowable power selling amount field 105F of corresponding record in charge/discharge priority information table 105) in the time zone in which the power supply is requested in each extracted battery package (hereinafter, each of these is referred to as a first extracted battery package) 2, and calculates the amount of power that can be transmitted from each of the first extracted battery packages 2 to the extra-facility power distribution network 86 (S131).

Subsequently, on the basis of the calculation result of step S131, the power supply request processing unit 115 determines one or more first extracted battery packages 2 that should actually transmit power to the extra-facility power distribution network 86 in the time zone specified in the power supply request and the amount of power that the first extracted battery packages 2 should transmit to the extra-facility power distribution network 86 (S132).

Specifically, for example, the power supply request processing unit 115 sorts the first extracted battery packages 2 in descending order of the dischargeable power storage amount, proportionally distributes the power amount specified in the power supply request to these first extracted battery packages 2 based on the allowable power selling amount of one or more upper first extracted battery packages 2, and determines the first extracted battery package 2 from which the power is to be transmitted to the extra-facility power distribution network 86 and the power transmission amount of these first extracted battery packages 2.

Next, the power supply request processing unit 115 notifies the charge/discharge plan processing unit 114 of each of the first extracted battery packages 2 determined in step S132 and the power transmission amount of each of the first extracted battery packages 2. As a result, the charge/discharge plan processing unit 114 given such notification updates the charge plan table 107 (FIG. 17) and the discharge plan table 108 (FIG. 17) such that the power of the power transmission amount notified from each of the notified first extracted battery packages 2 is transmitted to the extra-facility power distribution network 86, and notifies each corresponding charge/discharge control device 3 (the charge/discharge control device 3 connected to each of the notified first extracted battery packages 2) of the update content via the network 11 (S133).

For each of the corresponding charge/discharge control devices 3, the charge/discharge plan processing unit 114 prepares a power transmission plan for transmitting the power of the amount of power specified in the time zone specified in the power supply request to the extra-facility power distribution network 86 in step S115 in FIG. 28, and updates the charge plan table 107 and the discharge plan table 108 so as to execute step S115 and subsequent steps in FIG. 28 on the basis of the power transmission plan.

In order to record the content of the power transaction at this time, the charge/discharge plan processing unit 114 registers the current power transaction content in each of the transaction summary table 110A (FIG. 25A) and the transaction detail table 110B (FIG. 25B) of the transaction history table group 110 stored in the storage device 90 (FIG. 17) (S134).

Further, when the power transaction registered in each of the transaction summary table 110A and the transaction detail table 110B ends in step S134, the charge/discharge plan processing unit 114 registers the amount of power actually transmitted from the corresponding first extracted battery package 2 to the extra-facility power distribution network 86 at that time as the actual power amount in the actual power amount field 110AH (FIG. 25A) of the transaction summary table 110A and the actual power amount field 110BE (FIG. 25B) of the transaction detail table 110B (S135).

Specifically, the charge/discharge plan processing unit 114 reads a value stored in the green → external discharge amount field (see reference numeral 81H in FIG. 14) of the record corresponding to the time zone requested to be supplied in the power-type-based charge/discharge history table 109 (FIG. 17) when the power type requested to be supplied is "green power", reads a value stored in the non-green → external discharge amount field (see reference numeral 81J in FIG. 14) of the record corresponding to the time zone requested to be supplied in the power-type-based charge/discharge history table 109 when the power type requested to be supplied is "non-green power", and stores the read value as an actual power amount in the actual power amount field 110AH of the transaction summary table 110A and the actual power amount field 110BE of the transaction detail table 110B, respectively.

Then, the power supply request processing unit 115 and the charge/discharge plan processing unit 114 then end the power supply request reception processing.

(1-4-3-3) Deemed power transaction processing

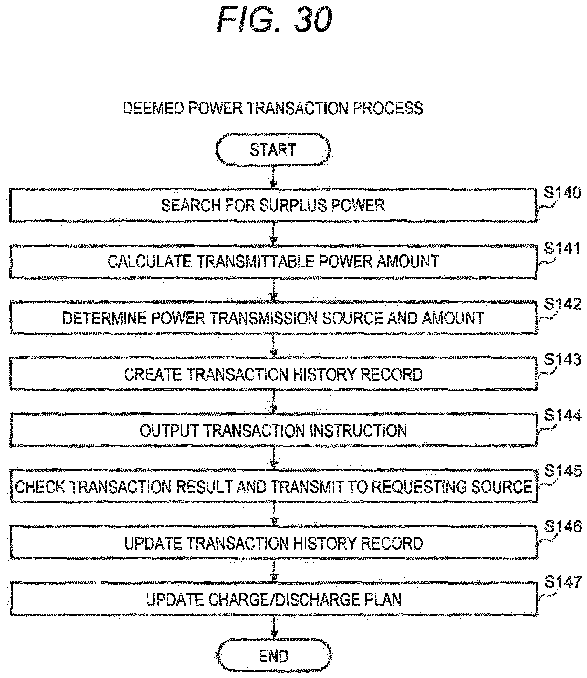

FIG. 30 shows a flow of a series of processes (hereinafter, this is referred to as deemed power transaction) related to the deemed power transaction between the battery packages 2 executed by the power supply request processing unit 115 or the like of the charge/discharge control server 8 when the power supply request of the green power by the deemed power transaction is given from the power supply requesting terminal 6 of the power consumer 5.

Here, the "deemed power transaction" refers to a power transaction in which the storage amounts of the green power and the non-green power are rewritten so that the sum of the storage amounts of the green power is invariable and the sum of the storage amounts of the green power and the non-green power in each battery package 2 is also invariable in the plurality of battery packages 2.

More specifically, in the deemed power transaction, in a case where the battery package 2 is provided on the power consumer 5 side, when performing a power transaction of transmitting and receiving green power (or non-green power) between the battery package (hereinafter, this is appropriately referred to as a customer-side battery package) 2 and another battery package 2, instead of actually transmitting and receiving green power (or non-green power) between the customer-side battery package 2 and the other battery package 2, a part (referred to as x kWh) of the non-green power (or green power) stored in the customer-side battery package 2 is changed to a storage amount of green power (or non-green power), and x kWh of the green power (or non-green power) stored in the other battery package 2 is changed to a storage amount of non-green power (or green power). By such deemed power transaction, green power (or non-green power) transaction can be performed without actually transmitting and receiving power between these two battery packages 2.

When such a deemed power transaction is performed, a deemed power transaction request specifying a time zone in which execution of such a deemed power transaction is desired, a power type (green power or non-green power) for which purchase is desired, and an amount of power is notified from the power supply requesting terminal 6 of the power consumer 5 who owns the customer-side battery package 2 and the charge/discharge control device 3 connected to the customer-side battery package 2 to the charge/discharge control server 8.

Then, the power supply request processing unit 115 of the charge/discharge control server 8 that has received the deemed power transaction request starts the power transaction processing shown in FIG. 30, first, searches the charge/discharge prediction table 106 (FIG. 24), and extracts all the battery packages (hereinafter, these are referred to as second extracted battery packages) 2 in which the storage amount of power of the power type specified in the time zone specified in the deemed power transaction request is surplus (S140) .

Subsequently, the power supply request processing unit 115 refers to the charge/discharge priority information table 105 (FIG. 23), confirms the allowable power selling amount (value stored in allowable power selling amount field 105F of corresponding record in charge/discharge priority information table 105) in the time zone specified in the deemed power transaction request for each of the second battery packages 2 extracted in step S140, and calculates the total amount of power that can be sold from each of these battery packages 2 (S141).

Next, the power supply request processing unit 115 determines one or more second extracted battery packages 2 for which the deemed power transaction according to the deemed power transaction request is to be performed and the amount of power (hereinafter, this is referred to as a transaction power amount) for which the second extracted battery package 2 is to perform the deemed power transaction from among the second extracted battery packages 2 extracted in step S140 (S142).

Specifically, for example, the power supply request processing unit 115 sorts the second extracted battery packages 2 in the descending order of the storage amount of power of the corresponding power type, and proportionally distributes the requested power amount of the deemed power transaction to the second extracted battery packages 2 based on the allowable power selling amount of one or more upper second extracted battery packages 2 corresponding to the power amount for which the deemed power transaction is to be performed and the transaction power amount of the second extracted battery packages 2.

Subsequently, the power supply request processing unit 115 registers the transaction content of the deemed power transaction determined in step S142. in the transaction summary table 110A (FIG. 25A) and the transaction detail table 110B (FIG. 25B) (S143).

Specifically, the power supply request processing unit 115 creates a new record in the transaction summary table 110A, stores the transaction ID assigned to the deemed power transaction in the transaction ID field 110AA (FIG. 25A) of the record, stores the consumer ID of the power consumer 5 who has requested the deemed power transaction in the consumer ID field 110AB (FIG. 25A) of the record, stores the start time and the end time of the deemed power transaction in the start date and time field 110AD and the end date and time field 110AE of the record, and stores the power type of the power traded in the deemed power transaction in the power type field 110AF (FIG. 25A) of the record. As for the power type at this time, information of "deemed green" in the case of green power transaction and "deemed non-green" in the case of non-green power transaction is stored so that it can be seen that the power transaction is deemed power transaction. In addition, the power supply request processing unit 115 stores the transaction power amount determined in step S112 for the second extracted battery package 2 in the required power amount field 110AG of the record. Furthermore, in the case of deemed power transaction, since the charge/discharge control device 3 is also installed on the power consumer side, the charge/discharge device ID of the charge/discharge control device (hereinafter, this is referred to as a consumer side charge/discharge control device) 3 is stored in the charge/discharge device ID field 110AC of the record.

In addition, the power supply request processing unit 115 creates a new record in the transaction detail table 110B in association with each of the second extracted battery packages 2 determined in step S142. Then, the power supply request processing unit 115 stores the transaction ID of the deemed power transaction in the transaction ID field 110BA of each record, and stores the power type of the power traded in the deemed power transaction in the power type field 110BC of each record. As for the power type at this time, information of "deemed green" in the case of green power transaction and "deemed non-green" in the case of non-green power transaction is stored so that it can be seen that the power transaction is deemed power transaction. In addition, the power supply request processing unit 115 stores the transaction power amount determined in step S142 for the second extracted battery package 2 associated with the record in the required power amount field 110BD of each record, and stores the charge/discharge device ID of the charge/discharge control device 3 connected to the second extracted battery package 2 associated with the record in the charge/discharge device ID field 110BB of each record.

Thereafter, at the time when the power consumer 5 requests the power supply request processing unit for such deemed power transaction, the power supply request processing unit 115 transmits a power storage capacity replacement instruction including information on which power type of the power storage amount is to be changed to which power type of the power to the charge/discharge control device 3 connected to each of the second extracted battery packages 2 determined in step S142 (S144).

For example, when the power type requested by the power consumer 5 is deemed power transaction of "green", the charge/discharge control device 3 that has received the storage capacity replacement instruction executes a process of changing green power corresponding to the amount of power stored in the required power amount field 110BD of the record corresponding to the second extracted battery package. 2 of the transaction detail table 110B among the green power stored in the connected second extracted battery package 2 (the amount of power traded in the deemed described power transaction) to the storage amount of non-green power. Further, when the power type requested by the power consumer 5 is deemed power transaction of "non-green", the charge/discharge control device 3 executes a process of changing, among the non-green power stored in the connected second extracted battery package 2, the non-green power corresponding to the power amount stored in the required power amount field 110BD of the record corresponding to the second extracted battery package 2 in the transaction detail table 110B to the storage amount of green power.

Such storage amount changing processing is executed by the charge/discharge amount adjuster 76 (FIG. 11) of the charge/discharge control device 3.

In practice, the charge/discharge amount adjuster 76 communicates with the package controller 26 (FIG. 5) of the second extracted battery package 2 connected to the charge/discharge control device 3, and gives an instruction to the package controller 26 such that when the power type requested from the power consumer 5 is deemed power transaction of "green", the storage amount stored in the storage amount field 53C (FIG. 7) of the record in which the power type is deemed power transaction of "green" and the power type detail is "solar power" in the power-type-based storage amount table 53 (FIG. 7) held by the package controller 26 is updated to a value decreased by the amount of power for the deemed power transaction and the storage amount stored in the storage amount field 53C of the record in which the power type is "non-green" in the power-type-based storage amount table 53 is updated to a value increased by the amount of power for the deemed power transaction.

In addition, in a case where the power type requested from the power consumer 5 is deemed power transaction of "non-green", the charge/discharge amount adjuster 76 gives an instruction to the package controller 26 so that the storage amount stored in the storage amount field 53C of the record in which the power type is "non-green" in the power-type-based storage amount table 53 is updated to a value decreased by the power amount for the deemed power transaction, and the storage amount stored in the storage amount field 53C of the record in which the power type is "green" and the power type detail is "solar power" in the power-type-based storage amount table 53 is updated to a value increased by the power amount for the deemed power transaction.

Subsequently, when the deemed power transaction is completed as described above, the power supply request processing unit 114 refers to the power-type-based charge/discharge history table 109 (FIG. 17) corresponding to each of the charge/discharge control devices 3 other than the customer-side charge/discharge control device 3 that has transmitted the power storage capacity replacement instruction, checks each of the power amounts actually succeeding in the transaction in the second extracted battery package 2 connected to each of the charge/discharge control devices 3, and notifies the customer-side charge/discharge control device 3 of the total value (that is, the amount of power actually traded in the deemed power transaction executed at that time) (S145).

Note that, the customer-side charge/discharge control device 3 that has received this notification accesses the package controller 26 of the customer-side battery package 2, and gives an instruction to the package controller 26 so as to update the power-type-based storage amount table 53 held by the package controller 26 according to the deemed power transaction at that time.

Thus, when the deemed power transaction is "green", the package controller 26 that has received this instruction updates the value of the storage amount stored in the storage amount field 53C of the record in which the power type is "green" and the power type detail is "solar power" in the power-type-based storage amount table 53 to a value increased by the deemed power transaction amount notified from the power supply request processing unit 114 in step S145, and updates the value of the storage amount stored in the storage amount field 53C of the record in which the power type is "non-green" in the power-type-based storage amount table 53 to a value decreased by the deemed power transaction amount notified from the power supply request processing unit 114 in step S145.

Subsequently, the power supply request processing unit 114 stores the amount of power actually traded in the deemed power transaction executed at that time confirmed in step S143 in each of the actual power amount field 110AH (FIG. 25A) of the new record created in the transaction summary table 110A in step S143 and the actual power amount field 110BE of the new record created in the transaction detail table 110B in step S145 (S146).

Thereafter, the charge/discharge plan processing unit 114 prepares a new charge plan and a new discharge plan for each of the battery packages 2 connected to each of the charge/discharge control devices 3 that have conducted the deemed power transaction using the latest information, and transmits the prepared charge plan and discharge plan to the corresponding charge/discharge control device 3, thereby updating the charge plan and discharge plan held by the charge/discharge control device 3 to the new charge plan and discharge plan (S147).

Thereafter, this series of the deemed power transaction processing is terminated.

(1-5) Effects of present embodiment

As described above, in the battery charge/discharge management system 1 according to the present embodiment, the charge/discharge control device 3 notifies the battery package 2 of the power amount for each power type charged and discharged from the connected battery package 2, and the battery package 2 stores and holds the storage amount for each power type of the power stored in the battery module 31 housed in the battery package 2 in the power-type-based storage amount table 53 (FIG. 7), and updates the power-type-based storage amount table 53 based on the power amount for each power type charged and discharged from the battery package 2 notified from the charge/discharge control device 3.

Therefore, according to the battery charge/discharge management system 1, even when the installation location of the battery package 2 is changed, the charge/discharge control server 8 can continuously manage the storage amounts of the green power and the non-green power stored in the battery package 2 and can continuously perform transaction for each power type of the power stored in the battery package 2.

Although the example in which the BMS 25 (FIG. 4) and the package controller 26 (FIG. 4) are configured as different hardware components has been described in the present embodiment, the functions of the BMS 25 and the package controller 26 can be realized by the same hardware. In this case, by implementing both functions with the same microcomputer, it is possible to suppress cost as compared with implementation as separate hardware components. In this case, since hardware and software having the functions of the BMS 25 and the package controller 26 are used for each model of the battery module 31 (FIG. 4), the processing of setting the BMS information in the initialization processing of the battery package 2 shown in FIG. 9 is unnecessary. In addition, it is not necessary to manage the BMS manufacturer, the BMS model number, and the BMS serial number in the battery/BMS information table 50 (FIG. 5) and the battery/BMS information table 100 (FIG. 17, FIG. 18).

(2) Second embodiment

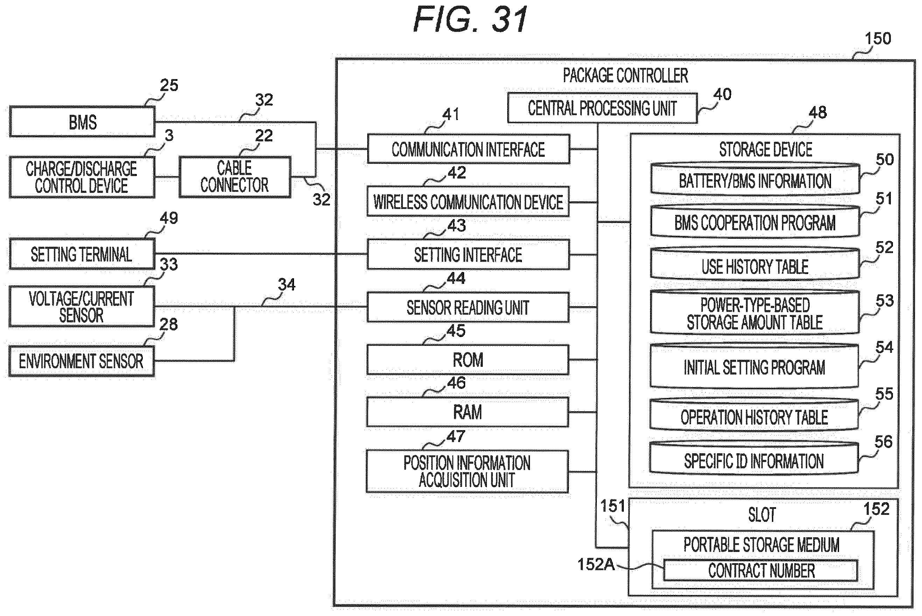

FIG. 31, in which parts corresponding to those in FIG. 5 are denoted by the same reference numerals, shows a configuration of a package controller 150 according to the second embodiment applied to the battery charge/discharge management system 1 of FIG. 1 instead of the package controller 26 of the battery package 2 of the first embodiment described above with reference to FIG. 5.

The package controller 150 is largely different from the package controller 26 (FIG.'5) of the first embodiment in that a slot 151 for a small memory card is provided. Then, a small portable storage medium 152 such as a micro SD (Secure Digital) card is loaded in the slot 152 in a freely insertable and removable manner.

A contract number storage area 152A is set in the portable storage medium 152. Then, when the charge/discharge management provider 9 (FIG. 1) inputs a contract number with a user who uses the battery package 2 (facility where the battery package 2 is connected to the charge/discharge control device 3 and used) using the contract information input/confirmation screen 120 described above with respect to FIG. 26, the contract number is stored in the contract number storage area 152A of the portable storage medium 152 by a writing device (not shown) connected to the contract management terminal 10 (FIG. 1). Thus, the user can use the battery package 2 by receiving the portable storage medium 152 from the charge/discharge management provider 9 and loading the portable storage medium 152 into the slot 151 of the battery package 2.

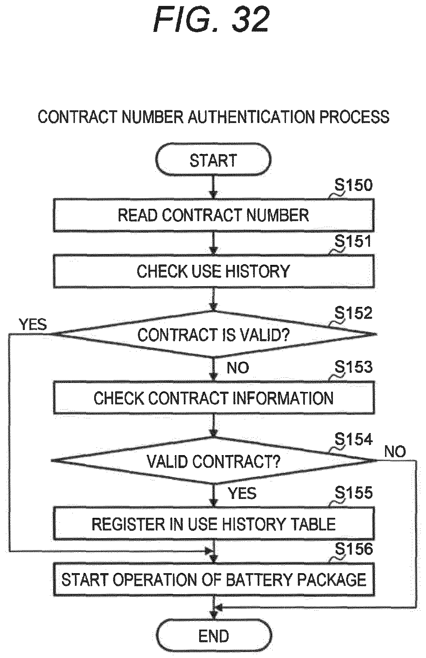

FIG. 32 shows a contract number authentication process executed by the central processing unit 40 (FIG. 31) of the package controller 150 of the battery package 2 based on a program (not shown) stored in the storage device 48 (FIG. 31) when the above-described portable storage medium 152 is loaded into the above-described slot 151. The central processing unit 40 checks the validity of the contract number stored in the contract number storage area 152A of the portable storage medium 152 loaded in the slot 151 at that time according to the processing procedure shown in FIG. 31, and starts the operation of the package controller 150 and the battery package 2 thereof only when the contract number is valid.

In practice, when the portable storage medium 152 is loaded in the slot 151, the central processing unit 40 starts the contract number authentication process shown in FIG. 32, and first, reads the contract number stored in the contract number storage area 152A of the portable storage medium 152 (S150).

Subsequently, the central processing unit 40 checks the use history of the battery package 2 stored in the use history table 52 (FIG. 6) (S151), and determines whether the contract number read in step S150 matches the contract number in the latest valid use history in the use history of the battery package 2 stored in the use history table 52 (FIG. 6) (S152) . Here, the "valid use history" refers to a use history in which the operation end date field 52F in the record corresponding to the use history in the use history table 52 is blank. When a positive result is obtained in this determination, the central processing unit 40 starts various processes for operating the battery package 2 (S156), and then ends the contract number authentication process.

On the other hand, when a negative result is obtained in the determination in step S152, the central processing unit 40 inquires the charge/discharge control server 8. (FIG. 1, FIG. 17) about whether the contract number acquired in step S150 is a valid contract (S153). At this time, the central processing unit 40 notifies the charge/discharge control server 8 of the contract number acquired in step S150 and the battery package specific ID of the battery package 2.

Then, the contract information update/confirmation processing unit 113 (FIG. 17) of the charge/discharge control server 8 that has received this inquiry refers to the contract basic information table 104 (FIG. 22) and determines whether the contract with the contract number for which the inquiry has been made is a valid contract. This determination is made by searching for a record in which the contract number and the battery package specific ID notified at the time of such inquiry are stored in the contract number field 104A and the specific ID field 104B of FIG. 22, respectively, and the operation end date field 104G is blank. Then, in a case where such a record can be detected, the contract information update/confirmation processing unit 113 responds to the battery package 2 that the contract is valid, and in a case where such a record cannot be detected, the contract information update/confirmation processing unit responds to the battery package 2 that the contract is invalid.

Then, the central processing unit 40 determines whether the contract of the contract number acquired in step S150 is valid, based on the above response from the charge/discharge control server 8 (S154). When a negative result is obtained in this determination, the central processing unit 40 ends the contract number authentication process without operating the own battery package 2.

On the other hand, when a positive result is obtained in the determination in step S154, the central processing unit 40 registers a new use history associated with the contract number in the use history table 52 (S155). Specifically, the central processing unit 40 creates a new record in the use history table 52 described above with reference to FIG. 6, and stores the contract number acquired in step S150 in the contract number field 52A of the record. In addition, a user name, a facility ID, and a charge/discharge device ID corresponding to this contract number are acquired from the charge/discharge control server 8, a user name notified in advance in the user field 52B, a facility ID is stored in the facility ID field 52C, a charge/discharge device ID of the charge/discharge control device 3 is stored in the charge/discharge device ID field 52D, and today's date is stored in the operation start date field 52E.

Further, the central processing unit 40 starts various processes for operating the battery package 2 (S156), and then ends the contract number authentication process.

As described above, the package controller 150 according to the present embodiment determines whether or not the contract associated with the contract number stored in the contract number storage area 152A of the portable storage medium 152 loaded in the slot 151 is valid, and operates the battery package 2 only when the contract is valid.

Therefore, by applying the battery package 2 on which the package controller 150 is mounted to the battery charge/discharge management system 1, an effect of preventing unauthorized use of the battery package 2 can be obtained in addition to the effect obtained by the first embodiment.

(3) Third embodiment

(3-1) Configuration of battery charge/discharge management system according to present embodiment

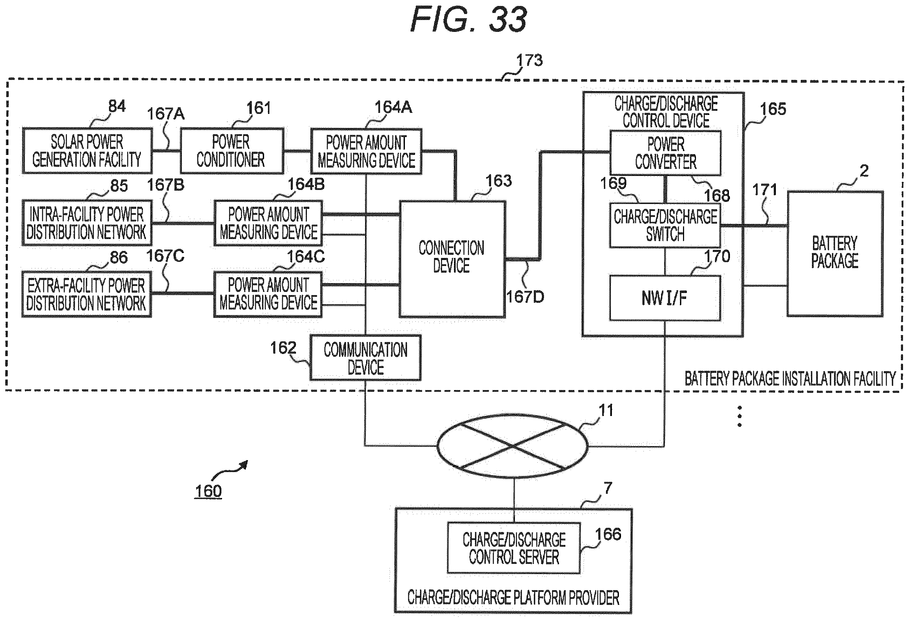

In FIG. 33 in which parts corresponding to those in FIG. 11 are denoted by the same reference numerals, reference numeral 160 denotes a battery charge/discharge management system according to a third embodiment as a whole. The battery charge/discharge management system 160 is configured such that a power conditioner 161, a communication device 162, a connection device 163, first to third power amount measuring devices 164A, 164B, and 164C, and a charge/discharge control device 165 to which one or more battery packages 2 are connected are installed in each facility (hereinafter, this is appropriately referred to as a battery package installation facility) 173 in which the battery package 2 is installed. In the battery charge/discharge management system 160, the communication device 162 and the charge/discharge control device 165 are connected to the charge/discharge control server 166 installed by the charge/discharge control platform provider 7 via a network 11.

Although (not shown) in FIG. 33, also in the battery charge/discharge management system 160 according to the present embodiment, the wireless base station 4 described above with reference to FIG. 1, the power supply requesting terminal 6 of each power consumer 5, and the contract management terminal 10 installed by the charge/discharge management provider 9 are connected to the network 11.

The power conditioner 161 is an inverter device that converts solar power supplied from the solar power generation facility 84 via the power supply line 167A from DC power to AC power and outputs, the converted power to the connection device 163.

The connection device 163 is connected to the power conditioner 161, the intra-facility power distribution network 85, and the extra-facility power distribution network 86 via power supply lines 167A,167B, and 167C, respectively, and is connected to each charge/discharge control device 165 via a power supply line 167D, and connects these power supply lines 167A to 167D to each other. Specifically, the connection device 163 interconnects the power supply line 167A and the power supply line 167B, the power supply line 167A and the power supply line 167C, the power supply line 167A and the power supply line 167D, the power supply line 167B and the power supply line 167C, the power supply line 167B and the power supply line 167D, and the power supply line 167C and the power supply line 167D.

In addition, the communication device 162 is notified of the amount of power output from the power conditioner 161 (the amount of power generated by the solar power generation facility 84) measured by the first power amount measuring device 164A provided on the power supply line 167A connecting the power conditioner 161 and the connection device 163, the amount of power discharged to the intra-facility power distribution network 85 measured by the second power amount measuring device 164B provided on the power supply line 167B 86 connecting the intra-facility power distribution network 85 and the connection device 163, and the amount of power supplied from the extra-facility power distribution network 86 and the amount of power discharged to the extra-facility power distribution network 86 measured by the third power amount measuring device 164C provided on the power supply line 167C connecting the extra-facility power distribution network 86 and the connection device 163. Thus, the communication device 162 transmits these amounts of power to each charge/discharge control device 165 via the network 11.

The charge/discharge control device 165 includes a power converter 168, a charge/discharge switch 169, and a network interface 170.

The power converter 168 converts AC power supplied from the connection device 163 via the power supply line 167D into DC power, or converts discharge power of the battery package 2 supplied from the charge/discharge switch 169 from DC power into AC power, and outputs the AC power to the connection device 163 via the power supply line 167D. Power from the connection device 163 converted into DC power by the power converter 168 is supplied as charge power to the battery package 2 via the charge/discharge switch 169, and discharge power of the battery package 2 converted into AC power by the power converter 168 is discharged to the intra-facility power distribution network 85 or the extra-facility power distribution network 86 via the connection device 163.

The charge/discharge switch 169 is connected to the battery package 2 via the power supply line 171, and switches charge/discharge to the battery package 2 connected to the charge/discharge control device 165 according to an instruction given from the charge/discharge control server 166 via the network 11. The network interface 170 is an interface that performs protocol control at the time of communication with the charge/discharge control server 166 via the network 11 or at the time of communication with the battery package 2 connected to the charge/discharge control device 165.

In the battery charge/discharge management system 160 of the present embodiment having the above configuration, the generated power of the solar power generation facility 84 output from the power conditioner 161 and the discharge power from each battery package 2 connected to the charge/discharge control device 165 are preferentially consumed by the intra-facility power distribution network 85, and the surplus power is discharged to the extra-facility power distribution network 86. Conversely, when the amount of charged power in the battery package 2 is insufficient, the insufficient power is supplied from the extra-facility power distribution network 86 to the battery package 2 via the connection device 163 and the charge/discharge control device 165.

At the time of charging the battery package 2, first, the generated power of the solar power generation facility 84 output from the power conditioner 161 is consumed by the power supply to the intra-facility power distribution network 85 and the necessary charging to the battery package 2, and the insufficient power is taken in from the extra-facility power distribution network 86 and supplied to the intra-facility power distribution network 85 and the battery package 2.

Such charge/discharge of each battery package 2, discharging to the intra-facility power distribution network 85, taking in of power from the extra-facility power distribution network 86, and switching of the charge/discharge switch 169 of the charge/discharge control device 165 are all performed under the control of the charge/discharge control server 166.

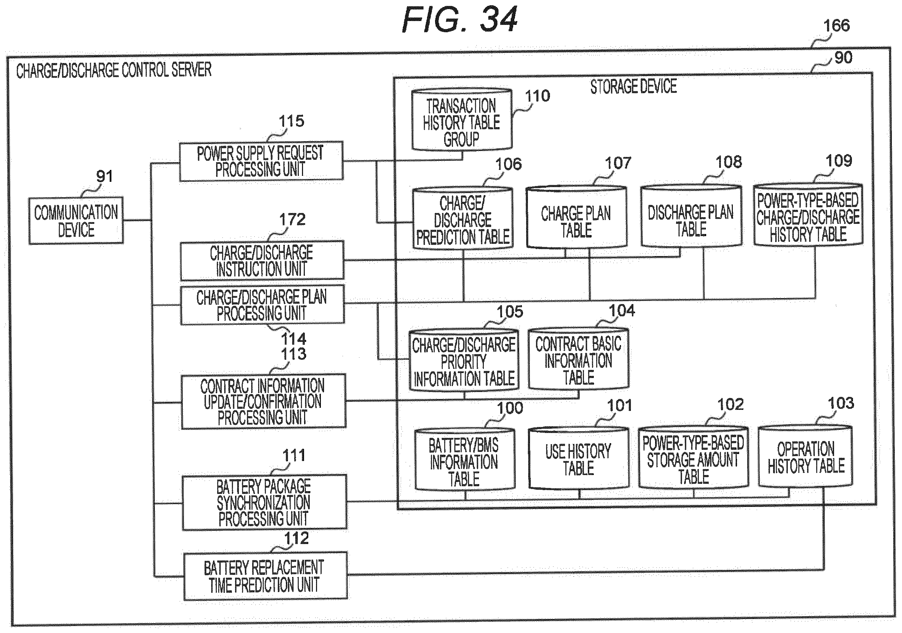

FIG. 34 in which parts corresponding to those in FIG. 17 are denoted by the same reference numerals shows a logical configuration of the charge/discharge control server 166 of the present embodiment. The charge/discharge control server 166 has a configuration in which a charge/discharge instruction unit 172 is added to the charge/discharge control server 8 according to the first embodiment described above with reference to FIG. 17.

The charge/discharge instruction unit 172 is a functional unit implemented by a CPU (not shown) of the charge/discharge control server 166 executing a corresponding program stored in a memory (not shown). The charge/discharge instruction unit 172 transmits a charge/discharge instruction for the battery package 2 to the charge/discharge control device 165 to which the battery package 2 is connected according to the charge plan for the battery package 2 stored in the charge plan table 107 and the discharge plan for the battery package 2 stored in the discharge plan table 108.

In the case of the present embodiment, the target value of "total x kWh" is always stored in the power distribution network charge amount field 79C (FIG. 12) of each record in the charge plan table 107, and information of "solar power" is always stored in the priority field 79D (FIG. 12) of each record. As a result, the generated power of the solar power generation facility 84 is always used for charging the battery package 2 until the state of charge of the battery package 2 reaches the target value.

(3-2) Processing of charge/discharge instruction unit

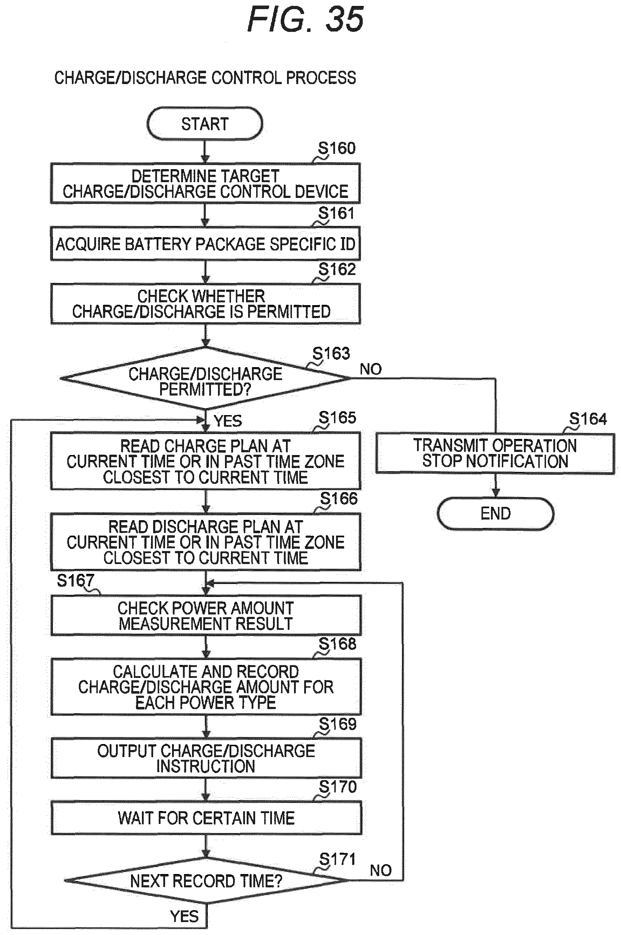

FIG. 35 shows specific processing contents of the charge/discharge control process executed by the charge/discharge instruction unit 172 of the charge/discharge control server 166. The charge/discharge instruction unit 172 controls charge/discharge of the battery package 2 according to the processing procedure shown in FIG. 35.

In practice, when any one of the charge/discharge control devices 165 is installed, the charge/discharge instruction unit 172 starts the charge/discharge control process shown in FIG. 35 for the charge/discharge control device 165, or when the contract basic information table 104 is updated, the charge/discharge instruction unit starts the charge/discharge control process shown in FIG. 35 when the operation of the charge/discharge-control device 165 related to the updated contract basic information starts. Then, the charge/discharge instruction unit 172 first determines the charge/discharge control device 165 as a transmission destination of the charge/discharge instruction (S160).

Subsequently, the charge/discharge instruction unit 172 inquires the target charge/discharge control device (hereinafter, this is referred to as a target charge/discharge control device) 165 determined in step S160 about the battery package specific ID of the charge/discharge control target battery package (hereinafter, this is referred to as a target battery package) 2 connected to the target charge/discharge control device 165 (S161). Thus, the target charge/discharge control device 165 that has received the inquiry inquires the target battery package 2 about the battery package specific ID, and notifies the charge/discharge instruction unit 172 of the charge/discharge control server 166 of the battery package specific ID thus obtained.

Next, the charge/discharge instruction unit 172 confirms whether the target battery package 2 can be charged or discharged (S162). Specifically, the charge/discharge instruction unit 172 refers to the contract basic information table 104 to extract the contract information on the valid contract for the battery package specific ID of the target battery package 2, and checks whether or not the connection between the target charge/discharge control device 165 and the target.battery package 2 is permitted.

Then, the charge/discharge instruction unit 172 determines whether or not the charge/discharge control for the target battery package 2 may be started based on the confirmation result of step S162 (S163). When a negative result is obtained in this determination, the charge/discharge instruction unit 172 transmits a notification (operation stop notification) indicating that the operation should be stopped to the target charge/discharge control device 165 (S164), and then ends the charge/discharge control process.

On the other hand, when a positive result is obtained in the determination in step S163, the charge/discharge instruction unit 172 reads a record of a charge plan for the target battery package 2, which is a charge plan for the target battery package 2 in the past time zone closest to the current time or the current time, from the charge plan table 107 (FIG. 34) (S165), and reads a record of a discharge plan for the target battery package 2 in the time zone from the discharge plan table 108 (FIG. 34) (S166).

For example, when the current time is "07:05", the charge/discharge instruction unit 172 reads the record of the charge plan in the time zone of "07:00" to "08: 00", which is the past time zone closest to the current time, from the charge plan table 107, and also reads the record of the discharge plan in the time zone of "07:00" to "08:00" from the discharge plan table 108.

Thereafter, based on the charge plan and the discharge plan acquired in steps S165 and S166, the charge/discharge instruction unit 172 controls the charge/discharge amount of the target battery package 2 at regular time intervals so as to approach the target charge amount and discharge amount for every hour of the target battery package 2 planned in the charge plan and the discharge plan (S167 to S171).

Specifically, the charge/discharge instruction unit 172 first accesses the first to third power amount measuring devices 164A to 164C (FIG. 33) via the communication device 91 (FIG. 34), acquires the measured power amounts of the first to third power amount measuring devices 164A to 164C within the latest fixed time, and acquires the integrated value of the power amounts measured by the first to third power amount measuring devices 164A to 164C in the current time zone based on the acquired measured power amounts (S167).

Subsequently, the charge/discharge instruction unit 172 calculates the charge/discharge amount for each power type up to the current time point in the current time zone based on the integrated value of the amount of power acquired in step S167 and the charge plan and the discharge plan acquired in steps S165 and S166, respectively, stores the calculation result in the power-type-based charge/discharge history table 109 (FIG. 34), and wirelessly transmits the same data to the target battery package 2 via the communication device 91 (S168) . Thus, the package controller 26 (FIG. 5) of the target battery package 2 that has received this calculation result updates the power-type-based storage amount table 53 (FIG. 7) based on this data.

Next, the charge/discharge instruction unit 172 transmits a charge/discharge instruction to the target charge/discharge control device 165 via the communication device 91 so that the charge/discharge amount of the target battery package 2 approaches the target charge amount or discharge amount based on the power-type-based charge/discharge history table 109 and the charge plan and discharge plan acquired in step S165 and step S166, respectively (S169). Details of the charge/discharge instruction transmitted at this time will be described later.

In addition, the charge/discharge instruction unit 172 waits until a certain period of time (for example, 1 minute) elapses after the processing of step S167 (S170). Then, when the certain time elapses in due course, the charge/discharge instruction unit 172 determines whether the current time after standby exceeds the start time of the time zone in which the charge plan or the discharge plan is read in the latest step S165 or step S166 (S171).

Then, when a negative result is obtained in this determination, the charge/discharge instruction 172 returns to step S167, and thereafter, the processing of steps S167 to S171 is repeated until a positive result is obtained in step S171. By this repetitive processing, the charge/discharge amount of the target battery package 2 is controlled at regular time intervals so as to approach the charge/discharge amount determined in the charge plan or the discharge plan acquired in the latest step S165 and step S166.

Then, when the start time of the time zone in which the charge plan or the discharge plan is read in the latest step S165 or step S166 is exceeded and a positive result is eventually obtained in step S171, the charge/discharge instruction unit 172 returns to step S165, and thereafter, the processing of steps S165 to S171 is repeated in the same manner as described above while sequentially switching the time zone of the charge plan or the discharge plan acquired in step S165 or step S166 to the next time zone. By this repetitive processing, charge/discharge of the target battery package 2 are controlled according to the charge plan for each time zone stored in the charge plan table 107 and the discharge plan for each time zone stored in the discharge plan table 108.

Here, specific processing contents of the charge/discharge instruction unit 172 in step S169 will be described. Here, the difference between the end time of the time zone in which the charge plan or the discharge plan is read in step S165 or step S166 and the current time is t minutes, and among the charge/discharge amounts for each power type in the target battery package 2 calculated in step S168, the charge/discharge amount of the green power is p kWh, and the charge/discharge amount of the non-green power is q kWh.

In addition, the integrated value of the amount of charge from the solar power generation facility 84 to the target battery package 2 checked in step S168 is denoted by Cs_c, the integrated value of the amount of charge from the extra-facility power distribution network 86 to the target battery package 2 is denoted by Co_c, the integrated value of the amount of power obtained by discharging the green power stored in the target battery package 2 to the intra-facility power distribution network 85 is denoted by Qri_c, the integrated value of the amount of power obtained by discharging the green power stored in the target battery package 2 to the extra-facility power distribution network 86 is denoted by Qro_c, the integrated value of the amount of power obtained by discharging the non-green power stored in the target battery package 2 to the intra-facility power distribution network 85 is denoted by Qdi_c, and the integrated value of the amount of power obtained by discharging the non-green power stored in the target battery package 2 to the extra-facility power distribution network 86 is denoted by Qdo_c.

In step S169, the charge/discharge instruction unit 172 transmits a charge/discharge instruction to stop charging the target battery package 2 to the target charge/discharge control device 165 when the power distribution network charge amount in the record of the charge plan table 107 read in step S165 is "total z kWh" and the following equation is satisfied.

[Mathematical formula 5]

$$p + q \geqq z \qquad \ldots\ldots (5)$$

In addition, the charge/discharge instruction unit 172 transmits a charge/discharge instruction to continue charging the target battery package 2 is transmitted to the target charge/discharge control device 165 when the power distribution network charge amount of the record of the charge plan table 107 read in step S165 is "total z kWh" and the following equation is satisfied.

[Mathematical formula 6]

$$p + q < z \qquad \ldots\ldots (6)$$

When the value stored in the green $\rightarrow$ internal field (see reference numeral 80B in FIG. 13) or the value stored in the non-green $\rightarrow$ internal field (see reference numeral 80D in FIG. 13) of the record in the discharge plan table 108 read in step S166 is "ALL", the charge/discharge instruction unit 172 instructs the target charge/discharge control device 165 to discharge the power amount Q given by the following expression from the target battery package 2.

[Mathematical formula 7]

$$Q = \frac{Qi\_p \times 60}{t} + Fro + Fdo \qquad \ldots\ldots (7)$$

In other cases, the charge/discharge instruction unit 172 instructs the target charge/discharge control device 165 to discharge the power amount Q given by the following expression from the target battery package 2.
[Mathematical formula 8]

$$Q = Fri + {} + Fro + Fdi + Fdo \qquad \ldots\ldots (8)$$

Note that Qi_p in the expression (7) is a predicted value of the discharge amount to the intra-facility power distribution network 85 stored in the intra-facility discharge amount field 106C (FIG. 24) of the charge/discharge prediction table 106 (FIG. 24, FIG. 34). The charge/discharge instruction unit 172 reads, from the charge/discharge prediction table 106, a record at the same time as the time stored in the time field of the record of the charge plan table 107 read in step S165 (see the field of reference numeral 79A in FIG. 12), and uses the value stored in the intra-facility discharge amount field 106C (FIG. 24) of the record.

In addition, it is assumed that Fro and Fdo in expressions (7) and (8) and Fri and Fdi in the expression (8) are calculated by the above-described expressions (1) to (4), respectively. Fri, Fro, Fdi, and Fdo are also used in step S168.

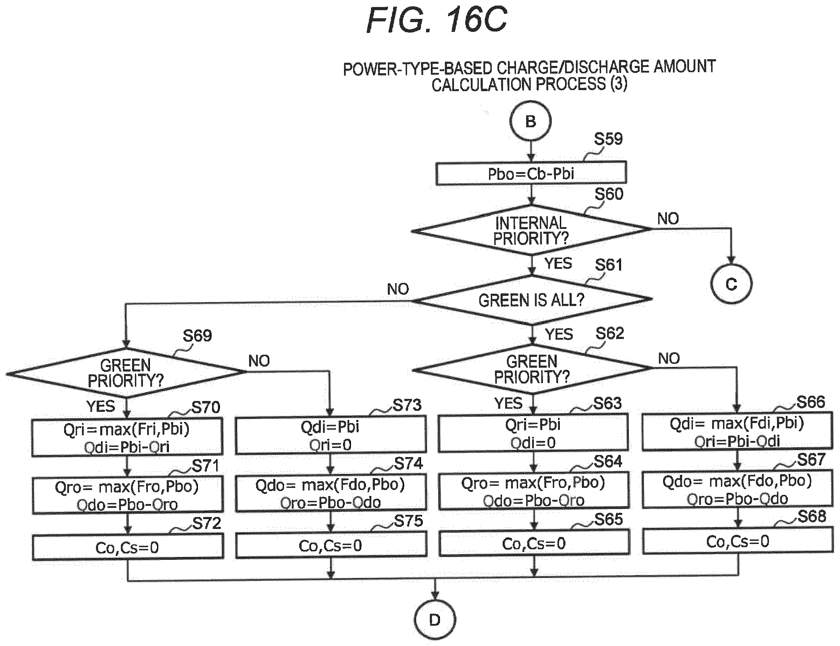

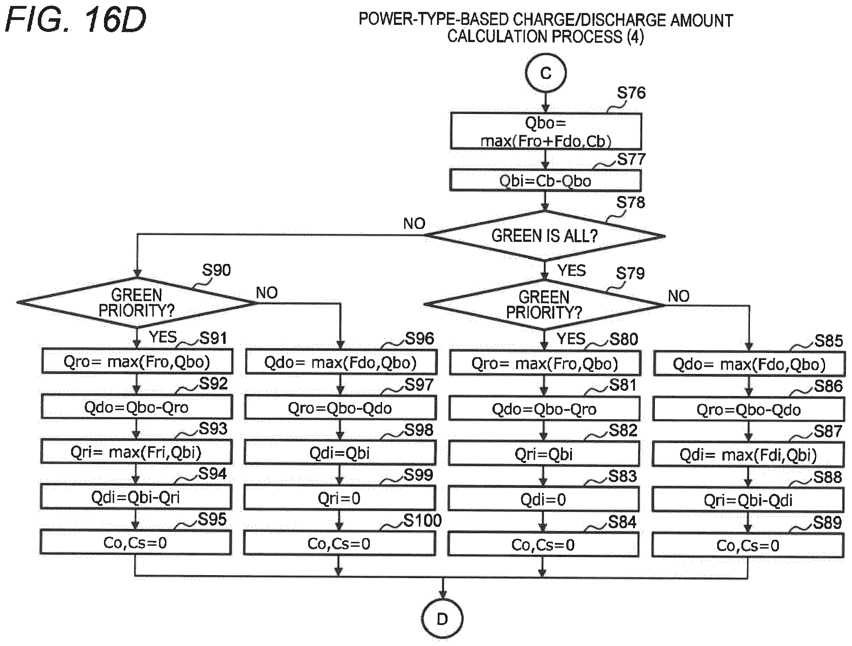

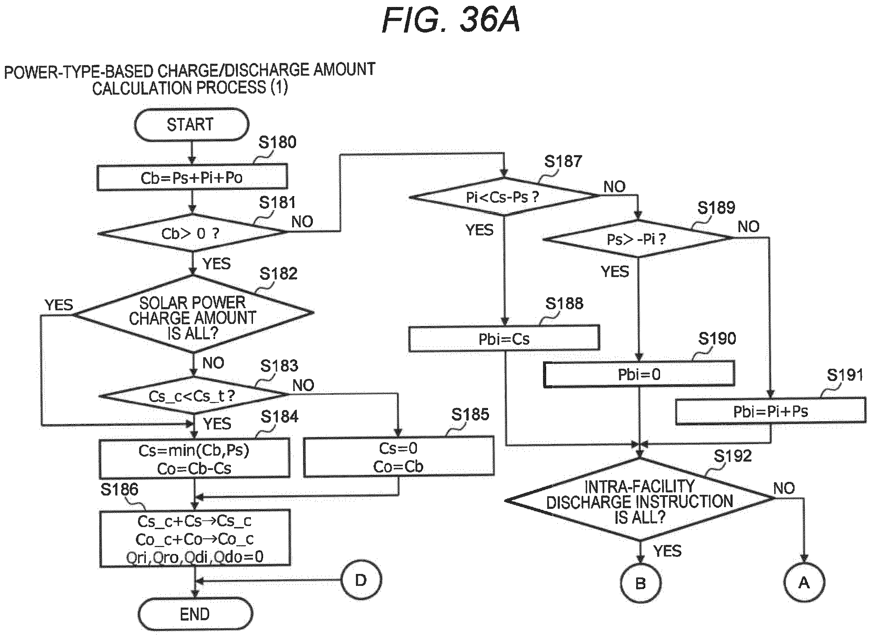

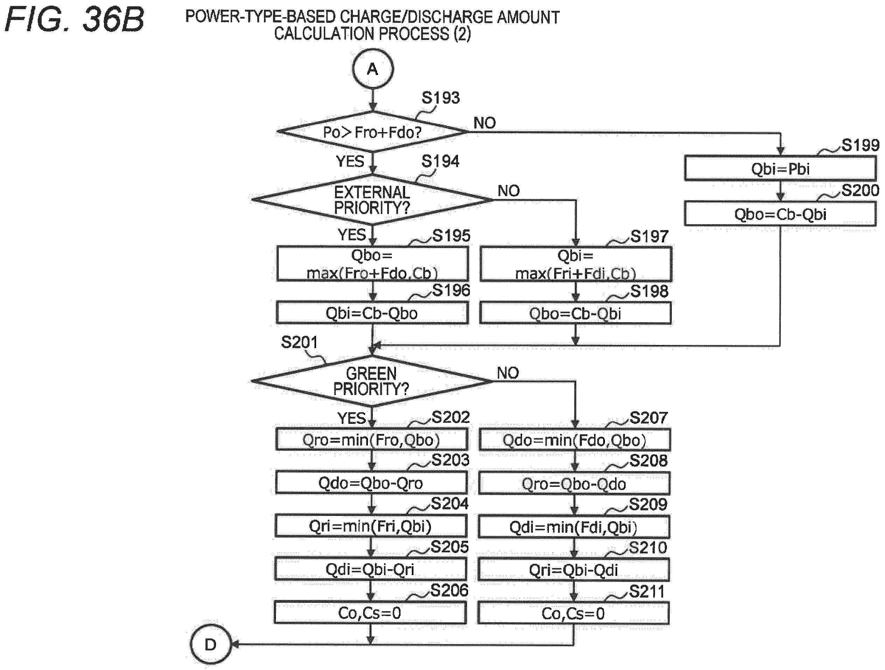

FIGS. 36A and 36B show specific processing contents of a part of the series of processing executed by the charge/discharge instruction unit 172 in step S168 in FIG. 35. The charge/discharge instruction unit 172 calculates the charge/discharge amount for each power type in the target battery package 2 according to the processing procedure shown in FIGS. 36A and 36B and FIGS. 16C and 16D.

Note that, in the following description, Cb, Poi, Po, Pi, Co, Cs, Qri, Qro, Qdi, Qdo, Qbi, Qbo, Pbi, Pbo, and Psi are similar to the definitions described above for FIGS. 16A to 16D. ' For Ps, a value measured by the first power amount measuring device 164A (FIG. 33) is used. Further, Cr_c represents the cumulative charge amount from the solar power generation facility 84 to the target battery package 2 in the loop of steps S165 to S171 of FIG. 35, Co_c represents the cumulative charge amount from the extra-facility power distribution network 86 to the target battery package 2 in the loop of steps S165 to S171 of FIG. 35, and Cr_t represents the target value of the solar power charge amount set in the solar power charge amount field (see the field of reference numeral 79B of FIG. 34) of the charge plan table 107 (FIG. 12) .

When the processing proceeds to step S168 in FIG. 35, the charge/discharge instruction unit 172 starts the power-type-based charge/discharge amount calculation process shown in FIGS. 36A and 36B and FIGS. 16C and 16D, and first calculates the charge/discharge amount Cb from the target battery package 2 (S180). Here, in the configuration of the battery charge/discharge management system 1 according to the first embodiment described above with reference to FIGS. 16A to 16D, the charge/discharge amount Cb from the battery package 2 can be measured by the fourth power amount measuring device 78D (FIG. 11) of the charge/discharge control device 3 described above with reference to FIG. 11, but cannot be directly measured in the configuration of the battery charge/discharge management system 160 of the present embodiment described above with reference to FIG. 33. Therefore, first, the charge/discharge instruction unit 172 calculates the charge/discharge amount Cb by adding Ps, Pi, and Po as in the following equation:
[Mathematical formula 9]

$$Cb = Ps + Pi + Po \qquad \ldots\ldots (9)$$

Subsequently, the charge/discharge instruction unit 172 determines whether or not the charge/discharge amount Cb calculated in step S180 is larger than 0 (S181). Cb is a positive value when the target battery package 2 is being charged; a negative value when the target battery package 2 is being discharged, and "0" when the target battery package 2 is not being charged or discharged.

Then, when a positive result is obtained in step S181, the charge/discharge instruction unit 172 determines whether or not the amount of charge to the target battery package 2 by solar power generation in the current time zone in the charge plan is "ALL" (Whether or not the value in the solar light charge amount field (see the field of reference numeral 79B in FIG. 35) in the charge plan acquired in step S165 in FIG. 12 is "ALL") (S182).

When a positive result is obtained in this determination, all the power that can be used for charging in the power generation amount Ps of the solar power generation facility 84 is used for charging the target battery package 2. Therefore, when the power generation amount Ps is smaller than the charge amount Cb to the target battery package 2, the charge/discharge instruction unit 172 assumes that all the power generation amounts Ps are used for charging, and sets the charge amount Cs from the solar power generation facility 84 to be equal to Ps (Cs = Ps), and sets the remaining power amount (Cb - Cs) as the charge amount from the extra-facility power distribution network 86 (S184).

On the other hand, when a positive result is obtained in step S182 (when the target value Cr_t is set), the charge/discharge instruction unit 172 compares the cumulative value Cr_c of the charge amount from the solar power generation facility 84 with Cr_t, and determines whether or not Cr_c has not reached Cr_t (Cs_c < Cs_t) (S183). Then, when a positive result is obtained in this determination, the charge/discharge instruction unit 172 executes the processing of step S184 described above.

On the other hand, when a negative result is obtained in step S183 (that is, when Cr_c is Cr_t or more), the charge/discharge instruction unit 172 sets Cs = 0 since the target battery package 2 is not charged any more from the solar power generation facility 84, and sets Co = Cb by supplying all the charged power Cb from the extra-facility power distribution facility 86 (S185).

Thereafter, the charge/discharge instruction unit 172 updates the cumulative values Cr_c and Co_c using Cs and Co obtained as described above, and determines all the values of the amounts of discharge Qri, Qro, Qdi, and Qdo from the target battery package 2 to be "0" (S186). This is because the discharge from the target battery package 2 is not performed while the target battery package 2 is charged. Thereafter, the charge/discharge instruction unit 172 ends the power-type-based charge/discharge amount calculation process.

On the other hand, when a negative result is obtained in the determination in step S181, the charge/discharge instruction unit 172 obtains the amount of power discharged from the target battery package 2 to the intra-facility power distribution network 85. Specifically, the charge/discharge instruction unit 172 first determines whether or not the power supply to the intra-facility power distribution network 85 is satisfied by the power generation amount Ps of the solar power generation facility 84 and the discharge amount Cs from the target battery package 2, that is, determines whether or not the following equation is satisfied (S187).
[Mathematical formula 10]

$$Pi < Cs - Ps \qquad \ldots \ldots (10)$$

Here, since Pi and Cs are negative values and Ps is a positive value, obtaining a positive result in step S187 means that Cs and Ps alone do not satisfy the power amount Pi required to be supplied to the intra-facility power distribution network 85, and the deficient amount of power is supplied from the extra-facility power distribution network 86. Thus, at this time, since all Cs are used for supply to the intra-facility power distribution network 85, the charge/discharge instruction unit 172 sets Pbi = Cs (S188), and thereafter, proceeds to step S192.

On the other hand, obtaining a negative result in the determination in step S187 means that the power supply to the intra-facility power distribution network 85 satisfies the required power amount Pi only with Cs and Ps. Therefore, the charge/discharge instruction unit 172 determines whether or not the amount of power generation Ps of the solar power generation facility 84 alone satisfies the amount of power Pi required to be supplied to the intra-facility power distribution network 85 (whether or not Ps > -Pi is satisfied) (S189).

When a positive result is obtained in this determination, the charge/discharge instruction unit 172 sets Pi = 0 (S190). This is because the discharge from the target battery package 2 to the intra-facility power distribution network 85 is not performed when a positive result is obtained in step S189. Thereafter, the charge/discharge instruction unit 172 proceeds to step S192. If a negative result is obtained in the determination in step S189, the charge/discharge instruction unit 172 sets shortage (Pi + Ps) to Pbi (S191), and then proceeds to step S192.

When the processing proceeds to step S192, the charge/discharge instruction unit 172 determines whether the discharge to the intra-facility power distribution network 85 is "ALL" in the discharge plan acquired in step S166 (FIG. 35) (S192). Then, when a positive result is obtained in this determination, the charge/discharge instruction unit 172 proceeds to step S59 in FIG. 16C, and then, executes steps S59 to S100 in FIGS. 16C and 16D in the same manner as described above, and then, ends the power-type-based charge/discharge amount calculation process.

On the other hand, when a negative result is obtained in the determination in step S192, the charge/discharge instruction unit 172 determines whether or not the total value (Fro + Fdo) of the discharge instruction from the target battery package 2 to the extra-facility power distribution network 86 is smaller than the discharge amount Po from the charge/discharge control device 165 to the extra-facility power distribution network 86 (S193).

Here, when the current flows in the discharge direction, the value of Po is negative. Therefore, if a negative result is obtained in the determination in step S193, the charge/discharge instruction unit 172 determines that the deemed discharge from the target battery package 2 to the extra-facility power distribution network 86 has not been performed, and determines: that the theoretical discharge amount Qbi from the target battery package 2 to the intra-facility power distribution network 85 is equal to the actual discharge amount Pbi (S199). In addition, the charge/discharge instruction unit 172 sets the power (Cb - Qbi) obtained by subtracting Pbi from the total discharge amount Cb from the target battery package 2 as the theoretical discharge amount Qbo to the extra-facility power distribution network 86 (S200), and then proceeds to step S201.

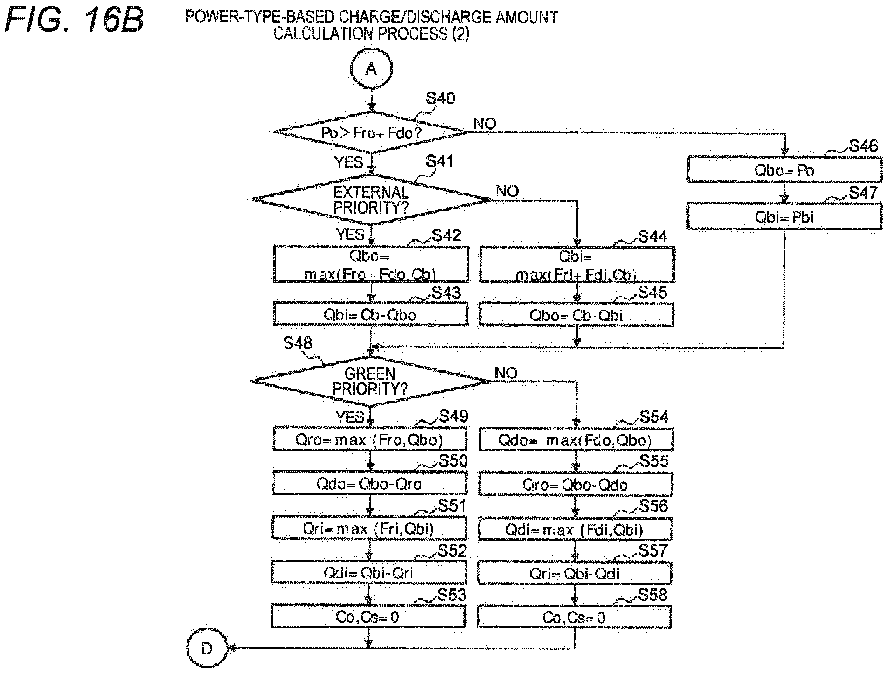

On the other hand, when a negative result is obtained in the determination of step S193, the' charge/discharge instruction unit 172 thereafter processes steps S194 to S198 and steps S201 to S211 in the same manner as steps S41 to S45 and steps S48 to S58 of FIG. 16B. Thereafter, the charge/discharge instruction unit 172 ends the power-type-based charge/discharge amount calculation process.

(3-3) Effects of present embodiment

According to the battery charge/discharge management system 160 of the present embodiment having the above configuration, in addition to the effect obtained by the battery charge/discharge management system 1 of the first embodiment, the system can be constructed using the commercially available power conditioner 161 and charge/discharge control device 165, and the effect that the battery charge/discharge management system 160 can be constructed only by slightly changing the existing system can be obtained.

(4) Fourth embodiment

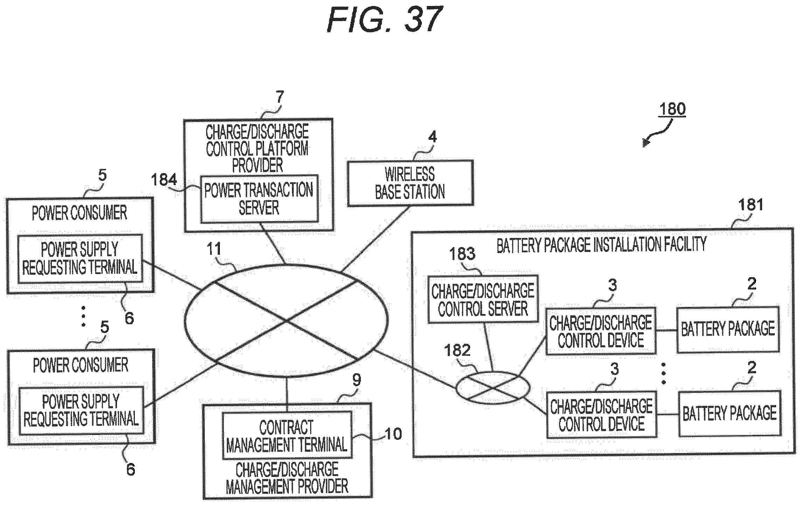

FIG. 37 in which parts corresponding to those in FIG. 1 are denoted by the same reference numerals shows a battery charge/discharge management system 180 according to a fourth embodiment. The battery charge/discharge management system 180 is largely different from the battery charge/discharge management system 1 of the first embodiment in that a charge/discharge control server 183 is connected to a local network 182 in a facility (battery package installation facility) 181 in which a battery package 2 is installed. When there are a plurality of battery package installation facilities 181, the charge/discharge control server 183 is installed for each battery package installation facility 181.

One or more charge/discharge control devices 3 are connected to the network 11 of the battery package installation facility 181, whereby the charge/discharge control server 183 gives various instructions to the charge/discharge control devices 3 via the network 182 so that the charge/discharge of the battery package 2 connected to each of the charge/discharge control devices 3 can be managed.

On the charge/discharge control platform provider 7 side, a power transaction server 184 is installed instead of the charge/discharge control server. The power transaction server 184 receives the supply and demand request from each power consumer 5 described above, and modifies the charge plan and the discharge plan for any one of the battery packages 2 prepared by the charge/discharge control server 183 in any one of the battery package installation facilities 181 according to the received supply and demand request. In addition, the power transaction server 184 acquires, from the contract management terminal 10, contract information that the charge/discharge management provider 9 has concluded with each user, and manages the contract information.

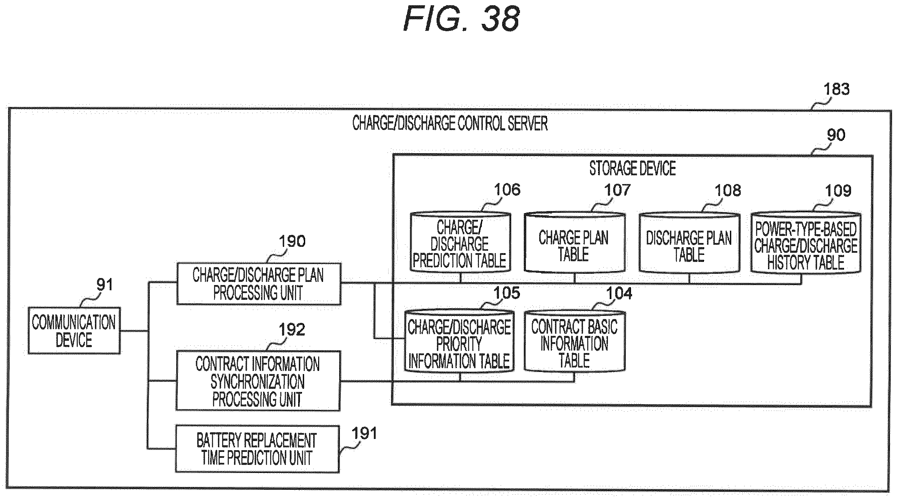

FIG. 38 in which parts corresponding to those in FIG. 17 are denoted by the same reference numerals shows a logical configuration of the charge/discharge control server 183 according to the present embodiment. The charge/discharge control server 183 is configured of a general-purpose server device including a CPU and a memory (not shown) as hardware, and the storage device 90 and the communication device 91 shown in FIG. 38.

The storage device 90 stores and holds a contract basic information table 104, a charge/discharge priority information table 105, a charge/discharge prediction table 106, a charge plan table 107, a discharge plan table 108, and a power-type-based charge/discharge history table 109,

The charge/discharge control server 183 according to the present embodiment is provided with a charge/discharge plan processing unit 190, a battery replacement time prediction unit 191, and a contract information synchronization processing unit 192. Each of the charge/discharge plan processing unit 190, the battery replacement time prediction unit 191, and the contract information synchronization processing unit 192 is a functional unit implemented by the CPU executing- a program loaded from the storage device 90 into the memory.

The charge/discharge plan processing unit 190 appropriately updates the charge/discharge prediction table 106, the charge plan table 107, the discharge plan table 108, and the power-type-based charge/discharge history table 109 according to the processing procedure described above with reference to FIG. 28 for each battery package 2 in the battery package installation facility 181 in which the charge/discharge control server 183 is installed.

In addition, the battery replacement time prediction unit 191 estimates the current and future deterioration states of the battery module 31 (FIG. 4) stored in each of the battery packages 2 on the basis of the operation history information of each battery package 2 in the battery package installation facility 181 in which the charge/discharge control server 183 is installed, and predicts the replacement time of the battery module 31. Then, for the battery module 31 whose replacement time is close, the battery replacement time prediction unit 191 requests the contract management terminal 10 of the charge/discharge management provider 9 to replace the battery module 31 via the communication device 91:

In the first and second embodiments described above, the charge/discharge control server 8 (FIG. 1, FIG. 17) holds the operation history table 103 described above with respect to FIG. 21 in the storage device 90, and the battery replacement time prediction unit 112 (FIG. 17) predicts the replacement time of the battery module 31 loaded in each battery package 2 based on the operation history information of each battery package 2 stored in the operation history table 103.

However, in the case of the present embodiment, the battery replacement time prediction unit 191 communicates with each battery package 2 in the battery package installation facility 181 in which the charge/discharge control server 183 is installed via the communication device 91, and predicts the replacement time based on the operation history information of the battery package 2 stored in the operation history table 55 (FIG. 5) held by the package controller 26 (FIG. 5) of the battery package 2.

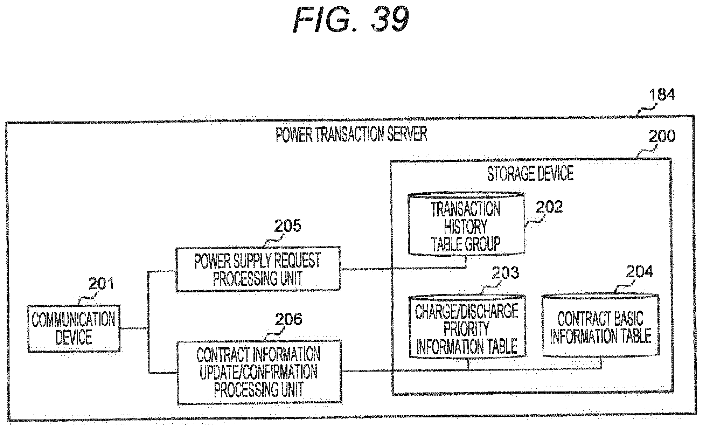

Further, the contract information synchronization processing unit 192 communicates with the power transaction server 184 of the charge/discharge control platform provider 7 via the communication device 91, and executes a synchronization process so that the contents of the charge/discharge priority information table 105 and the contract basic information table 104 stored in the storage device 90 of the charge/discharge control server 183 are always the same as the contents of the charge/discharge priority information table 203 (FIG. 39) and the contract basic information table 204 (FIG. 39) held by the power transaction server 184 as described later.

FIG. 39 shows a configuration example of the power transaction server 184. The power transaction server 184 is configured of a general-purpose server device including a CPU and a memory (not shown) as hardware, and the storage device 200 and the communication device 201 shown in FIG. 39.

The storage device 200 stores and holds a transaction history table group 202, a charge/discharge priority information table 203, and a contract basic information table 204. Since the transaction history table group 202, the charge/discharge priority information table 203, and the contract basic information table 204 have the same configurations as the transaction history table group 110 (FIG. 17), the charge/discharge priority information table 105 (FIG. 23), and the contract basic information table 104 (FIG. 22) held by the charge/discharge control server 8 (FIG. 17) in the first and second embodiments, the description thereof is omitted here.

In addition, the power transaction server 184 is provided with a power supply request processing unit 205 and a contract information update/confirmation processing unit 206. Each of the power supply request processing unit 205 and the contract information update/confirmation processing unit 206 is a functional unit implemented by the CPU executing a program loaded from the storage device 90 to the memory.

The contract information update/confirmation processing unit 206 has a function of executing processing similar to that of the contract information update/confirmation processing unit 113 (FIG. 17, FIG. 34) of the first and second embodiments described above with reference to FIG. 17.

In addition, the power supply request processing unit 205 executes the power supply request receiving process described above with reference to FIG. 29 and the deemed power transaction process described above with reference to FIG. 30, similarly to the power supply request processing units 115 (FIG. 17, FIG. 34) of the first and second embodiments.

However, the processing of step S131 of the power supplying request receiving processing of FIG. 29 is executed by inquiring the charge/discharge control server 183 of each battery package installation facility 181 about the surplus power via the communication device 201. In each charge/discharge control server 183, when this inquiry is received, the charge/discharge plan processing unit 190 (FIG. 38) examines the surplus power and transmits the result to the power transaction, server 184.

In the present embodiment, the charge/discharge control server 185 also executes the processing in step S133 in FIG. 29. In step S133 of FIG. 29, the power transaction server 184 notifies the charge/discharge control server 183 provided in the battery package installation facility 181 in which the battery package 2 determined as the power transmission source in step S132 is installed of the power amount requested for power transmission, and the charge/discharge plan processing unit 190 in the charge/discharge control server 183 that has received such notification updates the charge plan table 107 and the discharge plan table 108 so as to transmit the specified power amount.

Similarly to step S131 of FIG. 29, the processing of step S140 of the deemed power transaction processing of FIG. 30 is also executed by the power supply request processing unit 205 of the power transaction server 184 inquiring the charge/discharge control server 183 of each battery package installation facility 181 about the surplus power via the communication device 201. In each charge/discharge control server 183, when this inquiry is received, the charge/discharge plan processing unit 190 examines the surplus power and transmits the result to the power transaction server 184.

In step S147 of FIG. 30, the charge/discharge plan processing unit 190 of the charge/discharge control server 183 connected to the charge/discharge control device 3 that has performed the deemed power transaction creates and updates the charge plan and the discharge plan using the latest information.

In the battery charge/discharge management system 180 of the present embodiment having the above configuration, the charge/discharge control server 183 installed in the battery package installation facility 181 records and manages detailed data (data stored in charge/discharge prediction table 106, charge plan table 107, discharge plan table 108, and power-type-based charge/discharge history table 109) regarding power consumption in each battery package installation facility 181.

In this case, for example, in a case where the battery package installation facility 181 is a factory, the power consumption data is data reflecting a production status of a product produced in the factory, and thus, there is also a demand to be not disclosed to the outside by the battery package installation facility 181.

In response to such a demand, according to the battery charge/discharge management system 180 of the present embodiment, in addition to the effect obtained by the battery charge/discharge management system 1 of the first embodiment, it is possible to obtain an effect that the operation management of the battery package 2 and the green power transaction can be performed without taking out detailed data of the power consumption in the battery package installation facility 180, which may include sensitive information, from the battery package installation facility 181 to the outside.

(5) Other embodiments

In the first to fourth embodiments described above, the case where the battery package 2.is configured as shown in FIGS. 2 to 5 and 31 has been described, but the present invention is not limited thereto, and various other configurations can be widely applied.

Similarly, in the first to fourth embodiments described above, the case where the charge/discharge control device 3,165 is configured as shown in FIG. 11 or 33 has been described, but the present invention is not limited thereto, and various other configurations can be widely applied.

In the first to fourth embodiments described above, the functions of the charge/discharge control servers 8,166 and 183 as the charge/discharge plan preparing device for preparing the charge/discharge plan (charge plan and discharge plan) are mounted on one server device. However, the present invention is not limited thereto, and the functions of the charge/discharge control servers 8,166 and 183 may be distributed and mounted on a plurality of computer devices constituting a distributed computing system.

Industrial Applicability

The present invention can be applied to battery charge/discharge management systems having various configurations for managing charge/discharge of a battery whose use place can be changed.

Reference Signs List

**[0421]**

　　　1, 160, 180 battery charge/discharge management system
　　　2 battery package
　　　3, 165 charge/discharge control device
　　　5 power consumer
　　　6 power supply requesting terminal
　　　7 charge/discharge control platform provider
　　　8, 166, 183 charge/discharge control server
　　　9 charge/discharge management provider
　　　10' contract management terminal
　　　25 BMS
　　　26 package controller
　　　31 battery module
　　　40 central processing unit
　　　52, 101 use history table
　　　53, 102 power-type-based storage amount table
　　　55, 103 operation history table
　　　75 charge/discharge amount determination unit
　　　76 charge/discharge amount adjuster
　　　78A to 78E, 164A to 164C power amount measuring device
　　　79, 107 charge plan table
　　　80, 108 discharge plan table
　　　81, 109 power-type-based charge/discharge history table
　　　84 solar power generation facility
　　　85 intra-facility power distribution network
　　　86 extra-facility power distribution network
　　　104, 204 contract basic information table
　　　105, 203 charge/discharge priority information table
　　　106 charge/discharge prediction table

110, 202 transaction history table group
110A transaction summary table
110B transaction detail table
111 battery package synchronization processing unit
112, 191 battery replacement time prediction unit
113, 206 contract information update/confirmation processing unit
114, 190 charge/discharge plan processing unit
115, 205 power supply request processing unit
120 contract information input/confirmation screen
140 charge/discharge priority information input/confirmation screen
151 slot
152 portable storage medium
163 connection device
172 charge/discharge instruction unit
184 power transaction server
192 contract information synchronization processing unit

**Claims**

1. A battery charge/discharge management system that manages charge/discharge of a battery, the system comprising:

   a battery package in which the battery is housed and which stores and holds a storage amount of power stored in the battery for each power type; and
   a charge/discharge control device that controls charge/discharge of the battery package and notifies the battery package of an amount of power for each power type charged and discharged from the battery package, wherein
   the battery package updates a storage amount of the power stored in the battery for each power type stored and held, based on the power amount for each power type charged and discharged from the battery package notified from the charge/discharge control device.

2. The battery charge/discharge management system according to claim 1, wherein

   the power type includes green power as renewable energy and non-green power as non-renewable energy, and
   the battery package stores and holds respective storage amounts of the green power and the non-green power.

3. The battery charge/discharge management system according to claim 2, further comprising a charge/discharge plan preparing device that prepares a charge/discharge plan for the battery package and transmits the prepared charge/discharge plan to the charge/discharge control device, wherein
   the charge/discharge control device controls charge/discharge of the battery package according to the charge/discharge plan given from the charge/discharge plan preparing device.

4. The battery charge/discharge management system according to claim 3, wherein

   the charge/discharge plan preparing device updates the charge/discharge plan in response to a power supply request from a power consumer specifying the power type and the power amount, and transmits the updated charge/discharge plan to the charge/discharge control device, and
   the charge/discharge control device controls charge/discharge of the battery package according to the updated charge/discharge plan given from the charge/discharge plan preparing device.

5. The battery charge/discharge management system according to claim 4, wherein

   a plurality of combinations of the battery package and the charge/discharge control device are provided, and
   the charge/discharge plan preparing device instructs the plurality of battery packages to rewrite the storage amounts of the green power and the non-green power so that the sum of the storage amounts of the green power is invariable and the sum of the storage amounts of the green power and the non-green power in the individual battery packages is also invariable.

6. A battery charge/discharge management method executed in a battery charge/discharge management system that manages charge/discharge of a battery,

the battery charge/discharge management system including
a battery package in which the battery is housed, and
a charge/discharge control device that controls charge/discharge of the battery package,
the method comprising:

a first step of storing and holding, by the battery package, a storage amount of power stored in the battery for each power type;
a second step of notifying the battery package of the amount of power charged and discharged from the battery package for each power type by the charge/discharge control device; and
a third step of updating, by the battery package, a storage amount of the power stored in the battery for each power type stored and held based on the power amount of each power type charged and discharged from the battery package notified from the charge/discharge control device.

7. The battery charge/discharge management method according to claim 6, wherein

the power type includes green power as renewable energy and non-green power as non-renewable energy, and
the battery package stores and holds respective storage amounts of the green power and the non-green power.

8. The battery charge/discharge management method according to claim 7, wherein

the battery charge/discharge management system further includes a charge/discharge plan preparing device that prepares a charge/discharge plan for the battery package and transmits the prepared charge/discharge plan to the charge/discharge control device, and
the charge/discharge control device controls charge/discharge of the battery package according to the charge/discharge plan given from the charge/discharge plan preparing device.

9. The battery charge/discharge management method according to claim 8, wherein

the charge/discharge plan preparing device updates the charge/discharge plan in response to a power supply request from a power consumer specifying the power type and the power amount, and transmits the updated charge/discharge plan to the charge/discharge control device, and
the charge/discharge control device controls charge/discharge of the battery package according to the updated charge/discharge plan given from the charge/discharge plan preparing device.

10. The battery charge/discharge management method according to claim 9, wherein

a plurality of combinations of the battery package and the charge/discharge control device are provided, and
the charge/discharge plan preparing device instructs the plurality of battery packages to rewrite the storage amounts of the green power and the non-green power so that the sum of the storage amounts of the green power is invariable and the sum of the storage amounts of the green power and the non-green power in the individual battery packages is also invariable.

## FIG. 1

# FIG. 2

FIG. 3

EP 4 398 381 A1

FIG. 4

# FIG. 5

# FIG. 6

EP 4 398 381 A1

## USE HISTORY TABLE 52

| CONTRACT NUMBER | USER | FACILITY ID | CHARGE/DISCHARGE DEVICE ID | OPERATION START DATE | OPERATION END DATE |
|---|---|---|---|---|---|
| 353 | A COMPANY | 1012 | 95 | 2019/04/01 | 2020/03/31 |
| 452 | B COMPANY | 1351 | 67 | 2020/05/01 | 2020/11/30 |
| 346 | C COMPANY | 0233 | 12,266 | 2021/02/01 | |
| ... | ... | ... | ... | ... | ... |
| 52A | 52B | 52C | 52D | 52E | 52F |

# FIG. 7

POWER-TYPE-BASED STORAGE AMOUNT TABLE 53

| POWER TYPE | POWER TYPE DETAIL | STORAGE AMOUNT | REGISTRATION DATE AND TIME |
|---|---|---|---|
| GREEN | SOLAR POWER | 5.3kWh | 2021/05/25 15:25:00 |
| GREEN | WIND POWER | 1.0kWh | 2021/05/25 15:25:00 |
| NON-GREEN | A POWER | 3.6kWh | 2021/05/25 15:25:00 |
| GREEN | SOLAR POWER | 5.8kWh | 2021/05/25 15:26:00 |
| GREEN | WIND POWER | 1.2kWh | 2021/05/25 15:26:00 |
| NON-GREEN | A POWER | 3.5kWh | 2021/05/25 15:26:00 |
| ... | ... | ... | ... |

53A     53B     53C     53D

## FIG. 8

OPERATION HISTORY TABLE 55

| DATE AND TIME | LATITUDE | LONGITUDE | ALTITUDE | TEMPERATURE | HUMIDITY | ATMOSPHERIC PRESSURE | VOLTAGE | CURRENT |
|---|---|---|---|---|---|---|---|---|
| 2021/05/25 15:25:00 | 35.62860 | 139.73882 | 2.9 | 27.2 | 53.5 | 1009 | 332.5 | 9.7 |
| 2021/05/25 15:25:10 | 35.62860 | 139.73882 | 2.9 | 27.0 | 54.2 | 1010 | 332.4 | 8.8 |
| ... | ... | ... | ... | ... | ... | ... | ... | ... |
| 55A | 55B | 55C | 55D | 55E | 55F | 55G | 55H | 55I |

EP 4 398 381 A1

# FIG. 9

INITIAL SETTING PROCESS

```
              ( START )
                  │
                  ▼                            S1
  ┌─────────────────────────────────────────┐
  │      READ BATTERY PACKAGE SPECIFIC ID    │
  └─────────────────────────────────────────┘
                  │                            S2
  ┌─────────────────────────────────────────┐
  │    INQUIRE ABOUT BATTERY/BMS INFORMATION │
  └─────────────────────────────────────────┘
                  │
                  ▼          S3   YES
         ◇ ALL PIECES OF ────────────┐
           INFORMATION ACQUIRED? ◇    │
                  │ NO               │
                  ▼          S4       │
  ┌─────────────────────────────────────────┐
  │   REQUEST FOR ACQUISITION OF INFORMATION │
  └─────────────────────────────────────────┘
                  │                            │
    NO  ◇─────────▼──────────◇   S5            │
         INFORMATION RECEIVED?                 │
                  │ YES ◄────────────────────┘
      S6          ▼
  ┌─────────────────────────────────────────┐
  │            STORE INFORMATION             │
  └─────────────────────────────────────────┘
                  │                            S7
  ┌─────────────────────────────────────────┐
  │     TRANSMIT BATTERY/BMS INFORMATION     │
  └─────────────────────────────────────────┘
                  │                            S8
  ┌─────────────────────────────────────────┐
  │ LOAD CORRESPONDING BMS COOPERATION PROGRAM│
  └─────────────────────────────────────────┘
                  │                            S9
  ┌─────────────────────────────────────────┐
  │      START BMS COOPERATION PROGRAM       │
  └─────────────────────────────────────────┘
                  │
                  ▼
               ( END )
```

# FIG. 10

60

| SPECIFIC ID | 123456789 | 61 |

BATTERY MANUFACTURER ▽ — 62 / 62A

BATTERY MODEL NUMBER ▽ — 63 / 63A

BATTERY SERIAL NUMBER — 64

BMS MANUFACTURER ▽ — 65 / 65A

BMS MODEL NUMBER ▽ — 66 / 66A

BMS SERIAL NUMBER — 67

REGISTER

68

FIG. 11

EP 4 398 381 A1

## FIG. 12

CHARGE PLAN TABLE 79

| TIME | SOLAR POWER CHARGE AMOUNT | POWER DISTRIBUTION NETWORK CHARGE AMOUNT | PRIORITY | UPDATE DATE AND TIME |
|---|---|---|---|---|
| 00:00 | 0kWh | 1kWh | POWER DISTRIBUTION NETWORK | 2021/05/25 15:25:00 |
| 01:00 | 0kWh | 0kWh | – | 2021/05/25 15:25:00 |
| ... | ... | ... | ... | ... |
| 10:00 | 0kWh | 0kWh | – | 2021/05/25 15:25:00 |
| 11:00 | ALL | 0kWh | SOLAR POWER | 2021/05/25 15:25:00 |
| ... | ... | ... | ... | ... |
| 16:00 | up to 1kWh | total 3kWh | SOLAR POWER | 2021/05/25 15:25:00 |
| 17:00 | 0kWh | 0kWh | – | 2021/05/25 15:25:00 |
| ... | ... | ... | ... | ... |
| 23:00 | ALL | Total 5kWh | POWER DISTRIBUTION NETWORK | 2021/05/24 23:25:00 |
| 79A | 79B | 79C | 79D | 79E |

EP 4 398 381 A1

# FIG. 13

### DISCHARGE PLAN TABLE 80

| TIME | GREEN→ INTERNAL | GREEN→ EXTERNAL | NON-GREEN →INTERNAL | NON-GREEN →EXTERNAL | INTERNAL/ EXTERNAL PRIORITY | TYPE PRIORITY | UPDATE DATE AND TIME |
|---|---|---|---|---|---|---|---|
| 00:00 | 0kWh | 0kWh | 0kWh | 0kWh | — | — | 2021/05/24 23:25:00 |
| 01:00 | ALL | 0kWh | 0kWh | 0kWh | INTERNAL | GREEN | 2021/05/24 23:25:00 |
| ... | ... | ... | ... | ... | ... | ... | ... |
| 10:00 | 1kWh | 0kWh | 3kWh | 0kWh | INTERNAL | NON-GREEN | 2021/05/24 23:25:00 |
| 11:00 | 0kWh | 0kWh | 0kWh | 0kWh | — | — | 2021/05/24 23:25:00 |
| ... | ... | ... | ... | ... | ... | ... | ... |
| 16:00 | 0kWh | 0kWh | 0kWh | 0kWh | — | — | 2021/05/24 23:25:00 |
| 17:00 | 0kWh | 2kWh | ALL | 0kWh | INTERNAL | GREEN | 2021/05/24 23:25:00 |
| ... | ... | ... | ... | ... | ... | ... | ... |
| 23:00 | 0kWh | 0kWh | 0kWh | 0kWh | — | — | 2021/05/24 23:25:00 |
| 80A | 80B | 80C | 80D | 80E | 80F | 80G | 80H |

EP 4 398 381 A1

## FIG. 14

POWER-TYPE-BASED CHARGE/DISCHARGE HISTORY TABLE 81

| DATE AND TIME | SOLAR POWER GENERATION AMOUNT | EXTRA-FACILITY CHARGE/ DISCHARGE AMOUNT | INTRA-FACILITY CHARGE/ DISCHARGE AMOUNT | TOTAL CHARGE AMOUNT | EXTRA-FACILITY →INTERNAL POWER SUPPLY AMOUNT | GREEN→ INTERNAL DISCHARGE AMOUNT | GREEN→ EXTERNAL DISCHARGE AMOUNT |
|---|---|---|---|---|---|---|---|
| 2021/05/25 15:25:00 | 0.2kWh | 0.2kWh | 0kWh | 0.4kWh | 0kWh | 0kWh | 0kWh |
| ... | ... | ... | ... | ... | ... | ... | ... |
| 2021/05/25 15:25:10 | 0kWh | -0.6kWh | -0.1kWh | -0.7kWh | 0kWh | -0.1kWh | 0kWh |
| ... | ... | ... | ... | ... | ... | ... | ... |
| 81A | 81B | 81C | 81D | 81E | 81F | 81G | 81H |

| NON-GREEN →INTERNAL DISCHARGE AMOUNT | NON-GREEN →EXTERNAL DISCHARGE AMOUNT | GREEN CHARGE/ DISCHARGE AMOUNT | NON-GREEN CHARGE/ DISCHARGE AMOUNT | GREEN STORAGE AMOUNT | NON-GREEN STORAGE AMOUNT |
|---|---|---|---|---|---|
| 0kWh | 0kWh | 0.2kWh | 0.2kWh | 10.5kWh | 5.2kWh |
| ... | ... | ... | ... | ... | ... |
| -0.5kWh | -0.1kWh | -0.1kWh | -0.6kWh | -9.2kWh | 4.8kWh |
| ... | ... | ... | ... | ... | ... |
| 81I | 81J | 81K | 81L | 81M | 81N |

EP 4 398 381 A1

# FIG. 15

CHARGE AMOUNT DETERMINATION PROCESS

```
                    ┌──────────────┐
                    │    START     │
                    └──────┬───────┘
                           │            S10
          ┌────────────────▼────────────────┐
          │    ACQUIRE BATTERY PACKAGE ID    │
          └────────────────┬────────────────┘
                           │            S11
          ┌────────────────▼────────────────┐
          │       INQUIRE ABOUT WHETHER      │
          │   CHARGE/DISCHARGE IS PERMITTED  │
          └────────────────┬────────────────┘
                           │            S12          NO
                  ◇────────▼─────────◇──────────────────────┐
                  │  CHARGE/DISCHARGE │                      │
                  │    PERMITTED?     │                      │
                  ◇───────────────────◇                     │
                           │ YES       S14        S13        │
          ┌────────────────▼────────────────┐  ┌────────────▼────────────┐
          │      READ CHARGE PLAN AT         │  │   TRANSMIT OPERATION    │
          │  CURRENT TIME OR IN PAST TIME    │  │   STOP NOTIFICATION     │
          │  ZONE CLOSEST TO CURRENT TIME    │  └────────────┬────────────┘
          └────────────────┬────────────────┘               │
                           │            S15         ┌────────▼────────┐
          ┌────────────────▼────────────────┐       │      END        │
          │     READ DISCHARGE PLAN AT       │       └─────────────────┘
          │  CURRENT TIME OR IN PAST TIME    │
          │  ZONE CLOSEST TO CURRENT TIME    │
          └────────────────┬────────────────┘
     S16                   │
          ┌────────────────▼────────────────┐
          │   CHECK STORAGE AMOUNT FOR       │
          │        EACH POWER TYPE           │
          └────────────────┬────────────────┘
                           │            S17
          ┌────────────────▼────────────────┐
          │   CHECK INTEGRATED VALUE OF      │
          │    CHARGE/DISCHARGE AMOUNT       │
          └────────────────┬────────────────┘
                           │            S18
          ┌────────────────▼────────────────┐
          │     OUTPUT CHARGE/DISCHARGE      │
          │          INSTRUCTION             │
          └────────────────┬────────────────┘
                           │            S19
          ┌────────────────▼────────────────┐
          │       WAIT FOR CERTAIN TIME      │
          └────────────────┬────────────────┘
                           │            S20       NO
                  ◇────────▼─────────◇──────────────┐
                  │  NEXT RECORD TIME? │             │
                  ◇───────────────────◇             │
                           │ YES       S21
          ┌────────────────▼────────────────┐
          │    CALCULATE AND RECORD          │
          │  CHARGE/DISCHARGE AMOUNT         │
          │    FOR EACH POWER TYPE           │
          └────────────────┬────────────────┘
```

## FIG. 16A

POWER-TYPE-BASED CHARGE/DISCHARGE AMOUNT
CALCULATION PROCESS (1)

*FIG. 16B*  POWER-TYPE-BASED CHARGE/DISCHARGE AMOUNT
CALCULATION PROCESS (2)

## FIG. 16C

POWER-TYPE-BASED CHARGE/DISCHARGE AMOUNT
CALCULATION PROCESS (3)

(B)

S59
$$Pbo = Cb - Pbi$$

S60
INTERNAL PRIORITY? — NO → (C)

YES S61
GREEN IS ALL? — NO →

YES S62
GREEN PRIORITY? — NO →

S69
GREEN PRIORITY? — NO →

YES S70
$$Qri = max(Fri, Pbi)$$
$$Qdi = Pbi - Qri$$

S71
$$Qro = max(Fro, Pbo)$$
$$Qdo = Pbo - Qro$$

S72
$$Co, Cs = 0$$

S73
$$Qdi = Pbi$$
$$Qri = 0$$

S74
$$Qdo = max(Fdo, Pbo)$$
$$Qro = Pbo - Qdo$$

S75
$$Co, Cs = 0$$

YES S63
$$Qri = Pbi$$
$$Qdi = 0$$

S64
$$Qro = max(Fro, Pbo)$$
$$Qdo = Pbo - Qro$$

S65
$$Co, Cs = 0$$

S66
$$Qdi = max(Fdi, Pbi)$$
$$Qri = Pbi - Qdi$$

S67
$$Qdo = max(Fdo, Pbo)$$
$$Qro = Pbo - Qdo$$

S68
$$Co, Cs = 0$$

(D)

EP 4 398 381 A1

# FIG. 16D

POWER-TYPE-BASED CHARGE/DISCHARGE AMOUNT
CALCULATION PROCESS (4)

C

S76 — $Qbo = max(Fro+Fdo, Cb)$

S77 — $Qbi = Cb-Qbo$

S78 — GREEN IS ALL?
- NO
- YES

**NO branch (GREEN IS ALL? = NO):**

S90 — GREEN PRIORITY?
- YES → S91
- NO → S96

S91 — $Qro = max(Fro, Qbo)$
S92 — $Qdo = Qbo-Qro$
S93 — $Qri = max(Fri, Qbi)$
S94 — $Qdi = Qbi-Qri$
S95 — $Co, Cs = 0$

S96 — $Qdo = max(Fdo, Qbo)$
S97 — $Qro = Qbo-Qdo$
S98 — $Qdi = Qbi$
S99 — $Qri = 0$
S100 — $Co, Cs = 0$

**YES branch (GREEN IS ALL? = YES):**

S79 — GREEN PRIORITY?
- YES → S80
- NO → S85

S80 — $Qro = max(Fro, Qbo)$
S81 — $Qdo = Qbo-Qro$
S82 — $Qri = Qbi$
S83 — $Qdi = 0$
S84 — $Co, Cs = 0$

S85 — $Qdo = max(Fdo, Qbo)$
S86 — $Qro = Qbo-Qdo$
S87 — $Qdi = max(Fdi, Qbi)$
S88 — $Qri = Qbi-Qdi$
S89 — $Co, Cs = 0$

D

EP 4 398 381 A1

# FIG. 17

CHARGE/DISCHARGE CONTROL SERVER 8

90 STORAGE DEVICE

110 TRANSACTION HISTORY TABLE GROUP

115 POWER SUPPLY REQUEST PROCESSING UNIT

91 COMMUNICATION DEVICE

114 CHARGE/DISCHARGE PLAN PROCESSING UNIT

113 CONTRACT INFORMATION UPDATE/CONFIRMATION PROCESSING UNIT

111 BATTERY PACKAGE SYNCHRONIZATION PROCESSING UNIT

112 BATTERY REPLACEMENT TIME PREDICTION UNIT

106 CHARGE/DISCHARGE PREDICTION TABLE

107 CHARGE PLAN TABLE

108 DISCHARGE PLAN TABLE

109 POWER-TYPE-BASED CHARGE/DISCHARGE HISTORY TABLE

105 CHARGE/DISCHARGE PRIORITY INFORMATION TABLE

104 CONTRACT BASIC INFORMATION TABLE

100 BATTERY/BMS INFORMATION TABLE

101 USE HISTORY TABLE

102 POWER-TYPE-BASED STORAGE AMOUNT TABLE

103 OPERATION HISTORY TABLE

EP 4 398 381 A1

# FIG. 18

BATTERY/BMS INFORMATION TABLE 100

| SPECIFIC ID | BATTERY MANUFACTURER | BATTERY MODEL NUMBER | BATTERY SERIAL NUMBER | BMS MANUFACTURER | BMS MODEL NUMBER | BMS SERIAL NUMBER |
|---|---|---|---|---|---|---|
| 5367 | ABC COMPANY | A537 | 382485 | ZZZ COMPANY | Z532 | 3642 |
| 3254 | DEF COMPANY | D211 | 4983 | XXX COMPANY | X352 | 4566 |
| ... | ... | ... | ... | ... | ... | ... |
| 100A | 100B | 100C | 100D | 100E | 100F | 100G |

EP 4 398 381 A1

# FIG. 19

USE HISTORY TABLE 101

| SPECIFIC ID | CONTRACT NUMBER | USER | FACILITY ID | CHARGE/DISCHARGE DEVICE ID | OPERATION START DATE | OPERATION END DATE |
|---|---|---|---|---|---|---|
| 345 | 353 | A COMPANY | 1012 | 95 | 2019/04/01 | 2020/03/31 |
| 345 | 452 | B COMPANY | 1351 | 67 | 2020/05/01 | 2020/11/30 |
| 345 | 346 | C COMPANY | 0233 | 12,266 | 2021/02/01 | |
| ... | ... | ... | ... | ... | ... | ... |

| 101A | 101B | 101C | 101D | 101E | 101F | 101G |

# *FIG. 20*

**POWER-TYPE-BASED STORAGE AMOUNT TABLE 102**

| SPECIFIC ID | POWER TYPE | POWER TYPE DETAIL | STORAGE AMOUNT | REGISTRATION DATE AND TIME |
|---|---|---|---|---|
| 345 | GREEN | SOLAR POWER | 5.3kWh | 2021/05/25 15:25:00 |
| 345 | GREEN | WIND POWER | 1.0kWh | 2021/05/25 15:25:00 |
| 345 | NON-GREEN | A POWER | 3.6kWh | 2021/05/25 15:25:00 |
| 345 | GREEN | SOLAR POWER | 5.8kWh | 2021/05/25 15:26:00 |
| 345 | POWER TYPE | WIND POWER | 1.2kWh | 2021/05/25 15:26:00 |
| 345 | NON-GREEN | A POWER | 3.5kWh | 2021/05/25 15:26:00 |
| ... | ... | ... | ... | ... |
| 102A | 102B | 102C | 102D | 102E |

# FIG. 21

OPERATION HISTORY TABLE 103

| SPECIFIC ID | DATE AND TIME | LATITUDE | LONGITUDE | ALTITUDE | TEMPERATURE | HUMIDITY | ATMOSPHERIC PRESSURE | VOLTAGE | CURRENT |
|---|---|---|---|---|---|---|---|---|---|
| 345 | 2021/05/25 15:25:00 | 35.62860 | 139.73882 | 2.9 | 27.2 | 53.5 | 1009 | 332.5 | 9.7 |
| 345 | 2021/05/25 15:25:10 | 35.62860 | 139.73882 | 2.9 | 27.0 | 54.2 | 1010 | 332.4 | 8.8 |
| ... | ... | ... | ... | ... | ... | ... | ... | ... | ... |
| 103A | 103B | 103C | 103D | 103E | 103F | 103G | 103H | 103I | 103J |

EP 4 398 381 A1

# FIG. 22

CONTRACT BASIC INFORMATION TABLE 104

| CONTRACT NUMBER | SPECIFIC ID | USER | FACILITY ID | CHARGE/DISCHARGE DEVICE ID | OPERATION START DATE | OPERATION END DATE |
|---|---|---|---|---|---|---|
| 2533 | 5367 | D COMPANY | 1012 | 35 | 2019/04/01 | 2020/08/31 |
| 3253 | 1642 | E COMPANY | 1351 | 45 | 2020/05/01 | |
| 452 | 4563 | F COMPANY | 0233 | 34,53,41 | 2021/02/01 | |
| ... | ... | ... | ... | ... | ... | ... |
| 104A | 104B | 104C | 104D | 104E | 104F | 104G |

EP 4 398 381 A1

## FIG. 23

CHARGE/DISCHARGE PRIORITY INFORMATION TABLE 105

| CHARGE/DISCHARGE DEVICE ID | TIME | PRIORITY | INTERNAL/ EXTERNAL PRIORITY | TYPE PRIORITY | ALLOWABLE POWER SELLING AMOUNT |
|---|---|---|---|---|---|
| 35 | 00:00 | POWER DISTRIBUTION NETWORK | INTERNAL | GREEN | 10% |
| ... | ... | ... | ... | ... | ... |
| 35 | 10:00 | SOLAR POWER | INTERNAL | NON-GREEN | 5% |
| 35 | 11:00 | SOLAR POWER | INTERNAL | NON-GREEN | 5% |
| ... | ... | ... | ... | ... | ... |
| 35 | 16:00 | SOLAR POWER | INTERNAL | GREEN | 5% |
| 35 | 17:00 | POWER DISTRIBUTION NETWORK | INTERNAL | GREEN | 5% |
| ... | ... | ... | ... | ... | ... |
| 35 | 23:00 | POWER DISTRIBUTION NETWORK | INTERNAL | GREEN | 10% |
| 105A | 105B | 105C | 105D | 105E | 105F |

EP 4 398 381 A1

# FIG. 24

## CHARGE/DISCHARGE PREDICTION TABLE 106

| TIME | SOLAR POWER GENERATION AMOUNT | INTRA-FACILITY DISCHARGE AMOUNT | POWER TRANSMISSION AMOUNT | PURCHASED POWER AMOUNT | GREEN STORAGE AMOUNT | NON-GREEN STORAGE AMOUNT | UPDATE DATE AND TIME |
|---|---|---|---|---|---|---|---|
| 00:00 | 0kWh | 1.1kWh | 0kWh | -5.0kWh | 2.3kWh | 2.8kWh | 2021/05/24 23:25:00 |
| 01:00 | 0kWh | 1.2kWh | 0kWh | -5.0kWh | 2.3kWh | 5.3kWh | 2021/05/24 23:25:00 |
| ... | ... | ... | ... | ... | ... | ... | ... |
| 10:00 | 5.1kWh | 4.2kWh | 0kWh | 0kWh | 3.5kWh | 4.2kWh | 2021/05/24 23:25:00 |
| 11:00 | 5.5kWh | 5.5kWh | 0kWh | 0kWh | 3.8kWh | 3.2kWh | 2021/05/24 23:25:00 |
| ... | ... | ... | ... | ... | ... | ... | ... |
| 16:00 | 3.2kWh | 7.2kWh | 0kWh | 0kWh | 2.5kWh | 1.2kWh | 2021/05/24 23:25:00 |
| 17:00 | 0.8kWh | 6.4kWh | 0kWh | 0kWh | 2.4kWh | 0.8kWh | 2021/05/24 23:25:00 |
| ... | ... | ... | ... | ... | ... | ... | ... |
| 23:00 | 0kWh | 1.0kWh | 0kWh | -5.0kWh | 2.3kWh | 1.5kWh | 2021/05/24 23:25:00 |

106A　106B　106C　106D　106E　106F　106G　106H

EP 4 398 381 A1

## FIG. 25A

TRANSACTION SUMMARY TABLE 110A

| TRANSACTION ID | CONSUMER ID | CHARGE/ DISCHARGE DEVICE ID | START DATE AND TIME | END DATE AND TIME | POWER TYPE | REQUIRED POWER AMOUNT | ACTUAL POWER AMOUNT |
|---|---|---|---|---|---|---|---|
| 1234 | D523 | | 2021/05/22 10:00 | 2021/05/22 11:00 | GREEN | 5.0kWh | 4.9kWh |
| 5678 | D124 | 122 | 2021/05/22 10:00 | 2021/05/22 11:00 | DEEMED GREEN | 3.0kWh | 3.0kWh |
| ... | ... | ... | ... | ... | ... | ... | ... |
| 110AA | 110AB | 110AC | 110AD | 110AE | 110AF | 110AG | 110AH |

EP 4 398 381 A1

# *FIG. 25B*

TRANSACTION DETAIL TABLE 110B

| TRANSACTION ID | CHARGE/ DISCHARGE DEVICE ID | POWER TYPE | REQUIRED POWER AMOUNT | ACTUAL POWER AMOUNT |
|---|---|---|---|---|
| 1234 | 53 | GREEN | 1.8kWh | 1.8kWh |
| 1234 | 372 | GREEN | 1.2kWh | 1.2kWh |
| 1234 | 112 | GREEN | 2.0kWh | 1.9kWh |
| 5678 | 85 | DEEMED GREEN | 1.8kWh | 1.8kWh |
| 5678 | 102 | DEEMED GREEN | 1.2kWh | 1.2kWh |
| . . . | . . . | . . . | . . . | . . . |
| 110BA | 110BB | 110BC | 110BD | 110BE |

# FIG. 26

Window 120:

| | |
|---|---|
| CONTRACT NUMBER: | 2533 — 121 |
| USER: | D COMPANY — 122 |
| FACILITY ID: | 1012 — 123 |
| CHARGE/DISCHARGE CONTROLLER ID: | 35 — 124 |
| OPERATION START DATE: | 2019/04/01 — 125 |
| OPERATION END DATE: | 2019/04/01 — 126 |
| BATTERY PACKAGE SPECIFIC ID: | 5367 — 127 |

BATTERY PACKAGE INFORMATION

128:
BATTERY MANUFACTURER: ABC COMPANY
BATTERY MODEL NUMBER: A537
BATTERY SERIAL NUMBER: 382485
BMS MANUFACTURER: ZZZ COMPANY
BMS MODEL NUMBER: Z352
BMS SERIAL NUMBER:

CONFIRM — 129
CANCEL — 130

# FIG. 27

140

| TIME | PRIORITY | INTERNAL/ EXTERNAL PRIORITY | TYPE PRIORITY | ALLOWABLE POWER SELLING AMOUNT |
|---|---|---|---|---|
| 00:00 | POWER DISTRIBUTION NETWORK ▽ | INTERNAL ▽ | GREEN ▽ | 10% |
| 01:00 | SOLAR POWER ▽ | EXTERNAL ▽ | NON-GREEN ▽ | 8% |
| 02:00 | ▽ | ▽ | ▽ | |
| 03:00 | ▽ | ▽ | ▽ | |
| 04:00 | ▽ | ▽ | ▽ | |
| 05:00 | ▽ | ▽ | ▽ | |
| 06:00 | ▽ | ▽ | ▽ | |

141A  141B  141C  141D  141E

141

141BA  141CA  141DA

CANCEL    CONFIRM

143    142

# FIG. 28

CHARGE/DISCHARGE PLAN PROCESS

START

SELECT ONE NON-PROCESSED BATTERY PACKAGE — S110

PREDICT POWER DEMAND — S111

PREDICT SOLAR POWER GENERATION AMOUNT — S112

CALCULATE SURPLUS/DEFICIENT POWER AMOUNT — S113

MAKE CHARGE PLAN FOR GREEN POWER — S114

MAKE POWER TRANSMISSION PLAN — S115

CALCULATE DEFICIENT POWER AMOUNT — S116

MAKE POWER PURCHASE/CHARGE PLAN — S117

REGISTER IN CHARGE/DISCHARGE PREDICTION TABLE — S118

CREATE CHARGE PLAN TABLE AND DISCHARGE PLAN TABLE — S119

TRANSMIT CONTENT OF EACH TABLE TO TARGET CHARGE/DISCHARGE CONTROL DEVICE — S120

COMPLETED FOR ALL PACKAGES? — S121

NO

YES

END

# FIG. 29

POWER SUPPLY REQUEST RECEIVING PROCESS

START

SEARCH FOR SURPLUS POWER — S130

CALCULATE TRANSMITTABLE POWER AMOUNT — S131

DETERMINE POWER TRANSMISSION SOURCE AND AMOUNT — S132

UPDATE CHARGE/DISCHARGE PLAN — S133

CREATE TRANSACTION HISTORY RECORD — S134

UPDATE TRANSACTION HISTORY RECORD — S135

END

# FIG. 30

DEEMED POWER TRANSACTION PROCESS

START

SEARCH FOR SURPLUS POWER — S140

CALCULATE TRANSMITTABLE POWER AMOUNT — S141

DETERMINE POWER TRANSMISSION SOURCE AND AMOUNT — S142

CREATE TRANSACTION HISTORY RECORD — S143

OUTPUT TRANSACTION INSTRUCTION — S144

CHECK TRANSACTION RESULT AND TRANSMIT TO REQUESTING SOURCE — S145

UPDATE TRANSACTION HISTORY RECORD — S146

UPDATE CHARGE/DISCHARGE PLAN — S147

END

## FIG. 31

BMS **25**

CHARGE/DISCHARGE CONTROL DEVICE **3**

CABLE CONNECTOR **22** **32** **32**

SETTING TERMINAL **49**

VOLTAGE/CURRENT SENSOR **33**

ENVIRONMENT SENSOR **28** **34**

PACKAGE CONTROLLER **150**

CENTRAL PROCESSING UNIT **40**

COMMUNICATION INTERFACE **41**

WIRELESS COMMUNICATION DEVICE **42**

SETTING INTERFACE **43**

SENSOR READING UNIT **44**

ROM **45**

RAM **46**

POSITION INFORMATION ACQUISITION UNIT **47**

STORAGE DEVICE **48**

BATTERY/BMS INFORMATION **50**

BMS COOPERATION PROGRAM **51**

USE HISTORY TABLE **52**

POWER-TYPE-BASED STORAGE AMOUNT TABLE **53**

INITIAL SETTING PROGRAM **54**

OPERATION HISTORY TABLE **55**

SPECIFIC ID INFORMATION **56**

SLOT **151** **152**

PORTABLE STORAGE MEDIUM

CONTRACT NUMBER **152A**

EP 4 398 381 A1

# FIG. 32

CONTRACT NUMBER AUTHENTICATION PROCESS

```
          ( START )
              │
              ▼                    S150
  ┌───────────────────────────┐
  │   READ CONTRACT NUMBER     │
  └───────────────────────────┘
              │                    S151
  ┌───────────────────────────┐
  │     CHECK USE HISTORY      │
  └───────────────────────────┘
              │                    S152
YES        ◇─────────────────◇
  ◄────────  CONTRACT IS VALID? 
           ◇─────────────────◇
              │ NO               S153
  ┌───────────────────────────┐
  │ CHECK CONTRACT INFORMATION │
  └───────────────────────────┘
              │                    S154
           ◇─────────────────◇   NO
           │ VALID CONTRACT?  │──────┐
           ◇─────────────────◇      │
              │ YES              S155 │
  ┌───────────────────────────┐     │
  │ REGISTER IN USE HISTORY TABLE    │
  └───────────────────────────┘     │
              │                    S156│
  ┌───────────────────────────┐     │
  │ START OPERATION OF BATTERY PACKAGE│
  └───────────────────────────┘     │
              │◄──────────────────────┘
              ▼
          ( END )
```

# FIG. 33

EP 4 398 381 A1

## FIG. 34

**CHARGE/DISCHARGE CONTROL SERVER** (166)

**STORAGE DEVICE** (90)

- COMMUNICATION DEVICE (91)
- POWER SUPPLY REQUEST PROCESSING UNIT (115)
- CHARGE/DISCHARGE INSTRUCTION UNIT (172)
- CHARGE/DISCHARGE PLAN PROCESSING UNIT (114)
- CONTRACT INFORMATION UPDATE/CONFIRMATION PROCESSING UNIT (113)
- BATTERY PACKAGE SYNCHRONIZATION PROCESSING UNIT (111)
- BATTERY REPLACEMENT TIME PREDICTION UNIT (112)

- TRANSACTION HISTORY TABLE GROUP (110)
- CHARGE/DISCHARGE PREDICTION TABLE (106)
- CHARGE PLAN TABLE (107)
- DISCHARGE PLAN TABLE (108)
- POWER-TYPE-BASED CHARGE/DISCHARGE HISTORY TABLE (109)
- CHARGE/DISCHARGE PRIORITY INFORMATION TABLE (105)
- CONTRACT BASIC INFORMATION TABLE (104)
- BATTERY/BMS INFORMATION TABLE (100)
- USE HISTORY TABLE (101)
- POWER-TYPE-BASED STORAGE AMOUNT TABLE (102)
- OPERATION HISTORY TABLE (103)

EP 4 398 381 A1

# FIG. 35

CHARGE/DISCHARGE CONTROL PROCESS

START

S160
DETERMINE TARGET
CHARGE/DISCHARGE CONTROL DEVICE

S161
ACQUIRE BATTERY PACKAGE SPECIFIC ID

S162
CHECK WHETHER
CHARGE/DISCHARGE IS PERMITTED

S163
CHARGE/DISCHARGE
PERMITTED? — NO

YES | S164
TRANSMIT OPERATION
STOP NOTIFICATION

END

S165
READ CHARGE PLAN AT
CURRENT TIME OR IN PAST TIME ZONE
CLOSEST TO CURRENT TIME

S166
READ DISCHARGE PLAN AT
CURRENT TIME OR IN PAST TIME ZONE
CLOSEST TO CURRENT TIME

S167
CHECK POWER AMOUNT
MEASUREMENT RESULT

S168
CALCULATE AND RECORD
CHARGE/DISCHARGE AMOUNT FOR
EACH POWER TYPE

S169
OUTPUT CHARGE/DISCHARGE
INSTRUCTION

S170
WAIT FOR CERTAIN TIME

S171
NEXT RECORD TIME? — NO

YES

## FIG. 36A

POWER-TYPE-BASED CHARGE/DISCHARGE AMOUNT
CALCULATION PROCESS (1)

```
          START
            │  S180
    ┌───────────────────┐
    │   Cb=Ps+Pi+Po     │
    └───────────────────┘
            │  S181                                      S187
         ◇ Cb> 0 ? ◇──NO──────────────────┐      ◇ Pi<Cs-Ps ? ◇──NO──┐
            │ YES                          │          │                │   S189
            │  S182                        │          │ YES            ◇ Ps> -Pi ? ◇──NO──┐
  YES  ◇ SOLAR POWER ◇                     │          │                    │              │
       ◇ CHARGE AMOUNT ◇                   │          │                    │ YES          │
       ◇   IS ALL?    ◇                    │          │                    │              │
            │ NO    S183                   │          │  S188              │   S190       │  S191
            │                              │    ┌───────────┐         ┌───────────┐  ┌───────────┐
       ◇ Cs_c<Cs_t ? ◇──NO──┐             │    │  Pbi=Cs   │         │  Pbi=0    │  │ Pbi=Pi+Ps │
            │ YES   S184     │  S185       │    └───────────┘         └───────────┘  └───────────┘
   ┌──────────────┐   ┌──────────┐         │          │                    │              │
   │ Cs=min(Cb,Ps)│   │  Cs=0    │         │          └────────────────────┼──────────────┘
   │   Co=Cb-Cs   │   │  Co=Cb   │         │                               │  S192
   └──────────────┘   └──────────┘         │                     ◇ INTRA-FACILITY ◇──NO──┐
      S186 │                               │                     ◇ DISCHARGE INSTRUCTION ◇ │
   ┌──────────────┐                        │                     ◇    IS ALL?    ◇         │
   │ Cs_c+Cs→Cs_c │                        │                          │ YES               │
   │ Co_c+Co→Co_c │                        │                          │                   │
   │ Qri,Qro,Qdi,Qdo=0 │              ( D )│                         ( B )               ( A )
   └──────────────┘
            │
          END
```

EP 4 398 381 A1

**FIG. 36B**  POWER-TYPE-BASED CHARGE/DISCHARGE AMOUNT CALCULATION PROCESS (2)

(A)

S193 — Po > Fro+Fdo? — NO →

YES

S194 — EXTERNAL PRIORITY? — NO →

S199 — Qbi=Pbi

S200 — Qbo=Cb-Qbi

YES

S195 — Qbo= max(Fro+Fdo,Cb)

S197 — Qbi= max(Fri+Fdi,Cb)

S196 — Qbi=Cb-Qbo

S198 — Qbo=Cb-Qbi

S201 — GREEN PRIORITY? — NO →

YES

S202 — Qro=min(Fro,Qbo)

S207 — Qdo=min(Fdo,Qbo)

S203 — Qdo=Qbo-Qro

S208 — Qro=Qbo-Qdo

S204 — Qri=min(Fri,Qbi)

S209 — Qdi=min(Fdi,Qbi)

S205 — Qdi=Qbi-Qri

S210 — Qri=Qbi-Qdi

S206 — Co,Cs=0

S211 — Co,Cs=0

(D)

EP 4 398 381 A1

# FIG. 37

# FIG. 38

CHARGE/DISCHARGE CONTROL SERVER — 183

COMMUNICATION DEVICE — 91

CHARGE/DISCHARGE PLAN PROCESSING UNIT — 190

CONTRACT INFORMATION SYNCHRONIZATION PROCESSING UNIT — 192

BATTERY REPLACEMENT TIME PREDICTION UNIT — 191

STORAGE DEVICE — 90

CHARGE/DISCHARGE PREDICTION TABLE — 106

CHARGE PLAN TABLE — 107

DISCHARGE PLAN TABLE — 108

POWER-TYPE-BASED CHARGE/DISCHARGE HISTORY TABLE — 109

CHARGE/DISCHARGE PRIORITY INFORMATION TABLE — 105

CONTRACT BASIC INFORMATION TABLE — 104

EP 4 398 381 A1

*FIG. 39*

184

POWER TRANSACTION SERVER

200

STORAGE DEVICE

202 TRANSACTION HISTORY TABLE GROUP

203 CHARGE/DISCHARGE PRIORITY INFORMATION TABLE

204 CONTRACT BASIC INFORMATION TABLE

205 POWER SUPPLY REQUEST PROCESSING UNIT

206 CONTRACT INFORMATION UPDATE/CONFIRMATION PROCESSING UNIT

201 COMMUNICATION DEVICE

## INTERNATIONAL SEARCH REPORT

| International application No. |
|---|
| PCT/JP2021/030711 |

A. CLASSIFICATION OF SUBJECT MATTER
Int.Cl. H01M10/48(2006.01)i, H02J3/38(2006.01)i
FI: H01M10/48P, H02J3/38110

According to International Patent Classification (IPC) or to both national classification and IPC

B. FIELDS SEARCHED

Minimum documentation searched (classification system followed by classification symbols)
Int.Cl. H01M10/48, H02J3/38

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2021-061733 A (ITOCHU CORP.) 15 April 2021 (2021-04-15), paragraphs [0027]-[0108], fig. 1–8 | 1-10 |
| A | JP 2017-153183 A (NEC CORP.) 31 August 2017 (2017-08-31), paragraphs [0026]-[0130], fig. 1-15 | 1-10 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 September 2021 | 21 September 2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

INTERNATIONAL SEARCH REPORT
Information on patent family members

| International application No. |
|---|
| PCT/JP2021/030711 |

```
JP 2021-061733 A   15 April 2021      (Family: none)

JP 2017-153183 A   31 August 2017     (Family: none)
```

Form PCT/ISA/210 (patent family annex) (January 2015)

## REFERENCES CITED IN THE DESCRIPTION

**Patent documents cited in the description**

- JP 2021061733 A